(19) Europäisches Patentamt
European Patent Office
Office européen des brevets

(11) **EP 2 675 174 A1**

(12) **EUROPEAN PATENT APPLICATION**
published in accordance with Art. 153(4) EPC

(43) Date of publication:
**18.12.2013 Bulletin 2013/51**

(51) Int Cl.:
***H04N 13/00*** (2006.01)

(21) Application number: **12865731.9**

(22) Date of filing: **18.12.2012**

(86) International application number:
**PCT/JP2012/082730**

(87) International publication number:
**WO 2013/108531 (25.07.2013 Gazette 2013/30)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.01.2012 JP 2012009504**

(71) Applicant: **Sony Corporation
Tokyo 108-0075 (JP)**

(72) Inventor: **TSUKAGOSHI, Ikuo
Tokyo 108-0075 (JP)**

(74) Representative: **Ealey, Douglas Ralph
D Young & Co LLP
120 Holborn
London EC1N 2DY (GB)**

(54) **RECEIVING DEVICE, RECEIVING METHOD, AND ELECTRONIC DEVICE**

(57) To enable favorable depth control of graphics superimpose-displayed on stereoscopic images.

A container of a predetermined format including a video stream is received. Obtained from this video stream are left eye image data and right eye image data configuring a stereoscopic image, and disparity information of the other as to one of a left eye image and right eye image for each partition region of each picture in image data.

The image data and disparity information are correlated and transmitted to an external device. For example, single pictures worth of disparity information are sequentially transmitted in increments of single pictures, or multiple pictures worth of disparity information are sequentially transmitted in increments of multiple pictures. The external device can favorably perform depth control of graphics superimpose-displayed on stereoscopic images, based on the disparity information.

FIG. 25

**Description**

Technical Field

The present invention relates to a reception device, a reception method, and an electronic device, and particularly relates to a reception device and so forth which enables favorable superimposed display of graphics onto stereoscopic images.

Background Art

For example, PTL 1 proposes a transmission method of stereoscopic image data using television broadcast waves. In this case, left eye image data and right eye image data making up a stereoscopic image are transmitted, and stereoscopic image display using binocular disparity is performed at a television receiver.

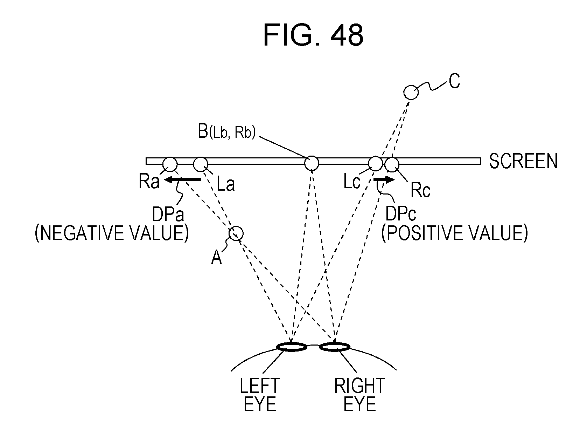

Fig. 48 illustrates the relation between the display position of left and right images of an object (object) on a screen, and the reproduced position of the stereoscopic image, with stereoscopic image display using binocular disparity. For example with regard to an object A of which a left image La is displayed shifted to the right and a right image Ra shifted to the left on the screen as illustrated in the drawing, the left and right visual lines intersect at the near side of the screen face, so the reproduced position of that stereoscopic image is at the near side of the screen face.

Also, for example, with regard to an object B of which a left image Lb and right image Rb are displayed at the same position, the left and right visual lines intersect at the screen face, so the reproduced position of that stereoscopic image is at the screen face. Further, for example, with regard to an object C of which a left image Lc is displayed shifted to the left and a right image Rc shifted to the right on the screen as illustrated in the drawing, the left and right visual lines intersect at the far side of the screen face, so the reproduced position of that stereoscopic image is at the far side of the screen face.

Citation List

Patent Literature

PTL 1: Japanese Unexamined Patent Application Publication No. 2005-6114

Summary of Invention

Technical Problem

As described above, with stereoscopic image display, a viewer recognizes perspective of stereoscopic images using binocular disparity. It is expected that graphics for superimposed display on images will be rendered in conjunction with stereoscopic image display with not only two-dimensional space but also three-dimensional sense of depth, at television receivers and the like. In the event of displaying graphics for OSD (On-Screen Display) or applications or the like on the screen, it is expected that disparity adjustment will be performed in accordance with the perspective of the objects in the image, so that consistency in perspective is maintained.

It is an object of the present technology to enable favorable depth control of graphics superimpose-displayed on stereoscopic images. Solution to Problem

A concept of the present technology is a reception device including:

an image data reception unit configured to receive a container of a predetermined format including a video stream; wherein the video stream is obtained by left eye image data and right eye image data configuring a stereoscopic image having been encoded;

and wherein the video stream has inserted therein disparity information of the other as to one of a left eye image and right eye image, obtained corresponding to each of a predetermined number of partition regions of a picture display screen, for each picture of the image data;

and including
an information obtaining unit configured to obtain the left eye image data and right eye image data, and also disparity information for each partition region of each picture in the image data, from the video stream included in the container; and a transmission unit configured to transmit, to an external device, the left eye image data and right eye image data obtained at the information obtaining unit in a manner correlated with the disparity information.

With the present technology, the image data reception unit receives a container of a predetermined format including a video stream. For example, the container may be a transport stream (MPEG-2 TS) employed with a digital broadcasting standard. Alternatively, for example, the container may be MP4 used with Internet distribution and so forth, or a container of another format.

This video stream is obtained by left eye image data and right eye image data configuring a stereoscopic image having been encoded. Also, the video stream has inserted therein disparity information of the other as to one of a left eye image and right eye image, obtained corresponding to each of a predetermined number of partition regions of a picture display screen, for each picture of the image data.

The information obtaining unit obtains the left eye image data and right eye image data, and also disparity information for each partition region of each picture in the image data, from the video stream included in the container.

The transmission unit transmits, to an external device, the left eye image data and right eye image data obtained at the information obtaining unit, and disparity information, in a correlated manner. For example, the transmission unit transmits the image data to the external device by differential signals, with a predetermined number of channels, and transmits the perspective information to the external device by inserting the perspective information into a blanking period of the image data. In this case, for example, the transmission unit inserts the disparity information in an information packet of a predetermined format, situated in a blanking period of the image data.

For example, upon the information obtaining unit obtaining the multiple pictures worth of disparity information in increments of each of the multiple pictures, the transmission unit may distribute the multiple pictures worth of disparity information into single pictures worth, and sequentially transmit the single pictures worth of disparity information in increments of pictures. In this case, even in the event that the transmission band for transmitting the disparity information for each picture is small, the disparity information of each picture can be transmitted to the external device.

Also, for example, the transmission unit may be capable of selecting a first mode where single pictures worth of disparity information are sequentially transmitted in increments of single pictures, and a second mode where multiple pictures worth of disparity information are sequentially transmitted in increments of multiple pictures. In this case, the first mode or second mode can be selected in accordance with the transmission band for transmitting disparity information for each picture, or processing capabilities at the external device, or the like, and favorable transmission of disparity information to the external device can be performed.

In the event that selection of the first mode or second mode can be made, the disparity information may have added thereto identification information indicating whether transmission in the first mode or transmission in the second mode. In this case, the external device can easily comprehend whether transmission of the first mode or transmission of the second made, based on this identification information, and can suitably perform obtaining of disparity information of each picture of the image data.

Thus, with the present technology, the left eye image data and right eye image data, and disparity information, obtained from the video stream included in the received container, are correlated and transmitted to the external device. Accordingly, at the external device, depth control of graphics superimpose-displayed on a stereoscopic image can be favorably performed based on this disparity information.

Note that with the present technology, for example, the transmission unit may transmit, to the external device, identification information indicating whether or not there is transmission of disparity information, correlated to each picture in the image data. For example, as described above, in the event that disparity information is inserted in an information packet of a predetermined format, situated in a blanking period of the image data, and transmitted, identification information indicating whether or not there is transmission of disparity information is inserted in this information packet. In this case, in a case of transmitting disparity information of multiple pictures worth, in increments of multiple pictures, determination can be easily made at the external device regarding a picture timing where there is no transmission of disparity information, based on this identification information, thereby enabling waste in reception processing to be reduced, and alleviating the processing load.

Also, with the present technology, further included may be an image data processing unit configured to subject the left eye image data and right eye image data obtained at the information obtaining unit to superposing processing of captions or graphics to which disparity has been provided; and a disparity information updating unit configured to update disparity information for each partition region of each picture in the image data obtained at the information obtaining unit, in accordance with superimposing of the captions or graphics to the image; with the transmission unit transmitting, to the external device, the left eye image data and right eye image data obtained at the image data processing unit, and the disparity information updated at the disparity information updating unit, in a correlated manner.

In this case, even in the event of image data following superimposing processing of captions or graphics having been performed being transmitted to the external device, updated disparity information is transmitted to the external device, so at the external device, depth control of graphics superimpose-displayed on a stereoscopic image can be favorably performed based on this disparity information.

Also, another concept of the present technology is a reception device including:

a reception unit configured to receive, from an external device, left eye image data and right eye image data configuring a stereoscopic image, and disparity information for each partition region of each picture of the image data; a graphics data generating unit configured to generate graphics data to display graphics on the image; and an image data processing unit configured to provide disparity to the graphics to be superimposed on the left eye image and right eye image, corresponding to the display position of the graphics, for each picture, using the received image data and disparity information, and the generated graphics data, thereby obtaining data of the left eye image upon which the graphics has been superimposed and data of the right eye image upon which the graphics has been superimposed.

According to the present technology, the reception unit receives, from the external device, left eye image data and right eye image data configuring a stereoscopic image, and disparity information for each partition region of each picture of the image data. Also, the graphics data generating unit generates graphics data to display graphics on the image. The graphics are, for example, graphics according to an OSD or application or the like, or EPG information indicating service contents.

The image data processing unit obtains data of the left eye image upon which the graphics has been superimposed and data of the right eye image upon which the graphics has been superimposed, using the received image data and disparity information, and the generated graphics data. In this case, disparity is provided to the graphics to be superimposed on the left eye image and right eye image, corresponding to the display position of the graphics, for each picture, thereby obtaining data of the left eye image upon which the graphics has been superimposed and data of the right eye image upon which the graphics has been superimposed. For example, the image data processing unit provides disparity to the graphics, using disparity information selected from disparity information of a predetermined number of partition regions corresponding to the display position of the graphics, e.g., suitable disparity information such as smallest value or the like.

Thus, with the present technology, depth control of graphics superimpose-displayed on a stereoscopic image is performed, based on disparity information sent from the external device. In this case, the disparity information sent from the external device corresponds to each picture of the image data, and depth control of the graphics can be favorably performed with picture (frame) precision. Also, in this case, the disparity information of each picture sent from the external device is disparity information of each partition region of the picture display screen, and depth control of graphics can be favorably performed based on the display position of the graphics.

Also, a further concept of the present technology is an electronic device including:

a transmission unit configured to transmit image data to an external device by differential signals, with a predetermined number of channels;
wherein the transmission unit inserts, in an information packet of a predetermined format, situated in a blanking period of each picture in the image data, identification information indicating whether or not the information packet includes information which should be referred to at the external device.

With the present technology, the transmission unit transmits image data to an external device by differential signals, with a predetermined number of channels. The transmission unit inserts, in an information packet of a predetermined format, situated in a blanking period of each picture in the image data, identification information indicating whether or not the information packet includes information which should be referred to at the external device. For example, the information packet is a Vendor Specific InfoFrame of HDMI (High Definition Multimedia Interface). Also, for example, the image data is left eye image data and right eye image data configuring a stereoscopic image, and the information which should be referred to is disparity information of the other as to one of a left eye image and right eye image, corresponding to the image data.

Thus, with the present technology, identification information indicating whether or not the information packet includes information which should be referred to at the external device is inserted in an information packet, situated in a blanking period of each picture in the image data. In this case, determination can be easily made at the external device regarding an information packet not including information to be referred to, based on this identification information, thereby enabling reduction of waste in processing of extracting information from the information packet, and alleviating the processing load.

Also, another concept of the present technology is an electronic device including:

a reception unit configured to receive image data from an external device by differential signals, with a predetermined number of channels;
wherein identification information has been inserted in an information packet of a predetermined format, situated in a blanking period of each picture in the image data, indicating whether or not the information packet includes information which should be referred to;
and further including

an image data processing unit configured to, in the event that the identification information indicates that the information packet includes information which should be referred to, extract the information which should be referred to from the information packet, and to process the received image data based on the information which should be referred to.

With the present technology, a reception unit receives image data from an external device by differential signals, with a predetermined number of channels. Identification information has been inserted in an information packet of a predetermined format, situated in a blanking period of each picture in this image data, indicating whether or not the information packet includes information which should be referred to. For example, the information packet is a Vendor Specific InfoFrame of HDMI. Also, for example, the image data is left eye image data and right eye image data configuring a stereoscopic image, and the information which should be referred to is disparity information of the other as to one of a left eye image and right eye image, corresponding to the image data.

In the event that the identification information indicates that the information packet includes information which should be referred to, the image data processing unit extracts the information which should be referred to from the information packet, and to process the received image data based on the information which should be referred to. This enables reduction of waste in processing of extracting information from the information packet, and alleviating the processing load.

Advantageous Effects of Invention

According to the present invention, depth control of graphics superimpose-displayed on stereoscopic images can be favorably performed.

Brief Description of Drawings

[Fig. 1] Fig. 1 is a block diagram illustrating a configuration example of an image transmission/reception system according to an embodiment.

[Fig. 2] Fig. 2 is a diagram illustrating an example of disparity information (disparity vector) for each block (Block).

[Fig. 3] Fig. 3 is a diagram for describing an example of generating disparity information in increments of blocks.

[Fig. 4] Fig. 4 is a diagram for describing an example of downsizing to obtain disparity information of a predetermined partition region from disparity information for each block.

[Fig. 5] Fig. 5 is a diagram illustrating that a picture display screen is divided is as to not straddle encoded block boundaries.

[Fig. 6] Fig. 6 is a diagram schematically illustrating an example of transition of disparity information in each partition region in each picture.

[Fig. 7] Fig. 7 is a diagram for describing insertion timing of disparity information obtained for each picture of image data, into a video stream.

[Fig. 8] Fig. 8 is a block diagram illustrating a configuration example of a transmission data generating unit which generates a transport stream at a broadcasting station.

[Fig. 9] Fig. 9 is a diagram illustrating a configuration example of a transport stream.

[Fig. 10] Fig. 10 is a diagram illustrating a structure example (Syntax) and primary stipulation contents (semantics) of an AVC video descriptor (AVC video descriptor).

[Fig. 11] Fig. 11 is a diagram illustrating a structure example (Syntax) and primary stipulation contents (semantics) of an MVC extension descriptor (MVC extension descriptor).

[Fig. 12] Fig. 12 is a diagram illustrating a structure example (Syntax) and primary stipulation contents (semantics) of a graphics depth info descriptor (graphics_depth_info_descriptor).

[Fig. 13] Fig. 13 illustrates an example of an access unit at the head of a GOP and example of an access unit at other than the head of a GOP, in a case that the encoding format is AVC.

[Fig. 14] Fig. 14 is a diagram illustrating a structure example (Syntax) of "depth_information_for_graphics SEI message" and a structure example (Syntax) of "depth_information_for_graphics data()".

[Fig. 15] Fig. 15 is a diagram illustrating a structure example (Syntax) of "depth_information_for_graphics()" in a case of inserting disparity information for each picture, in increments of pictures.

[Fig. 16] Fig. 16 is a diagram illustrating primary information contents (Semantics) in a structure example (Syntax) of "depth_information_for_graphics()".

[Fig. 17] Fig. 17 is a diagram illustrating partition examples of a picture display screen.

[Fig. 18] Fig. 18 is a diagram illustrating a structure example (Syntax) of "depth_information_for_graphics_data()" in a case encoding disparity information for each picture, in batch fashion for multiple pictures.

[Fig. 19] Fig. 19 is a diagram illustrating primary information contents (Semantics) in a structure example (Syntax) of "depth_information_for_graphics()".

[Fig. 20] Fig. 20 is a diagram illustrating a structure example (Syntax) of "user_data()" and a structure example (Syntax) of "depth_information_for_graphics data()".

[Fig. 21] Fig. 21 is a diagram illustrating the concept of depth control of graphics with disparity information.

[Fig. 22] Fig. 22 is a diagram illustrating that disparity information is sequentially obtained at picture timings of image data, in a case where disparity information has been inserted in a video stream in increments of pictures.

[Fig. 23] Fig. 23 is a diagram illustrating that each disparity information of pictures within a GOP in image data is obtained in batch fashion at the head timing of the GOP, in a case where disparity information has been inserted in a video stream in increments of GOPs.

[Fig. 24] Fig. 24 is a diagram illustrating a display example of subtitles (subtitles) and OSD graphics on an image.

[Fig. 25] Fig. 25 is a block diagram illustrating a configuration example of a set top box.

[Fig. 26] Fig. 26 is a block diagram for describing control of a depth control unit.

[Fig. 27] Fig. 27 is a flowchart (1/2) illustrating an example of procedures of control processing of a depth control unit.

[Fig. 28] Fig. 28 is a flowchart (2/2) illustrating an example of procedures of control processing of a depth control unit.

[Fig. 29] Fig. 29 is a diagram illustrating an example of depth control of graphics at a set top box.

[Fig. 30] Fig. 30 is a diagram illustrating another example of depth control of graphics at a set top box.

[Fig. 31] Fig. 31 is a block diagram illustrating a configuration example of a television receiver (HDMI input system).

[Fig. 32] Fig. 32 is a block diagram for describing control of a depth control unit.

[Fig. 33] Fig. 33 is a flowchart illustrating an example of procedures of control processing of a depth control unit.

[Fig. 34] Fig. 34 is a diagram illustrating an example of depth control of graphics at a television receiver.

[Fig. 35] Fig. 35 is a block diagram illustrating a configuration example of an HDMI transmitter of a source device and an HDMI receiver of a sink device.

[Fig. 36] Fig. 36 is a diagram illustrating a structure example of TMDS transmission data (case of transmitting image data of which horizontal x vertical is 1920 pixels x 1080 lines).

[Fig. 37] Fig. 37 is a diagram illustrating a pin array (type A) of an HDMI terminal to which an HDMI cable of a source device and sink device is to be connected.

[Fig. 38] Fig. 38 is a diagram illustrating a packet structure example of HDMI Vendor Specific InfoFrame in a case of using HDMI Vendor Specific InfoFrame for transmission of disparity information.

[Fig. 39] Fig. 39 is a diagram illustrating primary information contents in a packet structure example of HDMI Vendor Specific InfoFrame.

[Fig. 40] Fig. 40 is a diagram illustrating a structure example of VS_Info in a case of single picture mode and the number of partition regions is "16".

[Fig. 41] Fig. 41 is a diagram illustrating a structure example of VS_Info in a case of double picture mode and the number of partition regions is "16".

[Fig. 42] Fig. 42 is a diagram schematically illustrating a case of performing reception in picture increments and also performing single picture mode transmission.

[Fig. 43] Fig. 43 is a diagram schematically illustrating a case of performing reception in picture increments and also performing double picture mode transmission.

[Fig. 44] Fig. 44 is a diagram schematically illustrating a case of performing reception in increments of GOPs (increments of multiple pictures)and also performing single picture mode transmission.

[Fig. 45] Fig. 45 is a diagram schematically illustrating a case of performing reception in increments of GOPs (increments of multiple pictures)and also performing double picture mode transmission.

[Fig. 46] Fig. 46 is a block diagram illustrating another configuration example of an image transmission/reception system.

[Fig. 47] Fig. 47 is a block diagram illustrating a configuration example a television receiver.

[Fig. 48] Fig. 48 is a diagram illustrating the relation between the display position of left and right images of an object on a screen, and the reproduced position of the stereoscopic image, with stereoscopic image display using binocular disparity.

Description of Embodiments

An embodiment for carrying out the invention (hereinafter, "embodiment") will be described below. Note that description will follow the following order.

1. Embodiment

2. Modification

<1. Embodiment>

[Image Transmission/Reception System]

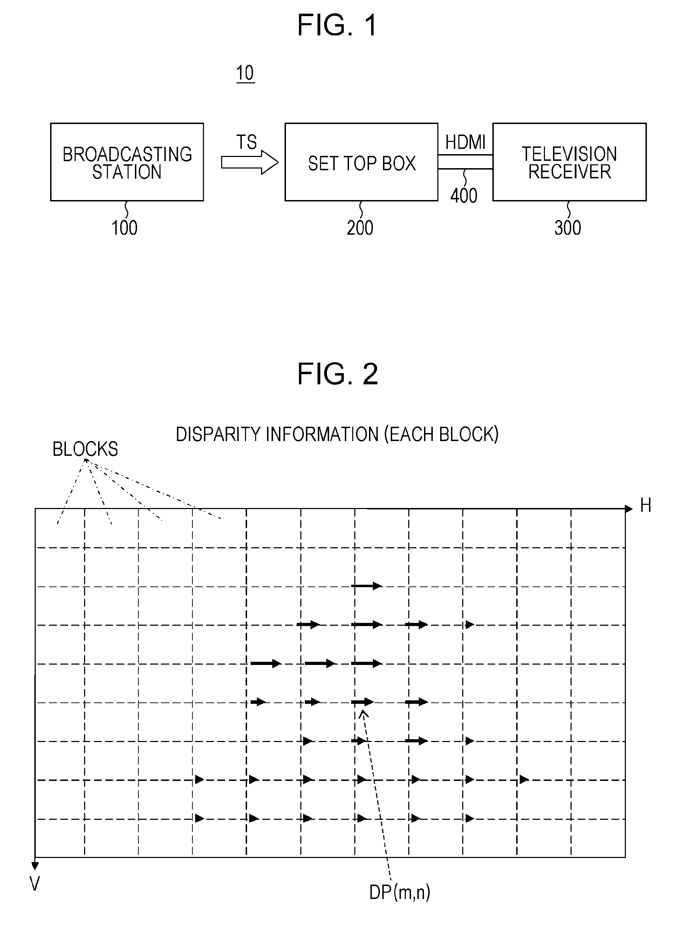

Fig. 1 illustrates a configuration example of an image transmission/reception system 10 according to an embodiment. This image transmission/reception system 10 has a broadcasting station 100, a set top box (STB) 200, and a television receiver 300. The set top box 200 and the television receiver (TV) 300 are connected via an HDMI (High Definition Multimedia Interface) cable 400.

"Description of Broadcasting Station"

The broadcasting station 100 transmits transport streams TS serving as contents by transmitting on broadcast waves. A transport stream TS includes a video stream obtained by encoding left eye image data and right eye image data making up a stereoscopic image. For example, left eye image data and right eye image data are transmitted by a single video stream. In this case, for example, the left eye image data and right eye image data are subjected to interleaving processing, configured as side-by-side format or top-and-bottom format image data, and included in a single video stream.

Alternatively, for example, each of the left eye image data and right eye image data is transmitted by an individual video stream. For example, the left eye image data is included in an MVC base view (base view) stream, and the right eye image data is included in an MVC nonbase view (Nonbase view) stream.

Disparity information (Disparity data) as to the other of one of a left eye image and right eye image, obtained for each picture of the image data, is inserted in the video stream. The disparity information for each picture is made up of partition information of the picture display screen, and disparity information of each partition region (Partition). In the event that the reproducing position of an object is to the near side of the screen, this disparity information is obtained as a negative value (see DPa in Fig. 48). In the other hand, in the event that the reproducing position of an object is to the far side of the screen, this disparity information is obtained as a positive value (see DPc in Fig. 48).

The disparity information of each partition region is obtained by subjecting disparity information for each block (Block) to downsizing processing. Fig. 2 illustrates an example of disparity information (disparity vectors) for each block (Block).

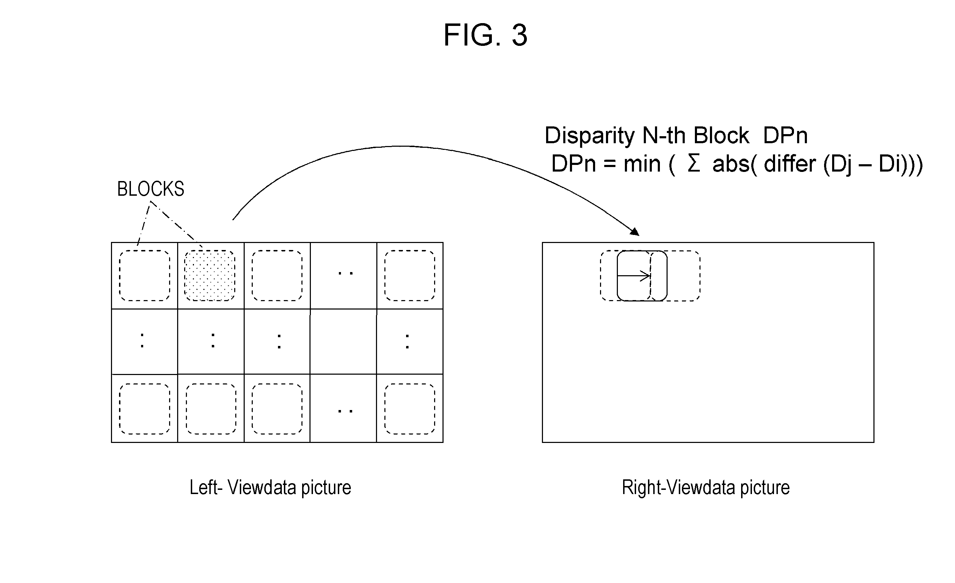

Fig. 3 illustrates an example of a method of generating disparity information in block increments. This example is an example of obtaining disparity information indicating a right eye view (Right-view) from a left eye view (Left-view). In this case, pixel blocks (disparity detecting blocks) of, for example, 4*4, 8*8, or 16*16 or the like, are set to the picture of the left eye view.

As illustrated in the drawing, the picture of the left eye view is taken as a detection image, the picture of the right eye view is taken as a reference image, and a block search of the picture of the right eye view is made so that the sum of absolute differences between pixels is the smallest for each block in the picture of the left eye view, and thus disparity data is obtained.

That is to say, disparity information DPn of the N'th block is obtained by block search such that the sum of absolute differences is the smallest for this N'th block, as illustrated in the following Expression (1), for example. Note that in this Expression (1), Dj represents pixel values in the picture of the right eye view, and Di represents pixel values in the picture of the left eye view.

$$DPn = min\ (\Sigma\ abs\ (differ\ (Dj - Di)))...(1)$$

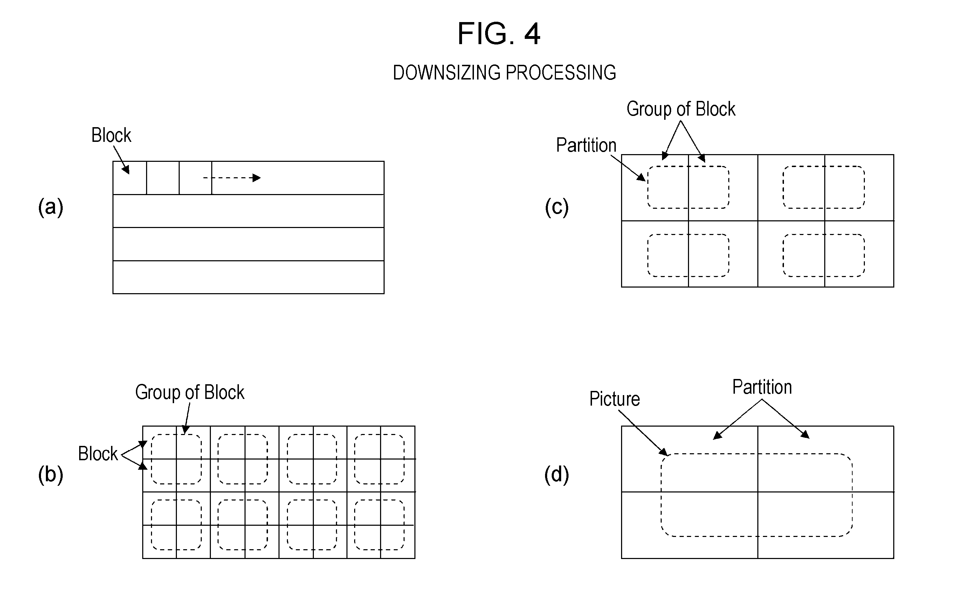

Fig. 4 illustrates an example of downsizing processing. Fig. 4(a) illustrates disparity information for each block obtained as described above. Disparity information for each group (Group of Block) is obtained based on this disparity information for each block, as illustrated in Fig. 4(b). A group is a hierarchical level above a block, and is obtained by grouping multiple blocks in close proximity together. In the example in Fig. 4(b), each group is configured of four blocks surrounded with dotted line frames. A disparity vector for each group is obtained by selecting the disparity information with the smallest value out of the disparity information of all blocks within the group, for example.

Next, disparity information for each partition (partition) is obtained based on this disparity vector for each group, as illustrated in Fig. 4(c). A partition is a hierarchical level above a group, and is obtained by grouping multiple groups in close proximity together. In the example in Fig. 4(c), each partition is configured of two groups surrounded with dotted line frames. Disparity information for each partition is obtained by selecting the disparity information with the smallest value out of the disparity information of all groups within the partition, for example.

Next, disparity information of the entire picture (entire image) which is the highest hierarchical level is obtained based on this disparity information for each partition, as illustrated in Fig. 4(d). In the example in Fig. 4(d), the entire picture is configured of four partitions surrounded with dotted line frames. Disparity information for the entire picture is obtained by selecting the disparity information with the smallest value out of the disparity information of all partitions within the entire picture, for example.

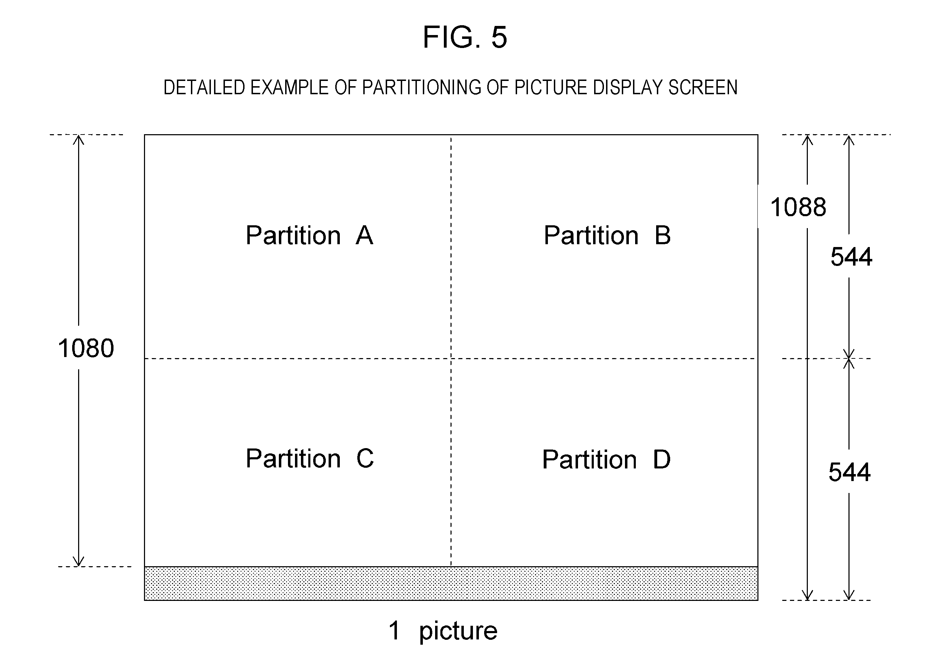

The picture display screen is partitioned based on partition information, and disparity information of each partition region is obtained, as described above. In this case, the picture display screen is partitioned so as to not straddle the boundaries of encoded blocks. Fig. 5 illustrates a detailed example of partitioning a picture display screen. This example is an example of a 1920*1080 pixel format, and is an example where four partition regions of Partition A, Partition B, Partition C, and Partition D, are obtained by division two ways each horizontally and vertically. At the transmission side, eight lines of blank data are added so that encoding is performed each 16 x 16 blocks, and encoding is performed as 1920-pixel * 1088-line image data. Accordingly, with regard to the vertical direction, division two ways is performed based on the 1088 lines.

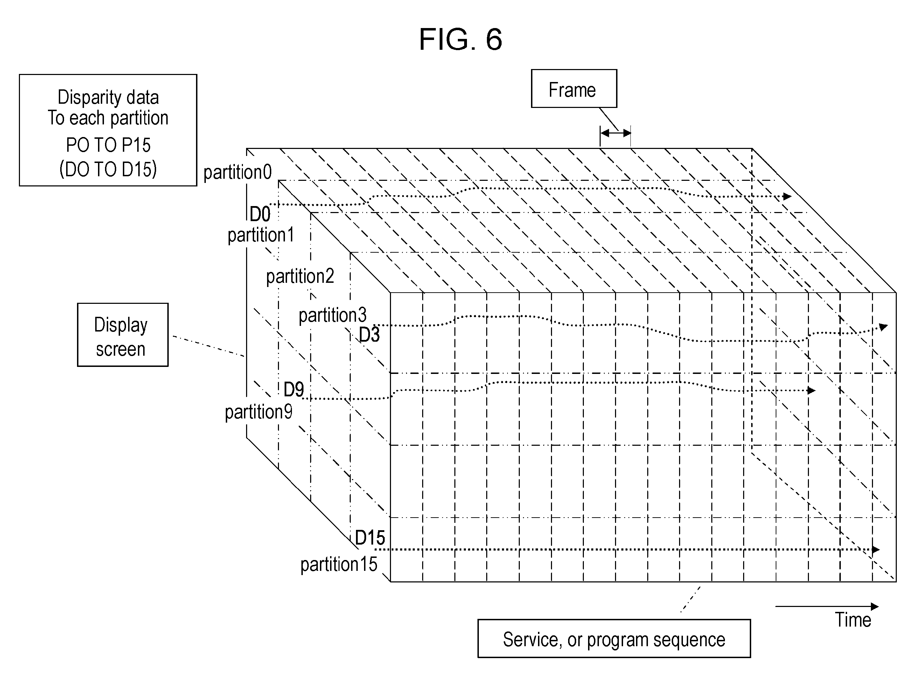

As described above, disparity information of each partition region (Partition) obtained for each picture (frame) of image data, is inserted in the video stream. Fig. 6 schematically illustrates an example of transition of disparity information of each partition region. This example is an example where 16 partition regions of Partition 0 through Partition 15 existing, having been divided four ways each horizontally and vertically. With this example, transition of disparity information D0, D3, D9, and D15 of Partition 0, Partition 3, Partition 9, and Partition 15 alone is illustrated, to simplify the drawing. There are cases where the value of each disparity information changes over time (D0, D3, D9), and a case where fixed (D15).

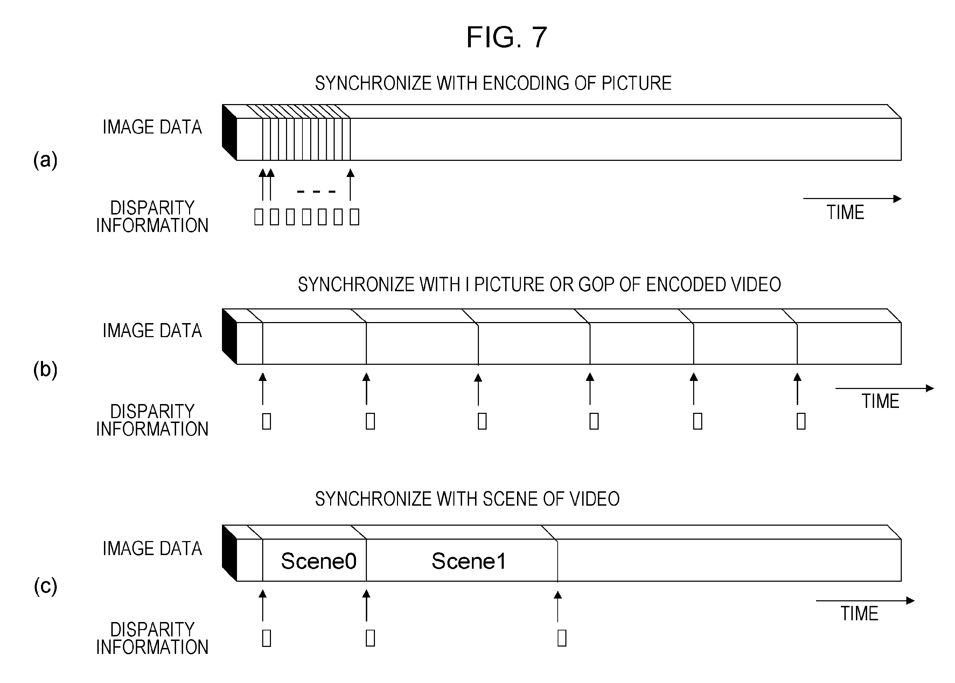

Disparity information obtained for each picture in the image data is inserted into the video stream in increments, such as increments of pictures, or increments of GOPs or the like. Fig. 7(a) illustrates an example of synchronizing with picture encoding, i.e., an example of inserting disparity information into the video stream in increments of pictures. With this example, delay at the time of transmitting image data can be lessened, which is suitable for live broadcasting where image data imaged with a camera is transmitted.

Fig. 7(b) illustrates an example of synchronizing with an I picture (Intra picture) or GOP (Group of Pictures) of encoded video, i.e., an example of inserting disparity information in the video stream in increments of GOPs. With this example, the delay at the time of transmitting the image data is greater in comparison with the example in Fig. 7(a), but disparity information of multiple pictures (frames) is transmitted in batch fashion, so the number of times of processing for obtaining disparity information at the reception side can be reduced. Fig. 7(c) is an example of synchronizing with scenes of a video, i.e., an example of inserting disparity information in the video stream in increments of screens. Note that Fig. 7(a) through (c) are only exemplary, and that insertion in other increments can be conceived as well.

Also, identification information for identifying whether or that there is insertion of disparity information into the video stream, is inserted into the transport stream TS layer. This identification information is inserted beneath a program map table (PMT: Program Map Table) or beneath an event information table (EIT: Event Information Table) included in the transport stream TS, for example. This identification information enables easy identification of whether or not there has been inserted disparity information into the video stream at the reception side.

"Configuration Example of Transmission Data Generating Unit"

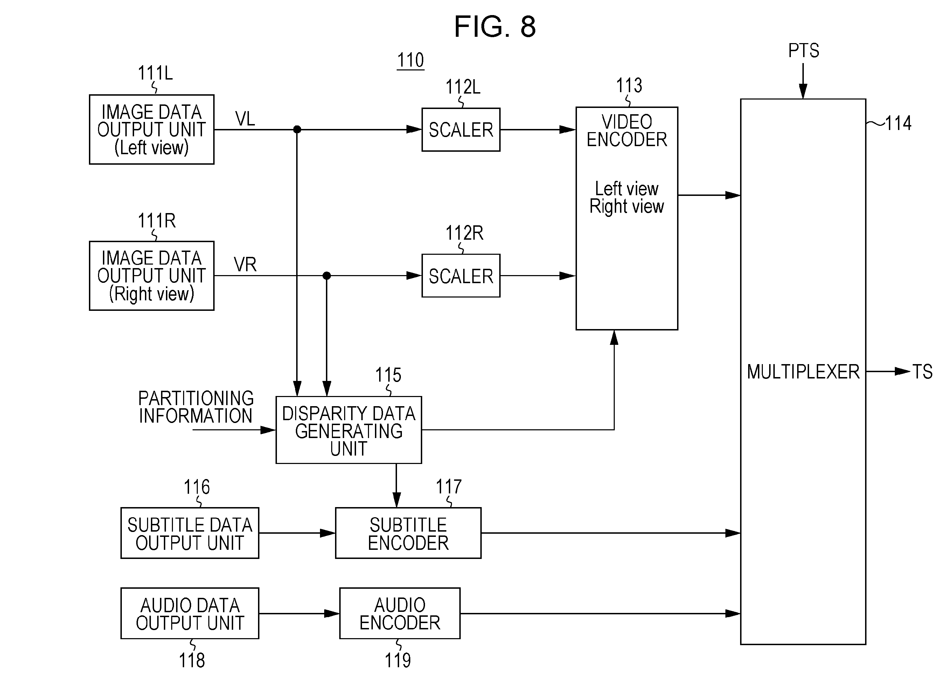

Fig. 8 illustrates a configuration example of a transmission data generating unit 110 which generates the above-described transport stream TS at the broadcasting station 100. This transmission data generating unit 110 includes image data output units 111L and 111R, scalers 112L and 112R, a video encoder 113, a multiplexer 114, and a disparity data generating unit 115. Also, the transmission data generating unit 110 includes a subtitle data output unit 116, a subtitle encoder 117, an audio data output unit 118, and an audio encoder 119.

The image data output units 111L and 111R output left eye image data VL and right eye image data VR, respectively, configuring a stereoscopic image. The image data output units 111L and 111R are configured of, for example, cameras which image a subject and output image data, or image data readout units which read image data from storage media, or the like. The image data VL and VR is, for example, 1920*1080 full-HD-size image data.

The scalers 112L and 112R respectively perform horizontal direction and vertical direction scaling processing on the image data VL and VR, as necessary. For example, in the event of configuring side-by-side format or top-and-bottom format image data in order to transmit the image data VL and VR with a single video stream, this is scaled down 1/2 in the horizontal direction or the vertical direction and output. Also, in the event of outputting the image data VL and VR each with separate video streams, as with MVC base view streams or nonbase view streams, the image data VL and VR are output as they are without performing scaling processing.

The video encoder 113 subjects the left eye image data and right eye image data output from the scalers 112L and 112R to encoding such as, for example, MPEG4-AVC (MVC), MPEG2video, or HEVC (High Efficiency Video Coding) or the like, thereby obtaining encoded video data. Also, the video encoder 113 generates a video stream including this encoded data, with a stream formatter (not shown) provided downstream. In this case, the video encoder 113 generates one or two video streams (video elementary streams) including encoded video data of the left eye image data and the right eye image data.

The disparity data generating unit 115 generates disparity information for each picture (frame), based on the left eye image data VL and right eye image data VR output from the image data output units 111L and 111R. The disparity data generating unit 115 obtains disparity information for each block (Block) as described above, for each picture. Note that in the event that the image data output units 111L and 111R are image data readout units having storage media, a configuration may be conceived where the disparity data generating unit 115 reads out and obtains the disparity information for each block (Block) from the storage media along with the image data. Alternatively, the disparity data generating unit 115 performs downsizing processing as to disparity information for each block (Block), based on partition information of a picture display screen provided by user operations for example, thereby generating disparity information of each partition region (Partition).

The video encoder 113 inserts the disparity information for each picture, generated at the disparity data generating unit 115, into the video stream. Note that disparity information for each picture is made up of partition information of a picture display screen and disparity information of each partition region. In this case, for example, the disparity information for each picture is inserted into the video stream in increments of pictures or in increments of GOPs (see Fig. 7). Note that for the left eye image data and right eye image data to each be transmitted with individual video data, an arrangement may be made wherein insertion is made to only one video stream.

The subtitle data output unit 116 outputs data of subtitles (captions) to be superimposed on images. This subtitle data output unit 116 is configured of a personal computer or the like, for example. The subtitle encoder 117 generates a subtitle stream (subtitle elementary stream) including subtitle data output from the subtitle data output unit 116. Note that the subtitle encoder 117 makes reference to the disparity information for each block, generated at the disparity data generating unit 115, and adds disparity information corresponding to the display position of the subtitle to the subtitle data. That is to say, the subtitle data included in the subtitle stream has disparity information corresponding to the display position of the subtitles.

The audio data output unit 118 outputs audio data corresponding to image data. This audio data output unit 118 is configured of, for example, a microphone, or an audio data readout unit which reads out and outputs audio data from a storage medium, or the like. The audio encoder 119 subjects the audio data output from the audio data output unit 118 to encoding such as MPEG-2 Audio, AAC, or the like, and generates an audio stream (audio elementary stream).

The multiplexer 114 PES-packetizes and multiplexes the elementary streams generated at the video encoder 113, subtitle encoder 117, and audio encoder 119, and generates a transport stream TS. In this case, a PTS (Presentation Time Stamp) is inserted in the header of each PES (Packetized Elementary Stream) packet, for synchronous playing at the reception side.

The multiplexer 114 inserts the above-described identification information in the transport stream TS layer. This identification information is information for identifying whether or not there has been inserted disparity information in the video stream. This identification information is inserted beneath a program map table (PMT: Program Map Table) or beneath an event information table (EIT: Event Information Table) included in the transport stream TS, for example.

The operations of the transmission data generating unit 110 illustrated in Fig. 8 will be described in brief. The left eye image data VL and right eye image data VR configuring the stereoscopic image, output from the image data output units 111L and 111R, are supplied to the scalers 112L and 112R, respectively. The scalers 112L and 112R perform horizontal direction and vertical direction scaling on the left eye image data VL and right eye image data VR, as necessary. The left eye image data and right eye image data output from the scalers 112L and 112R are supplied to the video encoder 113.

At the video encoder 113, the left eye image data and right eye image data are subjected to encoding such as MPEG4-AVC (MVC), MPEG2video, or HEVC or the like, for example, thereby obtaining encoded video data. Also at this video encoder 113, a video stream including this encoded data is generated by a stream formatter provided downstream. In this case, one or two video streams including the encoded video data of the left eye image data and right eye image data is or are generated.

Also, the left eye image data VL and configuring the stereoscopic image output from the image data output units 111L and 111R are supplied to the disparity data generating unit 115. At this disparity data generating unit 115, disparity information is generated for each picture (frame), based on the left eye image data VL and right eye image data VR. At the disparity data generating unit 115, downsizing processing is performed as to disparity information for each block (Block), based on partition information of a picture display screen provided by user operations for example, thereby generating disparity information of each partition region (Partition).

The disparity information (including partition information of the picture display screen) for each picture, generated at the disparity data generating unit 115, is supplied to the video encoder 113. At the video encoder 113, disparity information for each picture is inserted into the video stream. In this case, the disparity information is inserted into the video stream in increments of pictures or in increments of GOPs.

Also, at the subtitle data output unit 116, data of subtitles (captions) to be superimposed on the image is output. This subtitle data is supplied to the subtitle encoder 117. At the subtitle encoder 117, a subtitle stream including subtitle data is generated. In this case, at the subtitle encoder 117, disparity information for each block, generated at the disparity data generating unit 115, is referred to, and disparity information corresponding to the display position is added to the subtitle data.

Also, at the audio data output unit 118, audio data corresponding to the image data is output. This audio data is supplied to the audio encoder 119. At this audio encoder 119, the audio data is subjected to encoding such as MPEG-2 Audio, AAC, or the like, and an audio stream is generated.

The video stream obtained at the video encoder 113, the subtitle stream obtained at the subtitle encoder 117, and the audio stream obtained at the audio encoder 119, are each supplied to the multiplexer 114. At the multiplexer 114, the elementary streams supplied from the encoders are PES-packetized and multiplexed, generating a transport stream TS. In this case, a PTS is inserted into each PES header, for synchronous playing at the reception side. Also, at the multiplexer 114, identification information for identifying whether or not disparity information has been inserted into the video stream, is inserted beneath a PMT or beneath an EIT or the like.

[Identification Information, Structure of Disparity Information, TS Configuration]

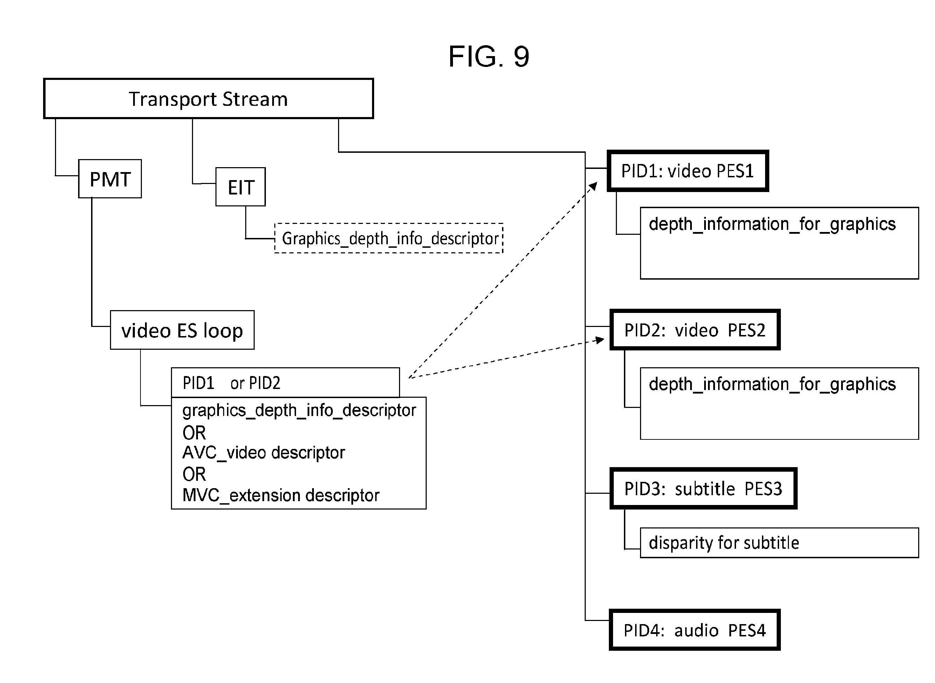

Fig. 9 illustrates a configuration example of a transport stream TS. With this configuration example, an example is illustrated where the left eye image data and right eye image data are each transmitted with individual video streams. That is to say, a PES packet "video PES1" of a video stream where the left eye image data is encoded, and a PES packet "video PES2" of a video stream where the right eye image data is encoded, are included. Also, with this configuration example, a PES packet "subtitle PES3" of a subtitle stream where the subtitle data is encoded, and a PES packet "audio PES4" of an audio stream where the audio data is encoded, stream where the audio data is encoded, are included.

Inserted in the user data region of the video stream is depth information for graphics (depth_information_for_graphics()) including disparity information for each picture. For example, in the event that the disparity information for each picture is inserted in increments of pictures, this depth information for graphics is inserted in the user data region of each picture of the video stream. Also, in the event of the disparity information for each picture being inserted in increments of GOPs, this depth information for graphics is inserted in the user data region of the head picture of the GOP in the video stream. Note that with this configuration example, illustration is made that depth information for graphics is included in both video streams, but may be inserted in one video stream alone.

A PMT (Program Map Table) is included in the transport stream TS as PSI (Program Specific Information). This PSI is information describing to which program each elementary stream included in the transport stream TS belongs to. Also included in the transport stream TS is an EIT (Event Information Table) serving as SI (Serviced Information) performing management in increments of events.

An elementary loop having information relating to each elementary stream exists beneath the PMT. Information such as packet identifiers (PID) for each stream is placed in this elementary loop, and also descriptors describing information relating to the elementary streams are placed.

Identification information indicating whether or not disparity information is inserted into the above-described video stream is described in a descriptor (descriptor) inserted beneath the elementary loop of the program map table, for example. This descriptor is, for example, an already-existing AVC video descriptor (AVC video descriptor) or MVC extension descriptor (MVC_extension_descriptor), or a newly-defined graphics depth info descriptor (graphics_depth_info_descriptor). Note that with regard to the graphics depth info descriptor, an arrangement may be conceived of inserting beneath the EIT, as illustrated in the drawing by dotted lines.

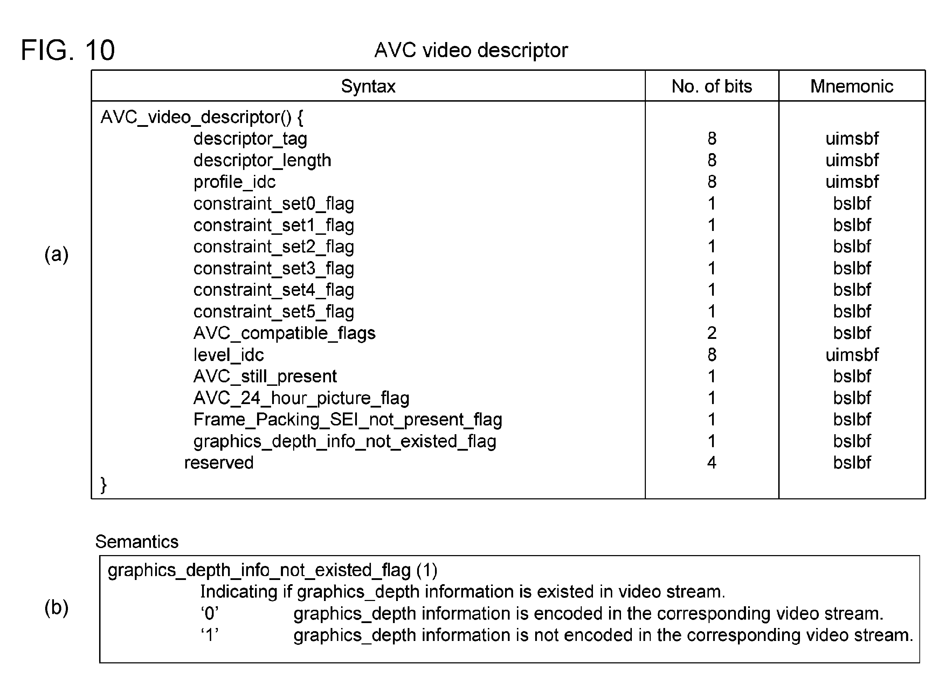

Fig. 10(a) illustrates a structure example (Syntax) of an AVC video descriptor (AVC video descriptor) in which identification information has been described. This descriptor can be applied in a case that the video is the MPEG4-AVC Frame compatible format. The descriptor itself is already included in the H.264/AVC standard. Here, 1-bit flag information of "graphics_depth_info_not_existed_flag[0]" is newly defined for this descriptor.

As illustrated in the stipulation contents (semantics) in Fig. 10(b), this flag information indicates whether or not depth information for graphics (depth_information_for_graphics()) including disparity information for each picture has been inserted in the corresponding video stream. In the event that this flag information is "0", this indicates that it has been inserted. On the other hand, in the event that this flag information is "1", this indicates that it has not been inserted.

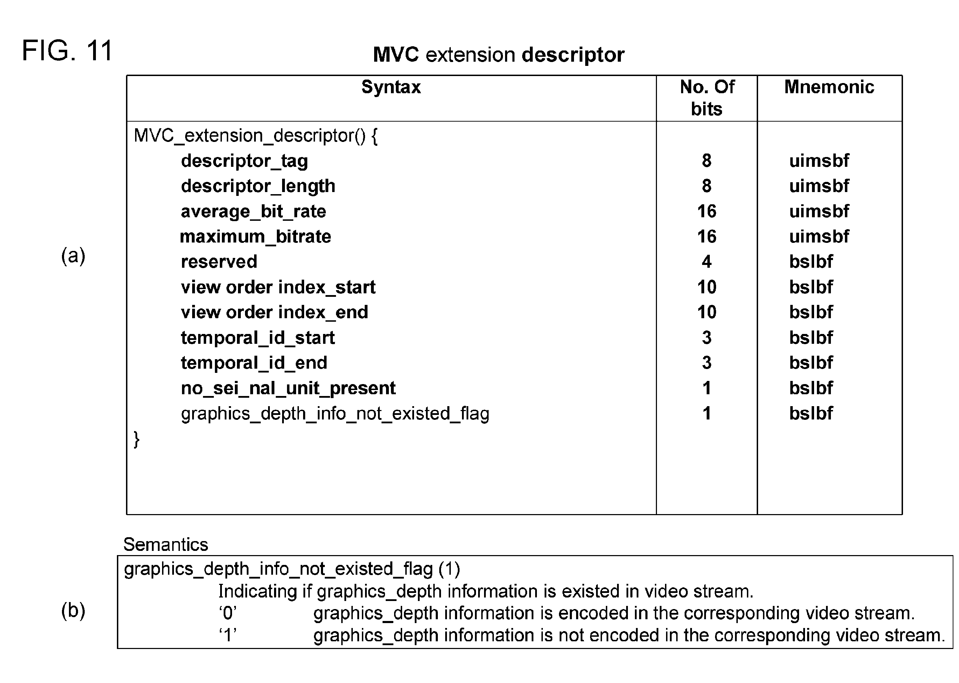

Fig. 11(a) illustrates a structure example (Syntax) of an MVC extension descriptor (MVC extension descriptor) in which identification information has been described. This descriptor can be applied in a case that the video is the MPEG4-AVC Annex H MVC format. The descriptor itself is already included in the H.264/AVC standard. Here, 1-bit flag information of "graphics_depth_info_not_existed_flag" is newly defined for this descriptor.

As illustrated in the stipulation contents (semantics) in Fig. 11(b), this flag information indicates whether or not depth information for graphics (depth_information_for_graphics()) including disparity information for each picture has been inserted in the corresponding video stream. In the event that this flag information is "0", this indicates that it has been inserted. On the other hand, in the event that this flag information is "1", this indicates that it has not been inserted.

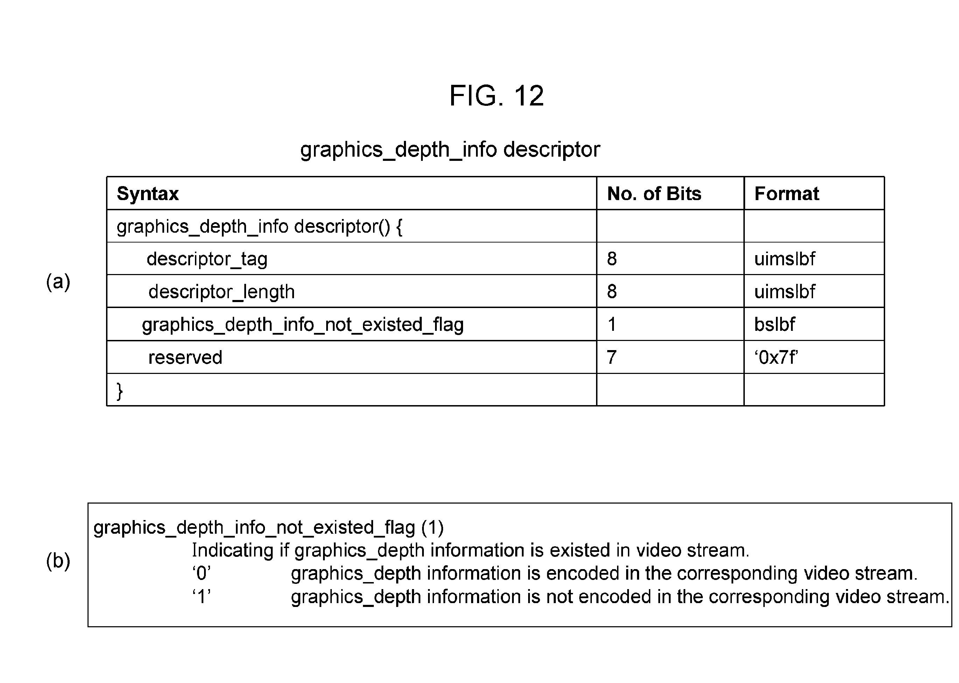

Fig. 12(a) illustrates a structure example (Syntax) of the graphics depth info descriptor (graphics_depth_info_ descriptor) An 8-bit field "descriptor_tag" indicates that this descriptor is the "graphics_depth_info_descriptor". An 8-bit field "descriptor_length" indicates the number of bytes of data following. 1-bit information of the "graphics_depth_info_ not_existed_flag" is also described in this descriptor.

As illustrated in the stipulation contents (semantics) in Fig. 12(b), this flag information indicates whether or not the depth information for graphics (depth_information_for_graphics()) including the disparity information for each picture is inserted in the corresponding video stream. In the event that this flag information is "0", this indicates that it has been inserted. On the other hand, in the event that this flag information is "1", this indicates that it has not been inserted.

Next, a case of inserting the depth information for graphics (depth_information_for_graphics()) including disparity information for each picture into the user data region of a video stream will be described.

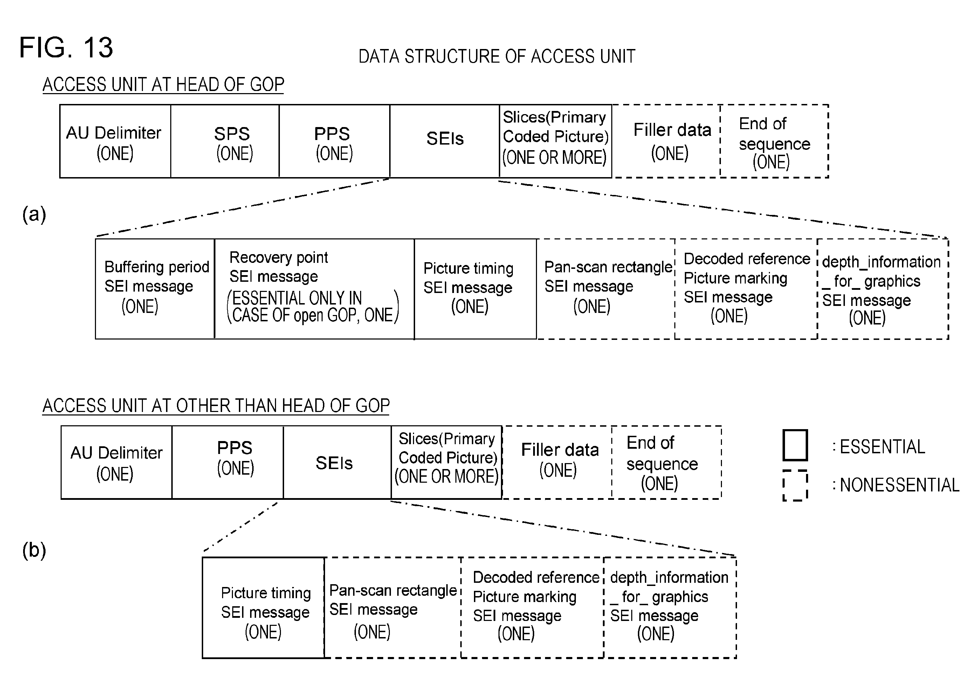

For example, in the event that the encoding format is AVC, the "depth_information_for_graphics()" is inserted in the "SEIs" portion of the access unit, as "depth_information_for_graphics SEI message". Fig. 13(a) illustrates an access unit at the head of a GOP (Group Of Pictures), and Fig. 13(b) illustrates an access unit at the head of other than a GOP. In the event that disparity information for each picture is to be inserted in increments of GOPs, the "depth_ information_for_graphics SEI message" is inserted at the access unit at the head of the GOP alone.

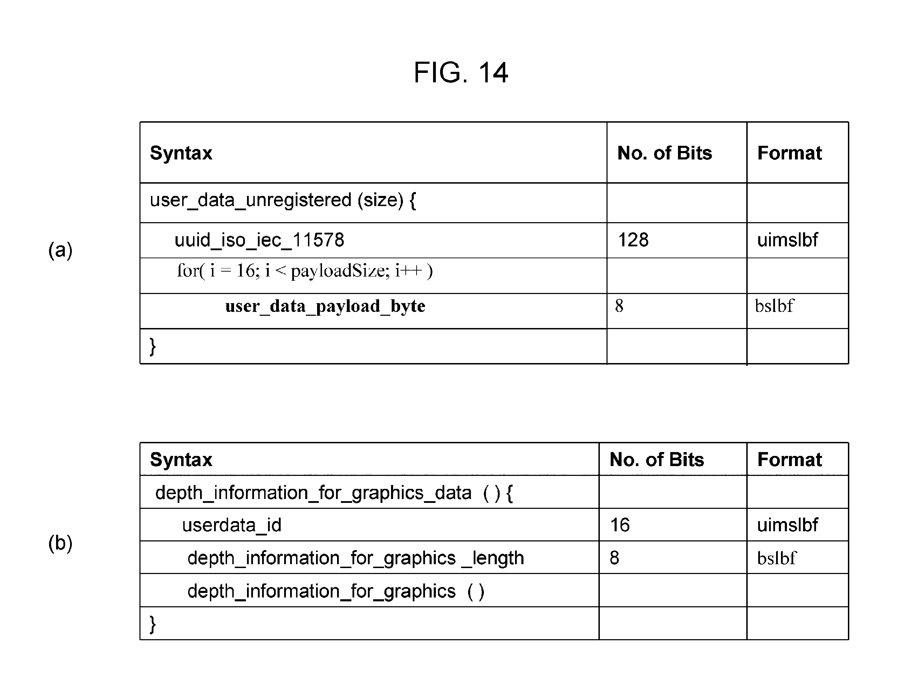

Fig. 14(a) is a structure example (Syntax) of "depth_information_for_graphics SEI message". "uuid_iso_iec_ 11578" has a UUID value indicated in "ISO/IEC 11578:1 996 AnnexA.". The "user_data_payload_byte" has "depth_ information_for_graphics_data()" inserted therein. Fig. 14(b) indicates a structure example (Syntax) of "depth_ information_for_graphics data()". The depth information for graphics (depth_information_for_graphics()) is inserted therein. "userdata_id" is an identifier of unencoded 16-bit "depth_information_for_graphics()".

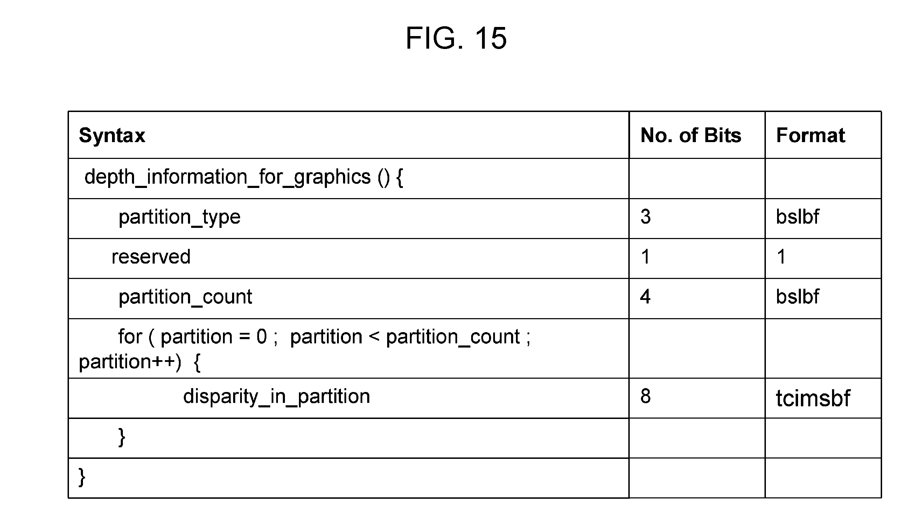

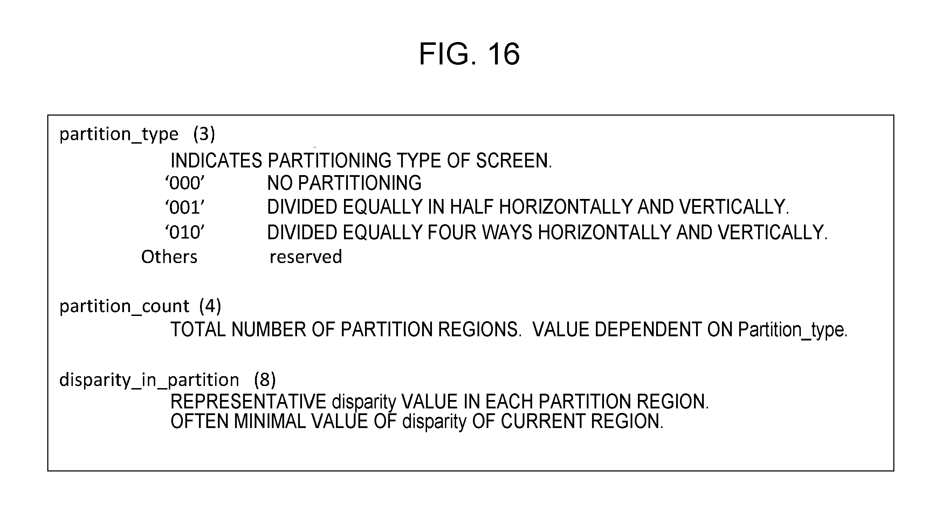

Fig. 15 illustrates a structure example (Syntax) of "depth_information_for_graphics()" in a case of inserting disparity information for each picture in increments of pictures. Also, Fig. 16 illustrates primary information contents (Semantics) of the configuration example illustrated in Fig. 15.

A 3-bit field of "partition_type" illustrates the partition type of the picture display screen. "000" indicates no partitioning, "001" indicates dividing equally two ways both horizontally and vertically, and "010" indicates dividing equally four ways both horizontally and vertically.

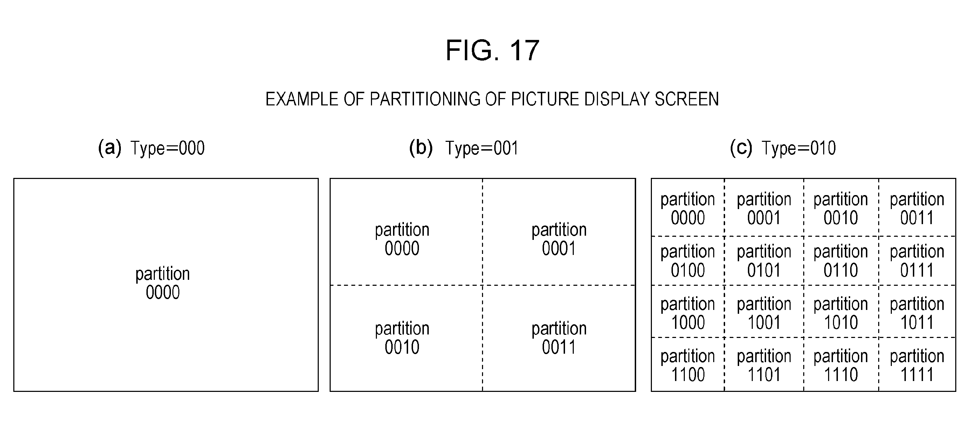

A 4-bit field "partition_count" indicates the total number of partition regions (Partition), and is a value dependent on the aforementioned "partition_type". For example, in the event that "partition_type=000", the total number of partition regions (Partition) is "1". Also, for example, in the event that "partition_type=001", the total number of partition regions (Partition) is "4", as illustrated in Fig. 17(b). Also, for example, in the event that "partition_type=010", the total number of partition regions (Partition) is "16", as illustrated in Fig. 17(c).

An 8-bit field "disparity_in_partition" illustrates representative disparity information (representative disparity value) of each partition region (Partition). This often is the smallest value of the disparity information of this region.

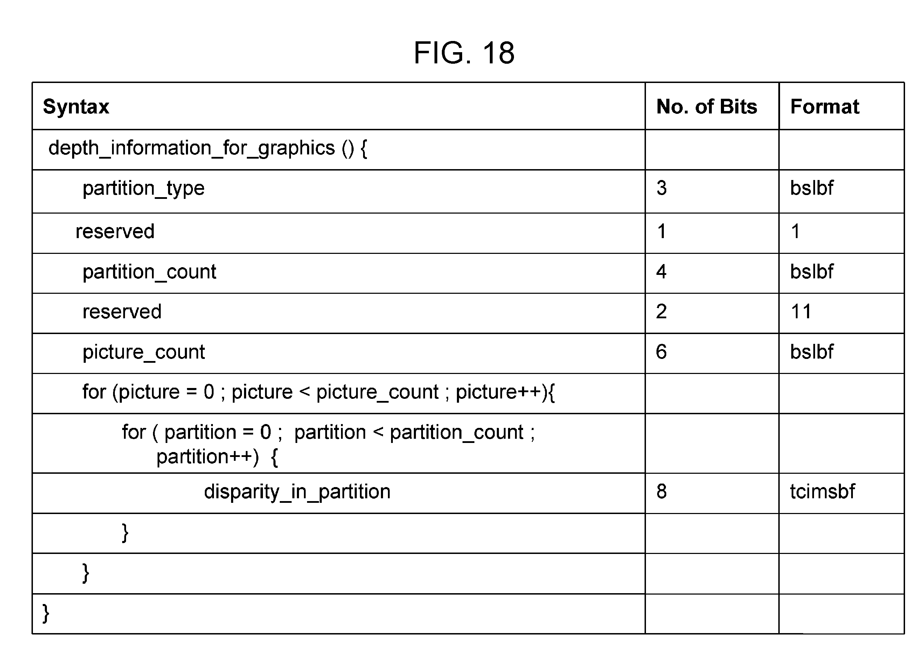

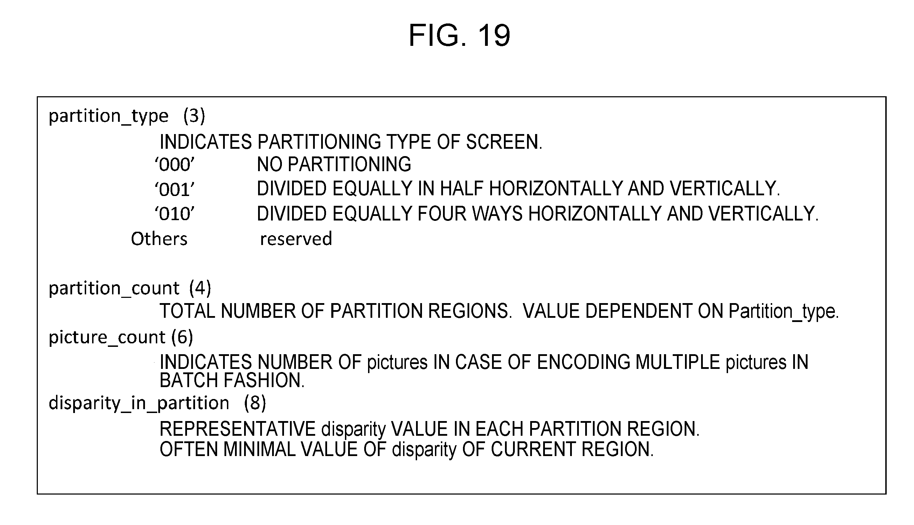

Fig. 18 illustrates a structure example (Syntax) of "depth_information_for_graphics()" in a case of encoding multiple pictures in batch fashion, as with a case of inserting disparity information for each picture in increments of GOPs. Also, Fig. 19 illustrates primary information contents (Semantics) of the configuration example illustrated in Fig. 18.

A 6-bit field "picture_count" indicates the number of pictures. This "depth_information_for_graphics()" includes the "disparity_in_partition" of each partition region (Partition) for as many pictures. While detailed description will be omitted, the structure example in Fig. 18 is otherwise the same as the structure example in Fig. 15.

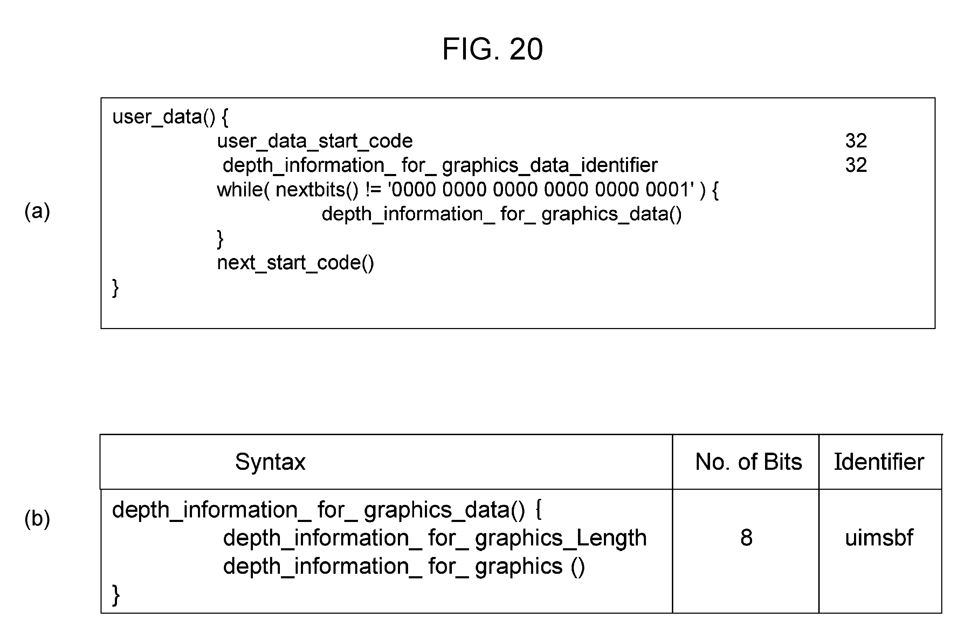

Also, in the event that the encoding format is MPEG2 video, "depth_information_for_graphics()" is inserted in the user data region of the picture header portion as user data "user_data()". Fig. 20(a) illustrates a structure example (Syntax) of "user_data()". A 32-bit field "user_data_start_code" is a start code for user data (user_data), and is a fixed value of "0x000001B2".

A 32-bit field following this start code is an identifier identifying the contents of the user data. Here, this is "depth_information_for_graphics_data_identifier", enabling identification that the user data is "depth_information_for_ graphics_data". For the data body following this identifier, "depth_information_for_graphics_data()" is inserted. Fig. 20 (b) illustrates a structure example (Syntax) of "depth_information_for_graphics data()". "depth_information_for_graphics ()" is inserted therein (see Fig. 15, Fig. 18).

Note that examples of insertion of disparity information into a video stream in a case where the encoding format is AVC or MPEG2 video have been described. While detailed description will be omitted, insertion of disparity information into video streams can be performed with similar structures even with other encoding formats of similar structure, such as HEVC of the like, for example.

"Description of Set Top Box"

The set top box 200 receives a transport stream TS sent from the broadcasting station 100 over broadcast waves. Also, the set top box 200 decodes video streams included in this transport stream TS, and generates left eye image data and right eye image data configuring a stereoscopic image. Also, the set top box 200 extracts disparity information for each picture in image data that is inserted in the video streams.

At the time of performing superimpose-display of graphics (STB graphics) on an image, the set top box 200 obtains the left eye image and right eye image on which graphics have been superimposed. At this time, the set top box 200 provides the graphics superimposed on the left eye image and right eye image with disparity corresponding to the display position of the graphics, for each picture, and obtains data of the left eye image upon which the graphics have been superimposed, and data of the right eye image upon which the graphics have been superimposed.

By providing disparity to the graphics as described above, the graphics (STB graphics) superimpose-displayed on the stereoscopic image can be displayed to the near side of objects in the stereoscopic image at the display position. Accordingly, in a case of performing superimpose-display of graphics such as an OSD or application or program information EPG or the like on the image, consistency of perspective as to the objects in the image can be maintained.

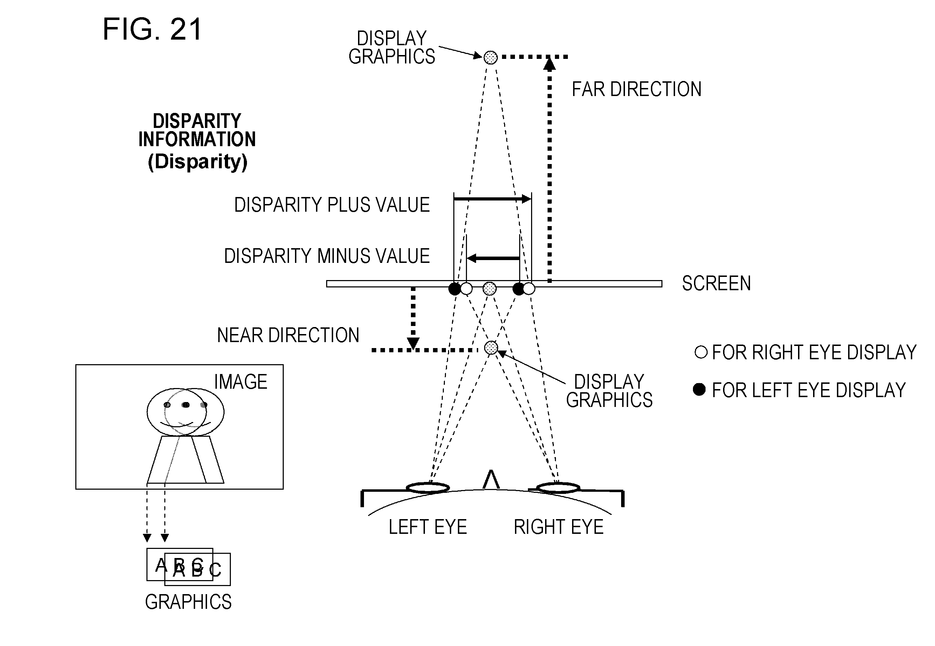

Fig. 21 illustrates the concept of depth control of graphics by disparity information. In the event that the disparity information is a negative value, disparity is provided such that the graphics for the left eye display is shifted to the right on the screen, and such that the graphics for the right eye display is shifted to the left. Also, in the event that the disparity information is a positive value, disparity is provided such that the graphics for the left eye display is shifted to the left on the screen, and such that the graphics for the right eye display is shifted to the right. In this case, the display position of the graphics is at the far side of the screen.

As described above, disparity information obtained for each picture of the image data is inserted in a video stream. Accordingly, the set top box 200 can perform depth control of graphics by disparity information, using the disparity information matching the display time of the graphics, with good precision.

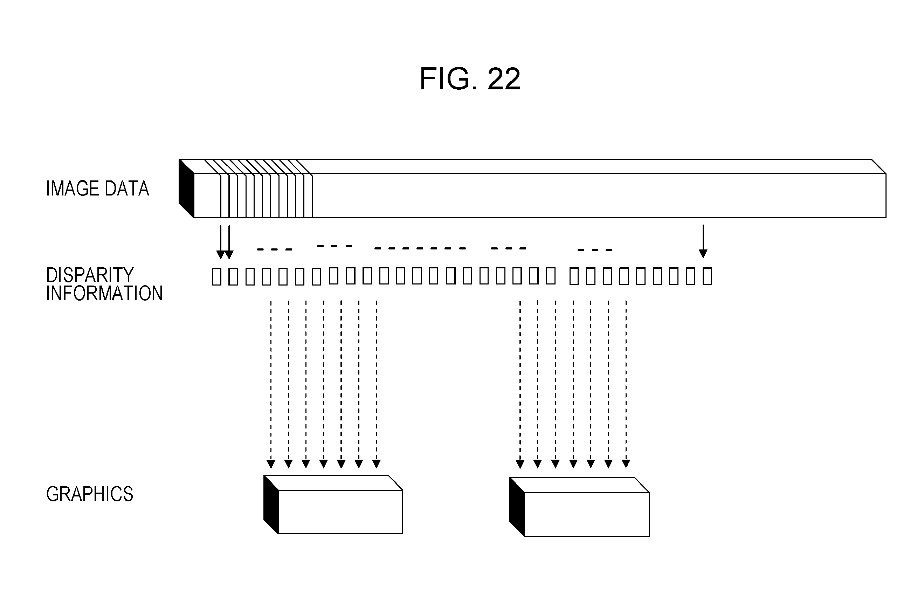

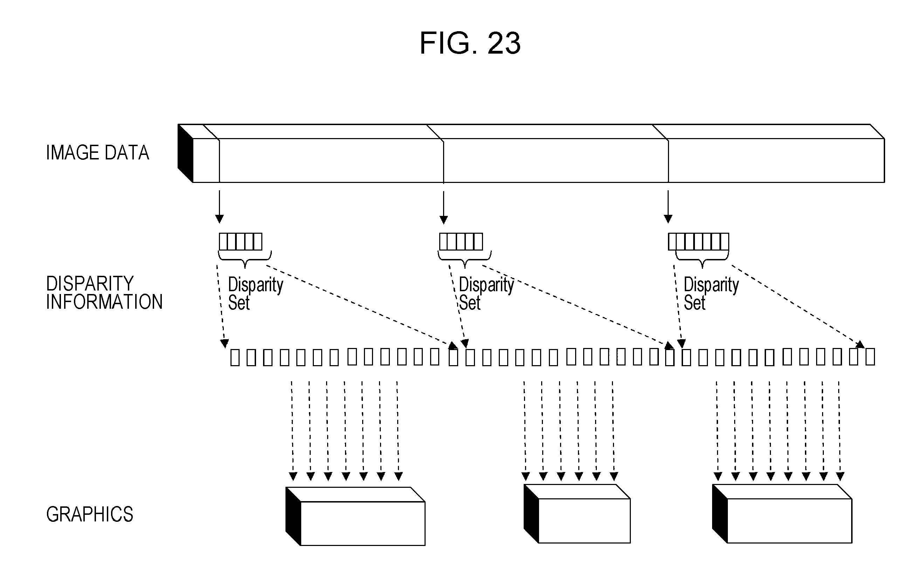

Fig. 22 is an example of a case where disparity information is inserted in a video stream in increments of pictures, with disparity information being sequentially obtained at the set top box 200 at picture timings of the image data. The disparity information matching the display timing of the graphics is used to display the graphics, and suitable disparity is provided to the graphics. Also, Fig. 23 is an example of a case where disparity information is inserted in the video stream in increments of GOPs, for example, with disparity information of each picture within the GOP (disparity information set) being obtained at the set top box 200 in batch fashion at the head timing of the GOP of the image data. The disparity information matching the display timing of the graphics is used to display the graphics (STB graphics), and suitable disparity is provided to the graphics.

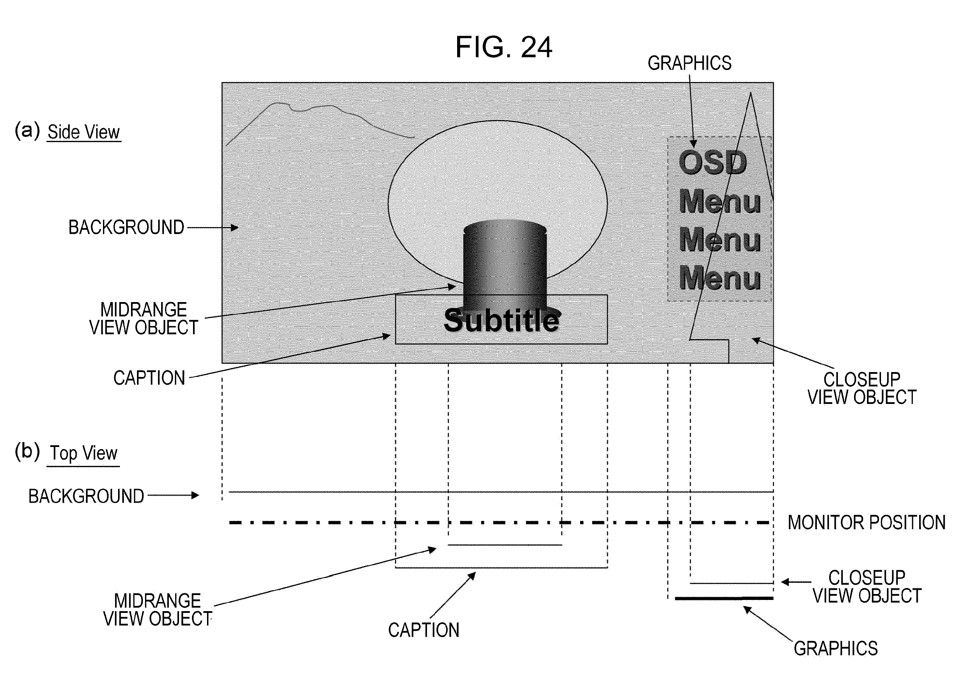

"Side View" in Fig. 24(a) illustrates a display example of a caption (subtitle) and OSD graphics on the screen. With this display example, this is an example of a caption and graphics having been superimposed on an image made up of a background, midrange view object, and closeup view object. The "Top View" in Fig. 24(b) illustrates the perspective of the background, midrange view object, closeup view object, caption, and graphics. This indicates that the caption and graphics are recognized as being on the near side of the object corresponding to the display position. Note that while not illustrated, in the event that the display position of the caption and graphics overlap, suitable perspective is provided to graphics such that the graphics are recognized as being to the near side of the caption, for example.

"Configuration Example of Set Top Box"

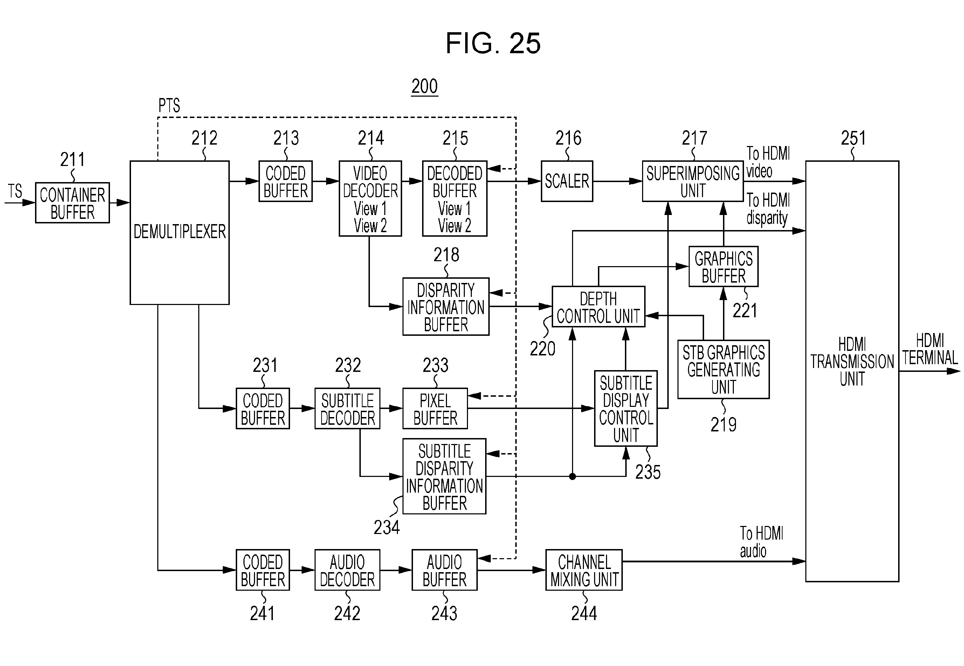

Fig. 25 illustrates a configuration example of the set top box 200. The set top box 200 includes a container buffer 211, a demultiplexer 212, a coded buffer 213, a video decoder 214, decoded buffer 215, a scaler 216, and a superimposing unit 217.

The set top box 200 also includes a disparity information buffer 218, a set top box (STB) graphics generating unit 219, a depth control unit 220, and a graphics buffer 221. The set top box 200 also includes a coded buffer 231, a subtitle decoder 232, a pixel buffer 233, a subtitle disparity information buffer 234, and a subtitle display control unit 235. Further, the set top box 200 includes a coded buffer 241, an audio decoder 242, an audio buffer 243, a channel mixing unit 244, and an HDMI transmission unit 251.

The container buffer 211 temporarily stores a transport stream TS received at an unshown digital tuner or the like. This includes video streams, a subtitle stream, and an audio stream. For the video streams, one or two video streams obtained by encoding left eye image data and right eye image data are included. As video streams, one or two video streams in which the left eye image data and right eye image data has been encoded and obtained is or are included.

For example, there are cases where side-by-side format or top-and-bottom format image data is configured of left eye image data and right eye image data, and sent as a single video stream. Also, there are cases where the left eye image data and right eye image data are each sent as individual video streams, as with an MVC base view stream or nonbase view stream.

The demultiplexer 212 extracts the streams of video, subtitle, and audio, from the transport stream TS temporarily stored in the container buffer 211. Also, the demultiplexer 212 extracts identification information (flag information of "graphics_depth_info_not_existed_flag") indicating whether or not disparity information has been inserted into the video stream, from this transport stream TS, and sends this to an unshown control unit (CPU). In the event that the identification information indicates insertion of disparity information, under control of the control unit (CPU) the video decoder 214 obtains disparity information from the video stream, as described later.

The coded buffer 213 temporarily stores the video stream extracted at the demultiplexer 212. The video decoder 214 performs decoding processing of the video stream stored at the coded buffer 213, and obtains left eye image data and right eye image data. Also, the video decoder 214 obtains disparity information of each picture of the image data inserted into the video stream. The disparity information of each picture includes partition information of the picture display screen, and disparity information (disparity) of each partition region (Partition). The decoded buffer 215 temporarily stores the left eye image data and right eye image data obtained at the video decoder 214. Also, the disparity information buffer 218 temporarily stores the disparity information for each picture of the image data obtained at the video decoder 214.

The scaler 216 performs horizontal direction or vertical direction scaling processing on the left eye image data and right eye image data output from the decoded buffer 215, as necessary. For example, in the event that the left eye image data and right eye image data has been sent as one video stream as side-by-side format or top-and-bottom format image data, this is scaled up twofold in the horizontal direction or vertical direction, and output. Also, in the event that the left eye image data and right eye image data each have been sent as individual video streams, as with an MVC base view stream or nonbase view stream, the left eye image data and right eye image data are output as they are, without performing scaling processing.

The coded buffer 231 temporarily stores the subtitle stream extracted at the demultiplexer 212. The subtitle decoder 232 performs processing the opposite of that of the subtitle encoder 117 of the transmission data generating unit 110 (see Fig. 8). That is to say, the subtitle decoder 232 performs decoding processing of the subtitle stream stored in the coded buffer 231, obtaining subtitle data.

This subtitle data includes bitmap data of a subtitle (caption), display position information of this subtitle "Subtitle rendering position (x2, y2)", and disparity information "Subtitle disparity" of the subtitle (Caption). The pixel buffer 233 temporarily stores bitmap data of the subtitle (caption) and display position information "Subtitle rendering position (x2, y2)" of the subtitle (caption) obtained at the subtitle decoder 232. The subtitle disparity information buffer 234 temporarily stores the disparity information "Subtitle disparity" of the subtitle (caption) obtained at the subtitle decoder 232.

The subtitle display control unit 235 generates bitmap data "Subtitle data" of the subtitle for the left eye display and for the right display with disparity provided, based on the bitmap data of the subtitle, the display position information and disparity information of this subtitle. The set top box (STB) graphics generating unit 219 generates graphics data for such as OSD or application, or EPG or the like. This graphics data includes graphics bitmap data "Graphics data", and display position information "Graphics rendering position (x1, y1)" of the graphics.

The graphics buffer 221 temporarily stores the graphics bitmap data "Graphics data" generated at the set top box graphics generating unit 219. The superimposing unit 217 superimposes the bitmap data "Subtitle data" of the subtitle for left eye display and for right eye display, generated a the subtitle display control unit 235, onto the left eye image data and right eye image data.

Also, the superimposing unit 217 superimposes the graphics bitmap data "Graphics data" stored in the graphics buffer 221 onto the left eye image data and right eye image data. At this time, the graphics bitmap data "Graphics data" superimposed on each of the left eye image data and right eye image data is provided with disparity by the later-described depth control unit 220. Here, in the event that the graphics bitmap data "Graphics data" shares the same pixels as the bitmap data "Subtitledata" of the subtitle, the superimposing unit 217 overwrites the graphics data over the subtitle data.

The depth control unit 220 provides disparity to the graphics bitmap data "Graphics data" to be superimposed on each of the left eye image data and right eye image data. Accordingly, the depth control unit 220 generates display position information "Rendering position" of the graphics for left eye display and for right eye display, and performs shift control of the superimposing position of the graphics bitmap data "Graphics data" stored in the graphics buffer 221, on the left eye image data and right eye image data.

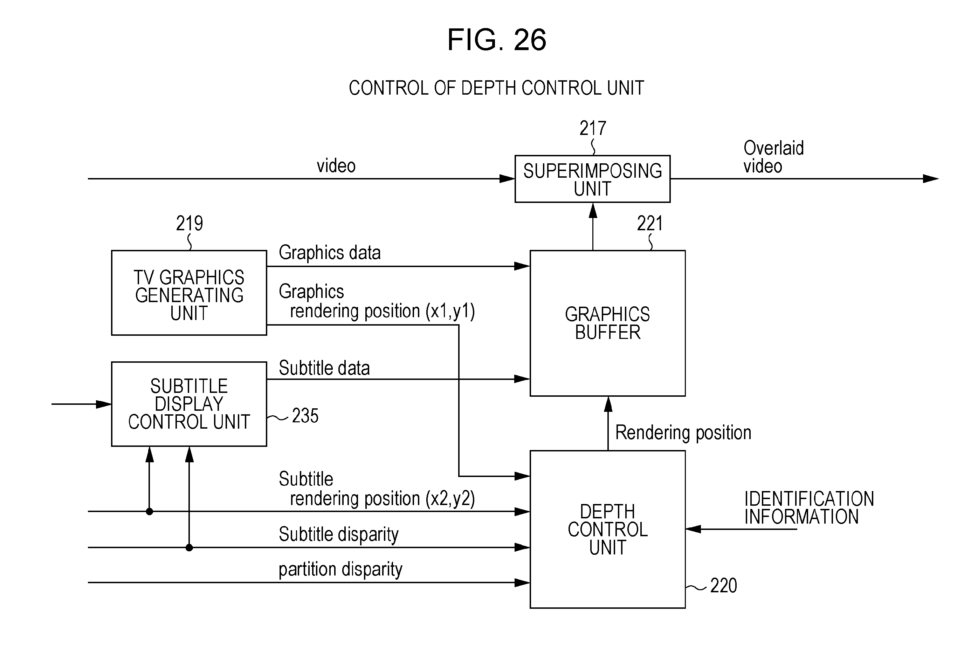

The depth control unit 220 uses the following information to generate the display position information "Rendering position", as illustrated in Fig. 26. That is to say, the depth control unit 220 uses the disparity information (Disparity) of each partition region (Partition) for each picture in the image data stored in the disparity information buffer 218. Also, the depth control unit 220 uses the subtitle (caption) display position information "Subtitle rendering position (x2, y2)" stored in the pixel buffer 233.

Also, the depth control unit 220 uses the subtitle (caption) disparity information "Subtitle disparity" stored in the subtitle disparity information buffer 234. Also, the depth control unit 220 uses the graphics display position information "Graphics rendering position (x1, y1)" generated at the set top box graphics generating unit 219. Also, the depth control unit 220 uses identification information indicating whether or not the disparity information is inserted in the video stream.

Also, the depth control unit 220 updates the disparity information for each partition region of each picture in the image data stored in the disparity information buffer 218, in accordance with superimposing of the caption or graphics to the image. In this case, the depth control unit 220 updates the value of the disparity information (Disparity) of the partition region (Partition) corresponding to the display position of the subtitle (caption) and display position of graphics, to the value of the disparity information (Disparity) used to provide disparity to the subtitle (caption) or graphics, for example.

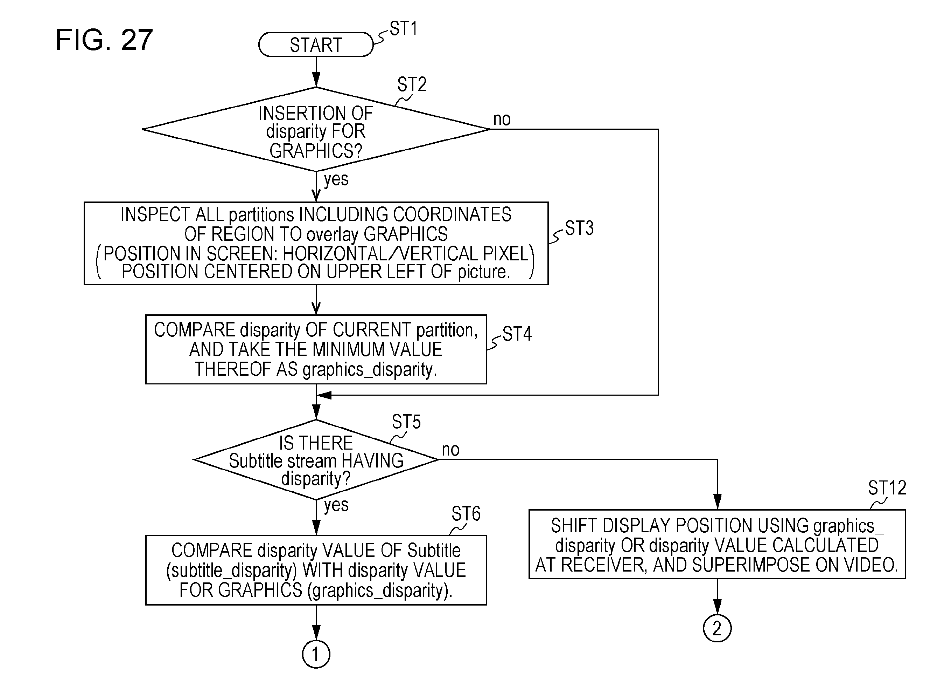

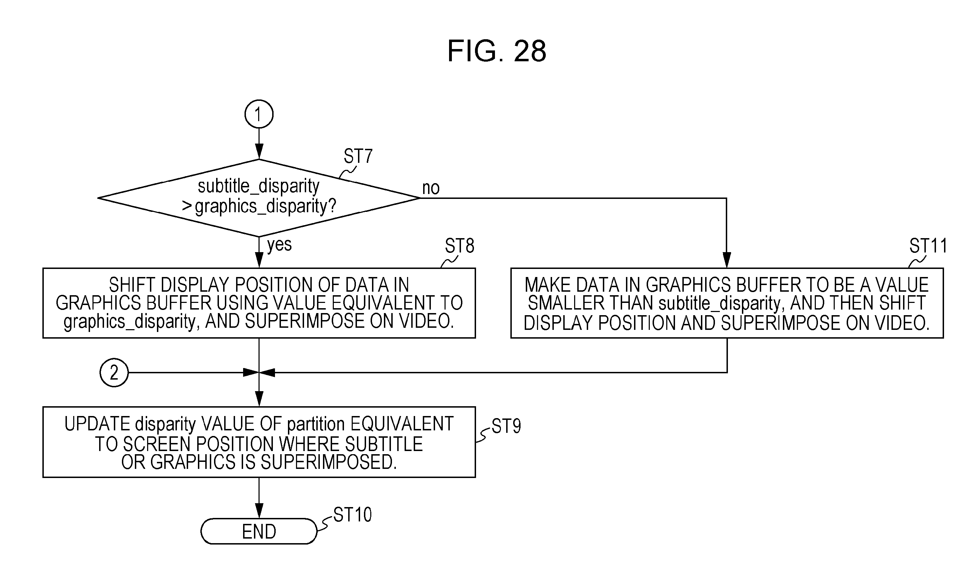

The flowcharts in Fig. 27 and Fig. 28 illustrate an example of control processing of the depth control unit 220. The depth control unit 220 executes this control processing for each picture (frame) in which graphics display is to be performed. In step ST1, the depth control unit 220 starts control processing. Subsequently, in step ST2, the depth control unit 220 judges whether or not there has been insertion of disparity information for graphics in the video stream.

In the event that there has been inserted disparity information in the video stream, the depth control unit 220 goes to step ST3. In this step ST3, all partition regions (partition) including coordinates for superimposed display (overlay) of graphics are inspected. Then, in step ST4, the depth control unit 220 compares the disparity information (disparity) of the target partition regions (partition), selects a suitable value, e.g., the smallest value, and takes this as the value (graphics_disparity) for the graphics disparity information (disparity).

Next, the depth control unit 220 goes to the processing in step ST5. In the event that there has been no insertion of disparity information into the video stream in step ST2 described above, the depth control unit 220 immediately goes to the processing of step ST5. In this step ST5, the depth control unit 220 judges whether or not there is a subtitle stream (Subtitle stream) having disparity information (disparity).

In the event that there is a subtitle stream (Subtitle stream) having disparity information (disparity), in step ST6 the depth control unit 220 compares the value (subtitle_disparity) of the disparity information (disparity) for subtitles, and the value (graphics_disparity) of the disparity information for graphics. Note that the value (graphics_disparity) of the disparity information for graphics is set to "0", for example, in the event that there is no insertion of disparity information (disparity) for graphics in the video stream.

Next, in step ST7, the depth control unit 220 determines whether or not the condition of "subtitle_disparity > (graphics_disparity) is satisfied. In the event that this condition is satisfied, in step ST8, the depth control unit 220 uses a value equivalent to the value (graphics_disparity) of the disparity information (disparity) for graphics, as to the graphics bitmap data "Graphics data" stored in the graphics buffer 221, so as to obtain graphics bitmap data for left eye display and for right eye display of which the display position has been shifted, and superimposes these on the left eye image data and right eye image data, respectively.

Next, in step ST9, the depth control unit 220 updates the value of disparity information (disparity) of the partition region (Partition) corresponding to the screen position where the subtitle or graphics has been superimposed. After the processing in step ST9, in step ST10 the depth control unit 220 ends control processing.

On the other hand, in the event that the condition is not satisfied in stet ST7, in step ST10 the depth control unit 220 uses a value smaller than the value of the disparity information (disparity) for subtitles, as to the graphics bitmap data "Graphics data" stored in the graphics buffer 221, so as to obtain graphics bitmap data for left eye display and for right eye display of which the display position has been shifted, and superimposes these on the left eye image data and right eye image data, respectively. After the processing of step ST11, the depth control unit 220 transitions through the processing of step ST9, and in step ST10 ends control processing.

Also, in the event that there is no subtitle stream (Subtitle stream) having disparity information (disparity) in step ST5, the depth control unit 220 goes to the processing in step ST12. In step ST12, the depth control unit 220 performs depth control of the graphics using the value (graphics_disparity) of disparity information for graphics, obtained in step ST4, or uses the value of disparity information (disparity) calculated at the set top box 200.

That is to say, the depth control unit 220 uses the value (graphics_disparity) of disparity information for graphics or value of calculated disparity information (disparity), as to the graphics bitmap data "Graphics data" stored in the graphics buffer 221, so as to obtain graphics bitmap data for left eye display and for right eye display of which the display position has been shifted, and superimposes these on the left eye image data and right eye image data, respectively. After the processing of step ST12, the depth control unit 220 transitions through the processing of step ST9, and in step ST10 ends control processing.

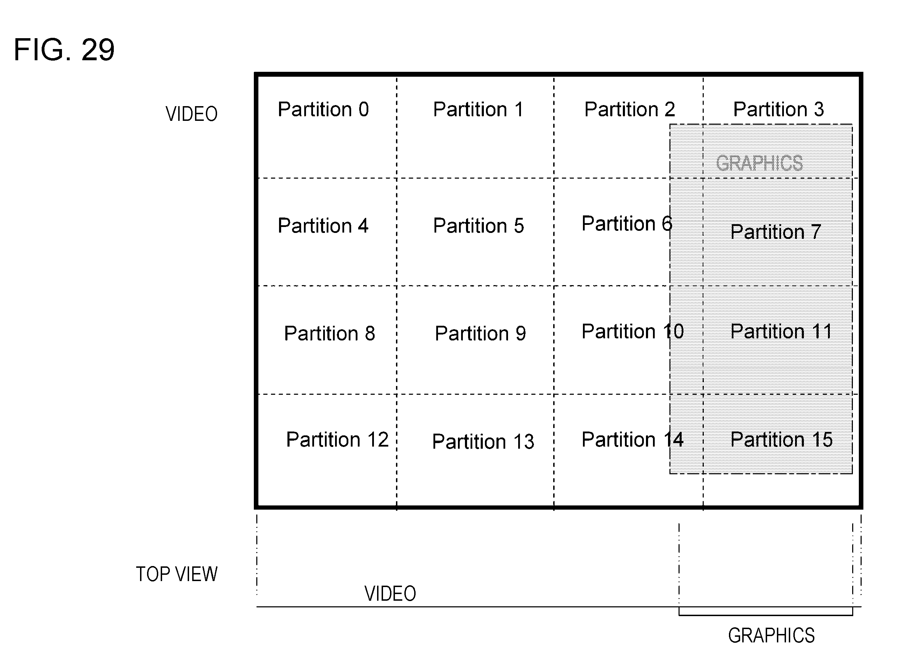

Fig. 29 illustrates a depth control example of graphics at the set top box 200. In this example, the graphics (STB graphics) is provided with disparity to the graphics for left eye display and the graphics for right eye display, based on the disparity information with the smallest value of the disparity information of the eight partition regions (Partition 2, 3, 6, 7, 10, 11, 14, 15) at the right side. As a result, the graphics will be displayed to the near side of the image (video) object of these eight partition regions.

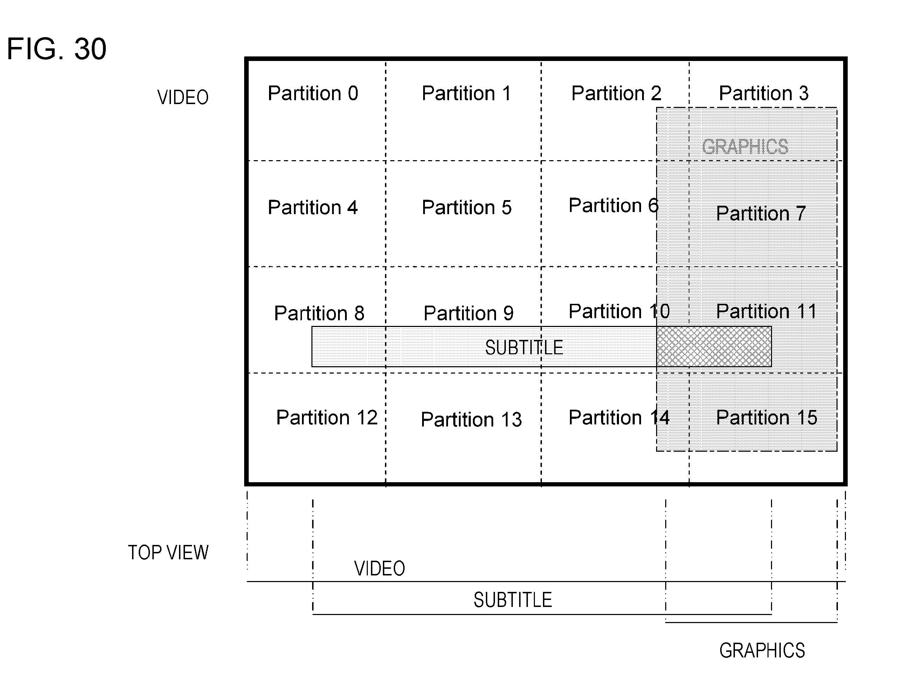

Fig. 30 also illustrates a depth control example of graphics at the set top box 200. In this example, the graphics (STB graphics) is provided with disparity to the graphics for left eye display and the graphics for right eye display, based on the disparity information with the smallest value of the disparity information of the eight partition regions (Partition 2, 3, 6, 7, 10, 11, 14, 15) at the right side, and further on the disparity information of the subtitle (caption).

As a result, the graphics will be displayed to the near side of the image (video) object of these eight partition regions, and further to the near side of the subtitle (caption). Note that in this case, the subtitle (caption) is also displayed to the near side of the image (video) object of the four partition regions (Partition 8, 9, 10, 11) corresponding to the display position of the subtitle, based on the disparity information of the subtitle (caption).

Note that the disparity information updating processing in the case of the depth control example in Fig. 30 is performed as follows, for example. That is to say, first, the value of disparity information (Disparity) of the four partition regions (Partition 8, 9, 10, 11) corresponding to the display position of the subtitle is updated with the disparity information value (subtitle_disparity) used for providing disparity to the subtitle. Subsequently, the value of disparity information (Disparity) of the eight partition regions (Partition 2, 3, 6, 7, 10, 11, 14, 15) is updated with the disparity information value (graphics_disparity) used for providing disparity to the graphics.

The coded buffer 241 temporarily stores the audio stream extracted at the demultiplexer 212. The audio decoder 242 performs processing opposite to that of the audio encoder 119 of the transmission data generating unit 110 (see Fig. 8) described above. That is to say, the audio decoder 242 performs decoding processing of the audio stream stored in the coded buffer 241, and obtains decoded audio data. The audio buffer 243 temporarily stores the audio data obtained at the audio decoder 242. The channel mixing unit 244 generates audio data for each channel to realize 5.1ch surround or the like for example, as to the audio data stored in the audio buffer 243, and outputs.

Note that readout of information (data) from the decoded buffer 215, disparity information buffer 218, pixel buffer 233, subtitle disparity information buffer 234, and audio buffer 243, is performed based on PTS, and transmission synchronization is performed.

The HDMI transmission unit 251 transmits the left eye image data and right eye image data obtained by superimposing processing of the subtitle and graphics having been performed at the superimposing unit 217, and the audio data of each channel obtained at the channel mixing unit 244, to an HDMI sink device, which is the television receiver 300 in this embodiment, by communication compliant to HDMI. Here, the left eye image data obtained at the superimposing unit 217 is left eye image data upon which subtitles (captions) and STB graphics for left eye display have been superimposed. Also, the right eye image data obtained at the superimposing unit 217 is right eye image data upon which subtitles (captions) and STB graphics for right eye display have been superimposed.

Also, the HDMI transmission unit 251 transmits disparity information (Disparity) for each partition region of each picture of the image data, updated at the depth control unit 220, to the television receiver 300 by way of an HDMI interface. With this embodiment, this disparity information is inserted into a blanking period of the image data and transmitted. This HDMI transmission unit 251 will be described in detail later.

The operations of the set top box 200 illustrated in Fig. 25 will be described in brief. The transport stream TS received at a digital tuner or the like is temporarily stored in the container buffer 211. The transport stream TS includes video streams, a subtitle stream, and an audio stream. For the video streams, one or two video streams obtained by encoding left eye image data and right eye image data are included.

The demultiplexer 212 extracts the streams of video, subtitle, and audio, from the transport stream TS temporarily stored in the container buffer 211. Also, the demultiplexer 212 extracts identification information (flag information of "graphics_depth_info_not_existed_flag") indicating whether or not disparity information has been inserted into the video stream, from this transport stream TS, and sends this to an unshown control unit (CPU).

The video stream extracted at the demultiplexer 212 is supplied to the coded buffer 213 and temporarily stored. The video decoder 214 performs decoding processing of the video stream stored at the coded buffer 213, and obtains left eye image data and right eye image data. This left eye image data and right eye image data is temporarily stored at the decoded buffer 215. Also, the video decoder 214 obtains disparity information of each picture of the image data inserted into the video stream. This disparity information is temporarily stored in the disparity information buffer 218.

At the scaler 216 horizontal direction or vertical direction scaling processing is performed on the left eye image data and right eye image data output from the decoded buffer 215, as necessary. For example, 1920*1080 full-HD-size left eye image data and right eye image data is obtained from this scaler 216. The left eye image data and right eye image data is supplied to the superimposing unit 217.

The subtitle stream extracted at the demultiplexer 212 is supplied to the coded buffer 231 and temporarily stored. The subtitle decoder 232 performs decoding processing of the subtitle stream stored in the coded buffer 231, obtaining subtitle data. This subtitle data includes bitmap data of a subtitle (caption), display position information of this subtitle "Subtitle rendering position (x2, y2)", and disparity information "Subtitle disparity" of the subtitle (caption).

The bitmap data of the subtitle (caption) and display position information "Subtitle rendering position (x2, y2)" of the subtitle (caption) obtained at the subtitle decoder 232 is temporarily stored at the pixel buffer 233. The subtitle disparity information buffer 234 temporarily stores the disparity information "Subtitle disparity" of the subtitle (caption) obtained at the subtitle decoder 232.

The subtitle display control unit 235 generates bitmap data "Subtitle data" of the subtitle for the left eye display and for the right display with disparity provided, based on the bitmap data of the subtitle (caption) and the display position information and disparity information of this subtitle (caption). The subtitle bitmap data "Subtitle data" for left eye display and for right eye display thus generated are supplied to the superimposing unit 217, and respectively superimposed on the left eye image data and right eye image data.

At the set top box (STB) graphics generating unit 219, graphics data for such as OSD or applications, or EPG or the like is generated. This graphics data includes graphics bitmap data "Graphics data", and display position information "Graphics rendering position (x1, y1)" of the graphics. The graphics buffer 221 temporarily stores the graphics bitmap data "Graphics data" generated at the set top box (STB) graphics generating unit 219.

The superimposing unit 217 superimposes the graphics bitmap data "Graphics data" stored in the graphics buffer 221 onto the left eye image data and right eye image data. At this time, the graphics bitmap data "Graphics data" superimposed on each of the left eye image data and right eye image data is provided with disparity by the later-described depth control unit 220 based on disparity information corresponding to the graphics display position. In this case, in the event that the graphics bitmap data "Graphics data" shares the same pixels as the bitmap data "Subtitle data" of the subtitle, the graphics data is overwritten over the subtitle data at the superimposing unit 217.

Left eye image data with subtitles (captions) and STB graphics for left eye display superimposed is obtained from the superimposing unit 217, and also right eye image data with subtitles (captions) and STB graphics for right eye display superimposed is obtained. The left eye image data and right eye image data are supplied to the HDMI transmission unit 251.

The audio stream extracted at the demultiplexer 212 is supplied to the coded buffer 241 and temporarily stored. At the audio decoder 242, decoding processing of the audio stream stored in the coded buffer 241 is performed, and decoded audio data is obtained. This audio data is supplied to the channel mixing unit 244 via the audio buffer 243. At the channel mixing unit 244, audio data is generated for each channel to realize 5.1ch surround or the like for example as to the audio data. This audio data is supplied to the HDMI transmission unit 251.

Also, at the depth control unit 220, disparity information for each partition region of each picture in the image data stored in the disparity information buffer 218 is updated in accordance to superimposing of captions or graphics to the image. In this case, the value of disparity information (Disparity) of the partition regions (Partition) corresponding to the display position of the subtitles (captions) and the display position of the graphics is updated to the value of the disparity information (Disparity) used to provide disparity to the subtitles (captions) or graphics, for example. This updated disparity information is supplied to the HDMI transmission unit 251.

The left eye image data and right eye image data, audio data, and further disparity information (Disparity) for each partition region of each picture in the image data, are transmitted to the television receiver 300 by the HDMI transmission unit 251, by communication compliant to HDMI. Now, disparity information is inserted into information packets situated in a blanking period of the image data, which is the HDMI vendor specific InfoFrame (HDMI Vendor Specific InfoFrame) with this embodiment, and transmitted.

[Description of Television Receiver]

Returning to Fig. 1, the television receiver 300 receives the left eye image data and right eye image data, audio data, and further disparity information (Disparity) for each partition region each picture in the image data, transmitted from the set top box 200 via the HDMI cable 400.

In the event of superimposing graphics (TV graphics) on the image, the television receiver 300 uses the image data and disparity information, and graphics data, to obtain data of the left eye image and right eye image upon which the graphics has been superimposed. In this case, the television receiver 300 provides disparity to the graphics superimposed on the left eye image and right eye image, for each picture, in accordance with the display position of this graphics, and obtains data of the left eye image on which the graphics has been superimposed and of the right eye image on which the graphics has been superimposed.

By providing disparity to the graphics as described above, the graphics (TV graphics) to be superimpose-displayed on the stereoscopic image can be displayed to the near side of the object in the stereoscopic image at the display position. Accordingly, in a case of performing superimpose-display of graphics such as an OSD or application or program information EPG or the like on the image, consistency of perspective as to the objects in the image can be maintained.

[Configuration Example of Television Receiver]

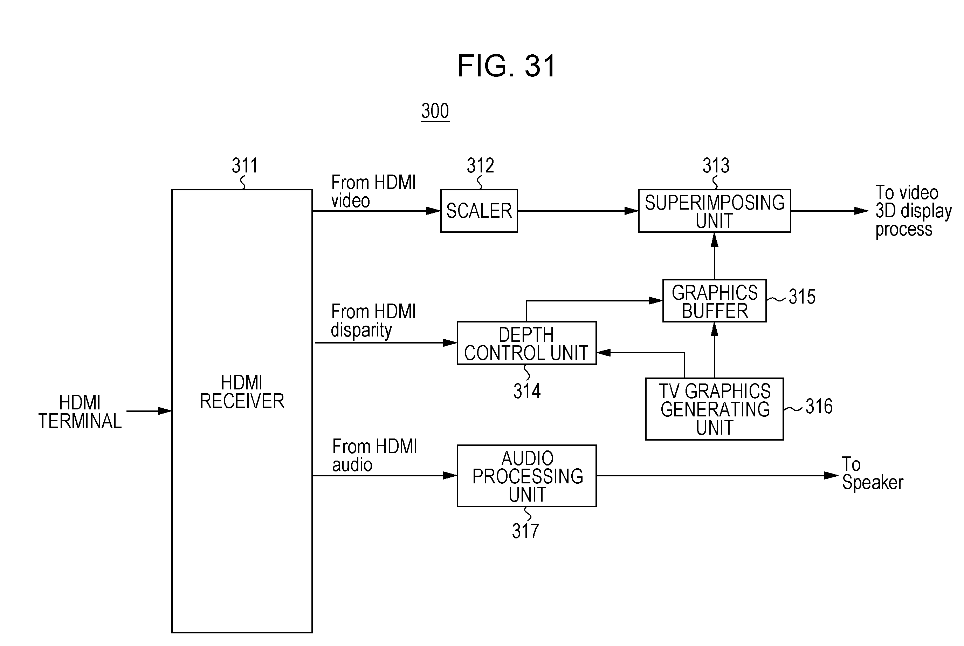

Fig. 31 illustrates a configuration example of an HDMI input system of the television receiver 300. The television receiver 300 includes an HDMI receiver 311, a scaler 312, a superimposing unit 313, a depth control unit 314, a graphics buffer 315, a television (TV) graphics generating unit 316, and an audio processing unit 317.

The HDMI receiver 311 receives the left eye image data and right eye image data configuring a stereoscopic image, and audio data, from an HDMI source device, which is the set top box 200 with this embodiment, by communication compliant to HDMI. Also, this HDMI receiver 311 receives the disparity information (Disparity) of each partition region of each picture in the image data from the set top box 200 via an HDMI interface. The HDMI receiver 311 will be described in detail later.

The scaler 312 performs scaling processing of the left eye image data and right eye image data received at the HDMI receiver 311, as necessary. For example, the scaler 312 matches the size of the left eye image data and right eye image data to the display size. The television (TV) graphics generating unit 316 generates graphics data for such as OSD or application, or EPG or the like. This graphics data includes graphics bitmap data "Graphics data" and display position information "Graphics rendering position (x1, y1)" of the graphics.

The graphics buffer 315 temporarily stores the graphics bitmap data "Graphics data" generated at the television graphics generating unit 316. The superimposing unit 313 superimposes the graphics bitmap data "Graphics data" stored in the graphics buffer 315 on each of the left eye image data and right eye image data. At this time, the graphics bitmap data "Graphics data" superimposed on each of the left eye image data and right eye image data is provided with disparity by the later-described depth control unit 314.

The depth control unit 314 provides the graphics bitmap data "Graphics data" superimposed on each of the left eye image data and right eye image data with disparity. To this end, the depth control unit 314 generates display position information "Rendering position" of the graphics for the right eye display and for the left eye display, for each picture of the image data, and performs shift control of the superimposing position of the graphics bitmap data "Graphics data" stored in the graphics buffer 315 onto the left eye image data and right eye image data.

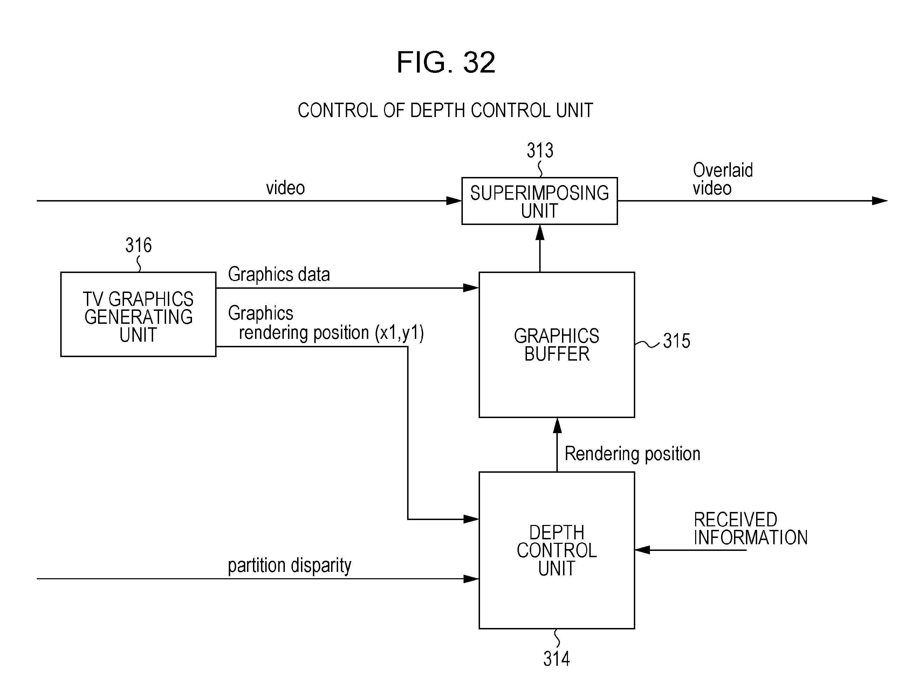

The depth control unit 314 generates the display position information "Rendering position" using the following information, as illustrated in Fig. 32. That is to say, the depth control unit 314 uses the disparity information (Disparity) of each partition region (Partition) for each picture in the image data received at the HDMI receiver 311. Also, the depth control unit 314 uses the display position information "Graphics rendering position (x1, y1)" of the graphics, generated at the television graphics generating unit 316. Also, the depth control unit 314 uses reception information indicating whether or not disparity information has been received at the HDMI receiver 311.

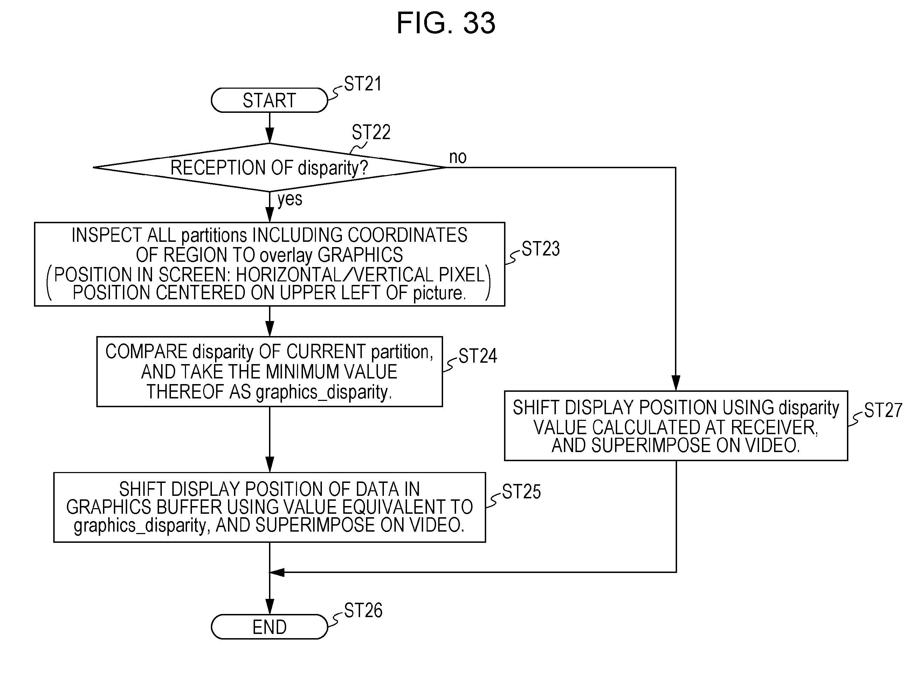

The flowchart in Fig. 33 illustrates an example of procedures for control processing of the depth control unit 314. The depth control unit 314 executes this control processing for each picture (frame) where graphics display is to be performed. In step ST21 the depth control unit 314 starts the control processing. Subsequently, in step ST22, whether or not there is reception of disparity information for graphics at the HDMI receiver 311 is judged. Note that when identification information of packet "PRTY" of a later-described HDMI Vendor Specific InfoFrame indicates that disparity information exists as information to be referred to, the HDMI receiver 311 extracts the disparity information from this packet, and prepares for use. In this case, the reception information is "Received".

In the event that there has been reception of disparity information (disparity), the depth control unit 314 goes to the processing of step ST23. In this step ST23, all partition regions (partition) including coordinates for superimposed display (overlay) of graphics are inspected. Then, in step ST24, the depth control unit 314 compares the disparity information (disparity) of the target partition regions (partition), selects a suitable value, e.g., the smallest value, and takes this as the value (graphics_disparity) for the graphics disparity information (disparity).

Next, in step ST25, the depth control unit 314 uses a value equivalent to the value (graphics_disparity) of the disparity information (disparity) for graphics, as to the graphics bitmap data "Graphics data" stored in the graphics buffer 315, so as to obtain graphics bitmap data for left eye display and for right eye display of which the display position has been shifted, and superimposes these on the left eye image data and right eye image data, respectively. After the processing of step ST25, in step ST26 the depth control unit 314 ends the control processing.

Also, in the event that there has been no reception of disparity information (disparity) in step ST22, in step ST27 the depth control unit 314 uses the value of the disparity information (disparity) calculated at the television receiver 300, as to the graphics bitmap data "Graphics data" stored in the graphics buffer 315, so as to obtain graphics bitmap data for left eye display and for right eye display of which the display position has been shifted, and superimposes these on the left eye image data and right eye image data, respectively. After the processing of step ST27, the depth control unit 314 ends the control processing at step ST26.

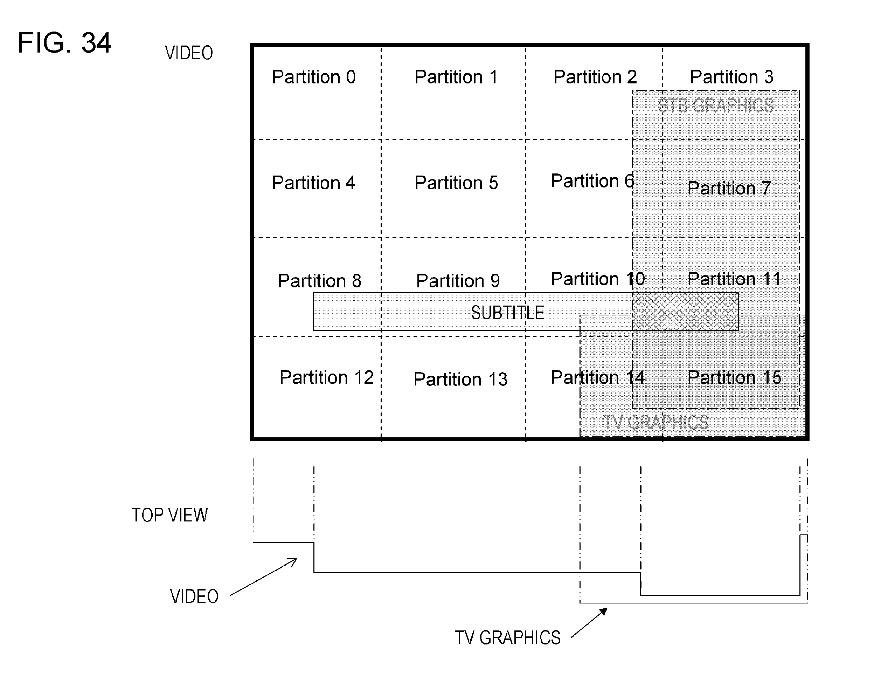

Fig. 34 illustrates an example of depth control of graphics at the television receiver 300. In this example, with regard to TV graphics, disparity is provided to the graphics for left eye display and to the graphics for right eye display, based on the smallest disparity information of the disparity information for the four partition regions to the right side (Partition 10, 11, 14, 15). As a result, the TV graphics is displayed to the near side from the image (video) object of these four partition regions. Note that in this case, the subtitle (caption) and STB graphics have already been superimposed on the image (video) at the set top box 200.

The operations of the television receiver 300 illustrated in Fig. 31 will be described in brief. The left eye image data and right eye image data, audio data, and further disparity information (Disparity) for each partition region each picture in the image data, are received from the set top box 200 by the HDMI receiver 311, by communication compliant to HDMI.

The left eye image data and right eye image data received at the HDMI receiver 311 is subjected to scaling processing at the scaler 312 as necessary, and thereafter supplied to the superimposing unit 313. At the television TV) graphics generating unit 316, graphics data for such as OSD or application, or EPG or the like, is generated. This graphics data includes the graphics bitmap data "Graphics data" and the display position information "Graphics rendering position (x1, y1)" of the graphics. The graphics data generated at the television graphics generating unit 315 is temporarily stored at the graphics buffer 315.

At the superimposing unit 313, the graphics bitmap data "Graphics data" stored in the graphics buffer 315 is superimposed on the left eye image data and right eye image data. At this time, the graphics bitmap data "Graphics data" superimposed on each of the left eye image data and right eye image data is provided with disparity based on the disparity information corresponding to the display position of the graphics, by the depth control unit 314.

At the depth control unit 314, the disparity information (Disparity) of the partition region (Partition) of each picture in the image data, received at the HDMI receiver 311, and the display position information "Graphics rendering position (x1, y1)" of the graphics generated at the television graphics generating unit 316, are used for that control.

Left eye image data with TV graphics for left eye display superimposed is obtained from the superimposing unit 313, and also right eye image data with TV graphics for right eye display superimposed is obtained. These image data are sent to a progressing unit for stereoscopic image display, and stereoscopic image display is performed

Also, the audio data of each channel received at the HDMI receiver 311 is supplied to the speaker via the audio processing unit 317 which adjusts sound quality and volume, and audio output matching the stereoscopic image display is performed.

[Configuration Example of HDMI Transmission Unit and HDMI Reception Unit]

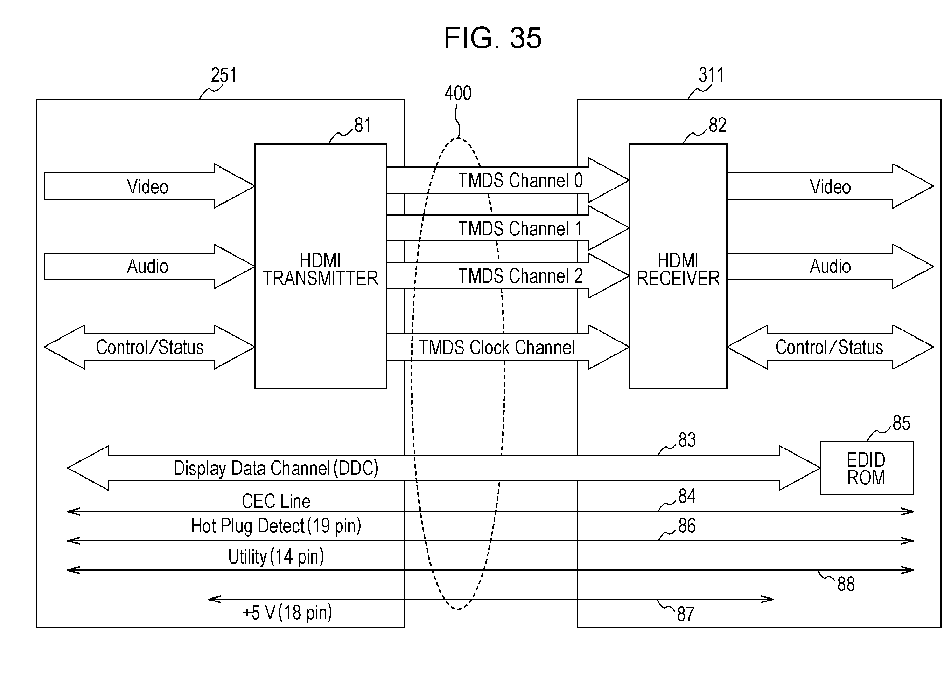

Fig. 35 illustrates a configuration example of the HDMI transmission unit 251 of the set top box 200, and the HDMI receiver 311 of the television receiver 300, in the image transmission/reception system 10 in Fig. 1.

In a valid image period (hereinafter, also referred to as active video period), the HDMI transmission unit 251 transmits differential signals corresponding to the pixel data of one screen worth of uncompressed image, one-directionally to the HDMI receiver 311, with multiple channels. Note that here, a valid image period is a period from one vertical synchronizing signal to the next vertical synchronizing signal, excluding the horizontal blanking periods and vertical blanking period. Also, during the horizontal blanking periods or vertical blanking period, the HDMI transmission unit 251 one-directionally transmits to the HDMI receiver 311 and differential signals corresponding to at least audio data accompanying the image, control data, and other auxiliary data and the like, with multiple channels.

There are the following transmission channels in the transmission channels of an HDMI system made up of the HDMI transmission unit 251 and HDMI receiver 311. That is to say, there are three TMDS channels #0 through #2, serving as transmission channels to one-directionally serially transmit pixel data and audio data from the HDMI transmission unit 251 to the HDMI receiver 311, synchronously with a pixel clock. There also is a TMDS clock channel serving as a transmission channel to transmit a pixel clock.

The HDMI transmission unit 251 has an HDMI transmitter 81. The transmitter 81 converts, for example, image data of an uncompressed image into corresponding differential signals, and one-directionally serially transmits these to the HDMI receiver 311 connected via the HDMI cable 400 over the three TMDS channels #0, #1, and #2, which are multiple channels.

Also, the transmitter 81 converts audio data accompanying the uncompressed image, and further necessary control data and other auxiliary data and the like, into corresponding differential signals, and one-directionally serially transmits these to the HDMI receiver 311 over the three TMDS channels #0, #1, and #2.

Further, the transmitter 81 transmits a pixel clock synchronized with the pixel data transmitted over the three TMDS channels #0, #1, and #2, to the HDMI receiver 311 connected via the HDMI cable 400, over a TMDS clock channel. Here, 10 bits of pixel data are transmitted between one clock of the pixel clock, at one TMDS channel #i (i = 0, 1, 2).

At the HDMI receiver 311, differential signals corresponding to pixel data, one-directionally transmitted from the HDMI transmission unit 251 over multiple channels, is received in the active video period. Also, at the HDMI receiver 311, differential signals corresponding to audio data and control data, one-directionally transmitted from the HDMI transmission unit 251 over multiple channels, is received in the horizontal blanking periods or the vertical blanking period.

That is to say, the HDMI receiver 311 has an HDMI receiver 82. This HDMI receiver 82 receives differential signals corresponding to pixel data, and differential signals corresponding to audio data and control data, transmitted one-directionally from the HDMI transmission unit 251 over the TMDS channels #0, #1, and #2. In this case, reception is performed synchronously with the pixel clock transmitted from the HDMI transmission unit 251 over the TMDS clock channel.

For transmission channels of the HDMI system, in addition to the above-described TMDS channels #0 through #2 and TMDS clock channel, there are transmission channels in the HDMI transmission channels called DDC (Display Data Channel) 83 and CEC line 84. The DDC 83 is configured of two unshown signal lines included in the HDMI cable 400. The DDC 83 is used for the HDMI transmission unit 251 to read out E-EDID (Enhanced Extended Display Identification Data) from the HDMI receiver 311.

That is to say, the HDMI receiver 311 has, in addition to the HDMI transmitter 81, EDID ROM (Read Only Memory) 85 storing the E-EDID which is capability information relating to its own capability (Configuration/capability). The HDMI transmission unit 251 reads out the E-EDID from the HDMI receiver 311 connected by the HDMI cable 400, via the DDC 83, in accordance with a request from an unshown control unit (CPU), for example.

The HDMI transmission unit 251 sends the read out E-EDID to the control unit (CPU). The control unit (CPU) can recognize the capability settings of the HDMI receiver 311 based on this E-EDID. For example, the control unit (CPU) can recognize whether or not the television receiver 300 having the HDMI receiver 311 can handle stereoscopic image data, and if so, further what sort of TMDS transmission data structures can be handled.

The CEC line 84 is made up of one unshown signal line included in the HDMI cable 400, and is used for two-way communication of control data between the HDMI transmission unit 251 and the HDMI receiver 311. This CEC line 84 makes up of control data line.

Also, a line (HPD line) 86 connected to a pin called HPD (Hot Plug Detect) is included in the HDMI cable 400. The source device can use this line 86 to detect connection of a sink device. Note that this HDP line 86 is also used as an HEAC- line making up a two-way communication path. Also included in the HDMI cable 400 is a line (power line) 87 used to supply power from the source device to the sink device. Further, included in the HDMI cable 400 is a utility line 88. This utility line 88 is also used as an HEAC+ line making up a two-way communication path.

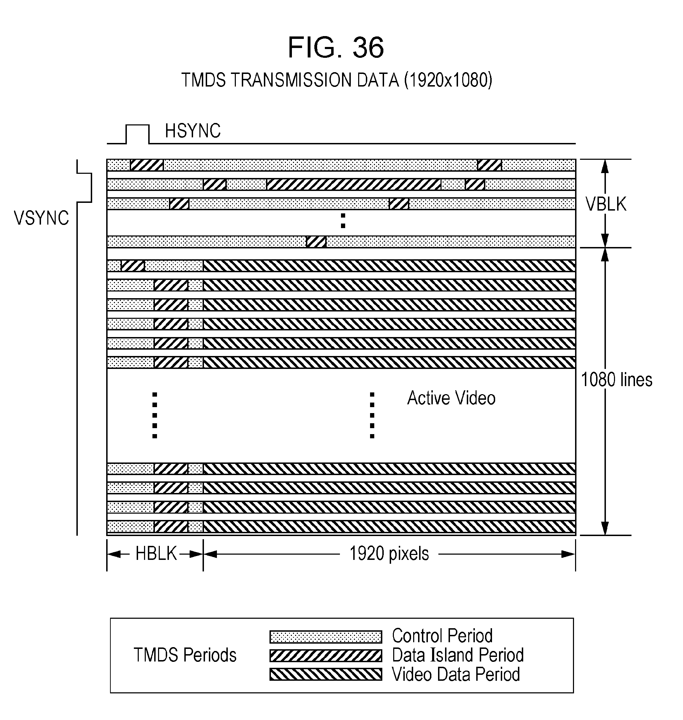

Fig. 36 illustrates a structure example of the TMDS transmission data. This Fig. 36 illustrates the periods of various types of transmission data in the event that image data with horizontal x vertical of 1920 pixels x 1080 lines is transmitted using the TMDS channels #0, #1, and #2.

With a video field (Video Field) where transmission data is transmitted using the three TMDS channels #0, #1, and #2 of the HDMI, there are three types of periods according to the type of transmission data. These three types of periods are a video data period (Video Data period), a data island period (Data Island period), and a control period (Control period).

Here, a video field period is a period from the leading edge (active edge) of a certain vertical synchronizing signal to the leading edge of the next vertical synchronizing signal. This video field period is divided into horizontal blanking periods (horizontal blanking), a vertical blanking period (vertical blanking), and an active video period (Active Video). This active video period is a period obtained by removing the horizontal blanking periods and the vertical blanking period from the video field period

The video data period is assigned to the active video period. With this video data period, the data of 1920 pixels (pixels) x 1080 lines worth of valid pixels (Active pixels) making up one uncompressed screen worth of image data is transmitted.

The data island period and control period are assigned to the horizontal blanking period and vertical blanking period. With the data island period and control period, auxiliary data (Auxiliary data) is transmitted. That is to say, the data island period is assigned to a portion of the horizontal blanking period and vertical blanking period. With this data island period, of the auxiliary data, data not relating to control, e.g., the packet of audio data, and so forth are transmitted.

The control period is assigned to another portion of the horizontal blanking period and vertical blanking period. With this control period, of the auxiliary data, data relating to control, e.g., the vertical synchronizing signal and horizontal synchronizing signal, control packet, and so forth, are transmitted.

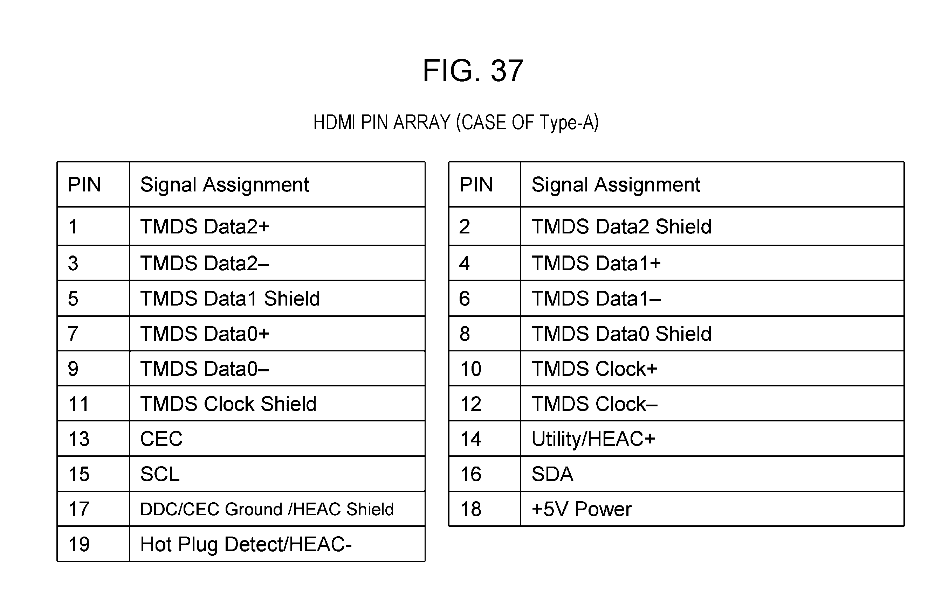

Fig. 37 illustrates an example of the pin alignment of an HDMI terminal. The pin alignment illustrated in Fig. 37 is called type A (type-A). TMDS Data #i+ and TMDS Data #i- that are the differential signals of the TMDS channel #i are transmitted by two lines that are differential lines. These two lines are connected to pins to which the TMDS Data #i+ is assigned (pins having a pin number of 1, 4, or 7), and pins to which the TMDS Data #i- is assigned (pins having a pin number of 3, 6, or 9).

Also, the CEC line 84 where a CEC signal that is data for control is transmitted is connected to a pin of which the pin number is 13. Also, a line where an SDA (Serial Data) signal such as the E-EDID or the like is transmitted is connected to a pin of which the pin number is 16. A line where an SCL (Serial Clock) signal that is a clock signal to be used for synchronization at the time of transmission/reception of the SDA signal is transmitted is connected to a pin of which the pin number is 15. The above-described DDC 83 is configured of a line where the SDA signal is transmitted, and a line where the SCL signal is transmitted.

Also, the HPD line (HEAC- line) 86 for the source device detecting connection of the sink device as described above is connected to a pin of which the pin number is 19. Also, the utility line (HEAC+ line) 88 is connected to a pin of which the pin number is 14. Also, the line 87 for supplying power as described above is connected to a pin of which the pin number is 18.

[Disparity Information Transmission/Reception Method with HDMI]

A method of transmitting/receiving disparity information (Disparity) of each partition region (Partition) for each picture in the image data with an HDMI interface will be described. For this method, a method of using an information packet disposed in a blanking period of the image data, for example HDMI vendor specific InfoFrame (VS_Info: HDMI Vendor Specific InfoFrame), may be conceived.

With this method, in VS_Info, "HDMI_Video_Format = "010"", and "3D_Meta_present = 1" are set, and "Vendor SpecificInfoFrame extension" is specified. In this case, "3D_Metadata_type" is defined as an unused "011", for example, and the disparity information (Disparity) of each partition region (Partition) is specified.

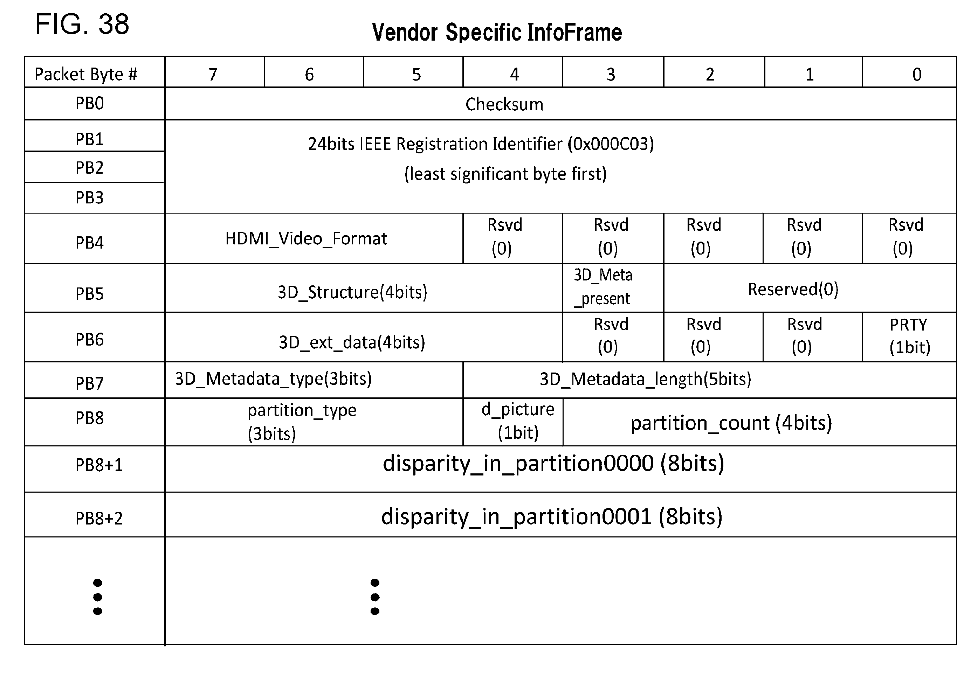

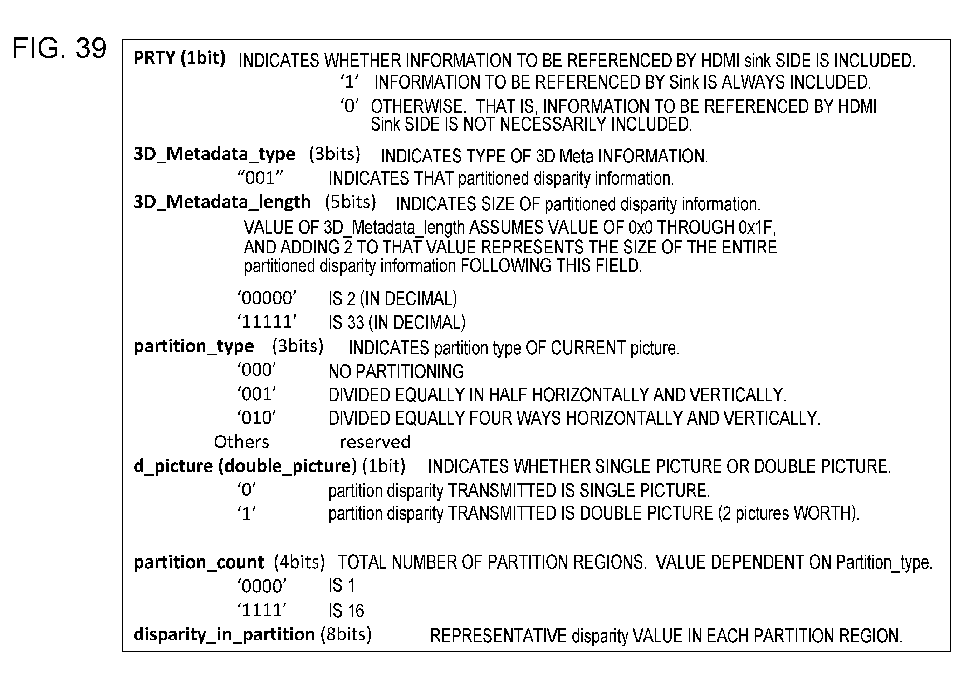

Fig. 38 illustrates a packet structure example of HDMI Vendor Specific InfoFrame. This HDMI Vendor Specific InfoFrame is defined in CEA-861-D, so detailed description will be omitted. Fig. 39 illustrates the content of primary information in the packet structure example of Fig. 38.

3-bit information "HDMI_Video_Format" indicating the type of image data is disposed from the 7th bit to the 5th bit of the 4th byte (PB4). In the event that the image data is 3D image data, the information of the three bits is "010". Also, in the event that the image data is 3D image data, 4-bit information "3D_Structure" indicating TMDS transmission data structure is disposed from the 7th bit through 4th bit of the 5th byte (PB5). For example, in the event of frame packing format, the 4-bit information is "0000".

Also, in the event that "3D_Meta_present" is disposed at the 3rd bit of the 5th byte (PB5), and Vendor Specific InfoFrame extension is specified, this one bit is set to "1". Also, "3D_Metadata_type" is disposed from the 7th bit to the 5th bit of the 7th byte (PB7). In the event of specifying disparity information (Disparity) of each partition region (Partition), the information of these three bits is an unused "001", for example.

Also, "3D_Metadata_length" is disposed from the 4th byte to the 0th byte of the 7th byte (PB7). This 5-bit information indicates the disparity information (Disparity) of each partition region (Partition). The value of this "3D_Metadata_length" assumes a value from 0x00 through 0x1F, and the value thereof plus 2 represents the overall size of the subsequent disparity information (Disparity) of this field. For example, "00000" represents 2 (in decimal), and "11111" represents 33 (in decimal).

Also, 1-bit identification information of "PRTY" is disposed at the 0th bit of the 6th byte (PB6). This identification information indicates whether or not information which the HDMI sink side should refer to, disparity information (Disparity) here, is included in VS_Info. "1" indicates that information which the HDMI sink side should refer to is included. "0" indicates that information which the HDMI sink side should refer to is not necessarily included.

By this 1-bit identification information of "PRTY" being disposed, the HDMI sink, which is the television receiver 300 in this embodiment, can determine whether or not there is information which should be referred to included in VS_Info, even without inspecting "3D_Metadata_type" and thereafter. Accordingly, with this identification information, the HDMI sink can perform extracting processing of information to be referred to from VS_Info without waste, and the processing load can be alleviated.

Also, "partition_type" is disposed from the 7th bit to the 5th bit of the 8th byte (PB8). This 3-bit information indicates the partition type of the display screen of the current picture. "000" indicates no partitioning, "001" indicates dividing equally two ways both vertically and horizontally, and "010" indicates dividing equally four ways both vertically and horizontally.

Also, 1-bit identification information of "d_picture" is disposed at the 4th bit of the 8th byte (PB8). This identification information indicates whether single picture or double picture. "0" indicates a single picture, i.e., a mode in which one picture worth of disparity information (Disparity) for each partition region (Partition) is being transmitted. "1" indicates a double picture, i.e., a mode in which two pictures worth of disparity information (Disparity) for each partition region (Partition) is being transmitted.

Also, "partition_count" is disposed from the 3rd bit through the 0th bit of the 8th byte (PB8). This 4-bit information indicates the total number of partition regions (Partition), and is a value dependent of the aforementioned "partition_type". For example, "0000" indicates a total number of "1", and "1111" indicates a total number of "16".

Moreover, disparity information (Disparity) of each partition region (Partition) for one picture or two pictures worth is sequentially disposed from the 8+1'th byte (PB8+1) and thereafter. That is to say, the 8-bit information of "disparity_in_partition" indicates representative disparity information (representative disparity value) of each partition region (Partition).

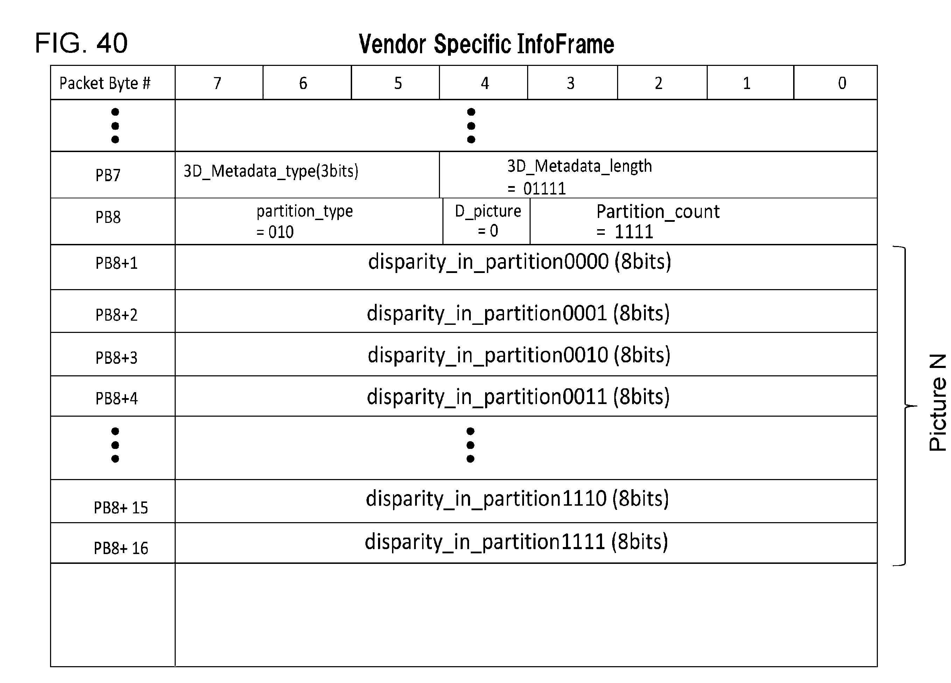

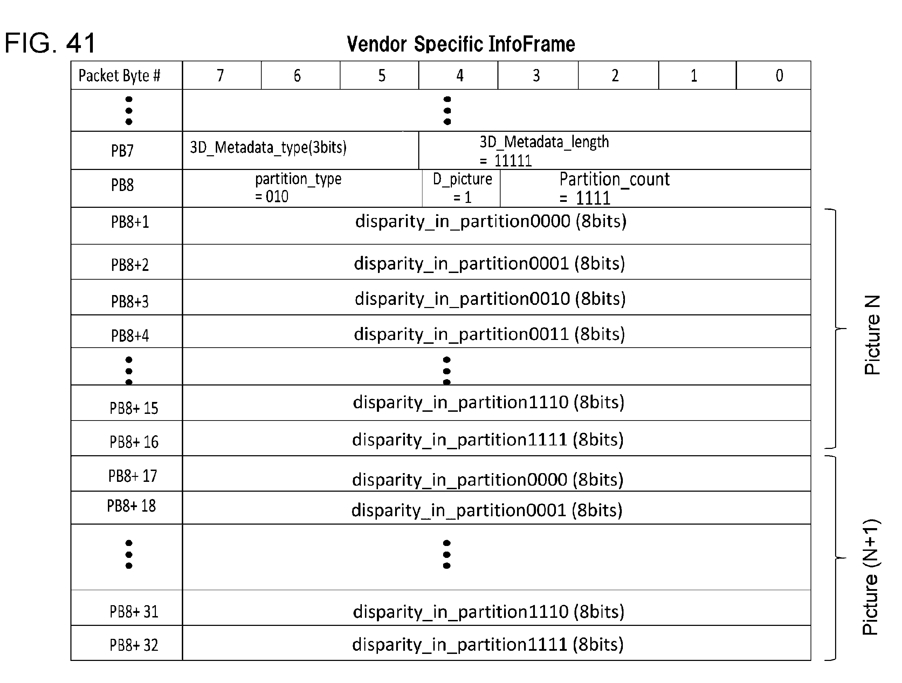

Fig. 40 illustrates a structure example of VS_Info in a case which is a single picture mode where "d_picture = 0", "partition_type = 010", and partition regions is "16". In this case, disparity information for each partition region of one picture worth is disposed from the 8+1'th byte (PB8+1) and thereafter. Also, Fig. 41 illustrates a structure example of VS_Info in a case which is a double picture mode where "d_picture = 1", "partition_type = 010", and partition regions is "16". In this case, disparity information for each partition region of two pictures worth is disposed from the 8+1'th byte (PB8+1) and thereafter.

As described above, in the event that disparity information has been inserted in the video stream in picture increments, the set top box 200 obtains one picture worth of disparity information at the timing of each picture of the image data (see Fig. 22). Also, as described above, in the event that disparity information has been inserted in the video stream in GOP increments, the set top box 200 obtains the disparity information of each picture within the GOP (disparity information set) in batch fashion at the timing of the head picture of the GOP of image data (see Fig. 23).

In either case, the set top box 200 is made to be capable of optionally selecting either mode of single picture and double picture, based on negotiation with the television receiver 300 using the CEC line 84, or settings at the EDIDROM 85 and so forth, for example. In this case, the set top box 200 can select the mode in accordance with the transmission band for transmitting disparity information for each picture, or processing capability at the set top box 200 or television receiver 300, so transmission of disparity information to the television receiver 300 can be performed favorably.

At the television receiver 300 disparity information (Disparity) of all pictures can be accurately received with transmission in either mode, based on the mode identification information of "d_picture" disposed in the VS_Info, and identification information of "PRTY" of whether or not there is reference information as described above.

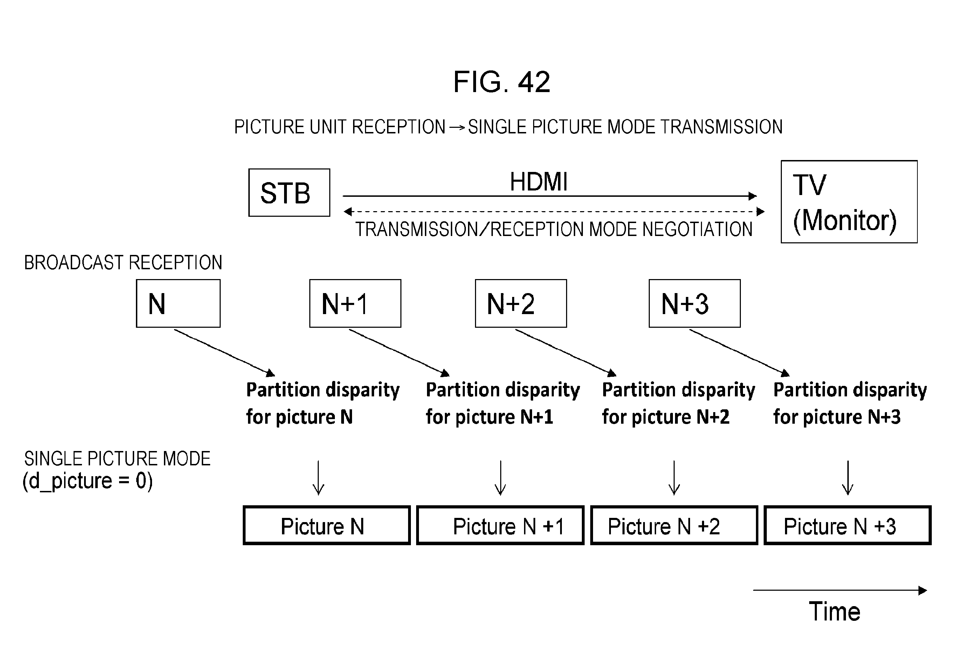

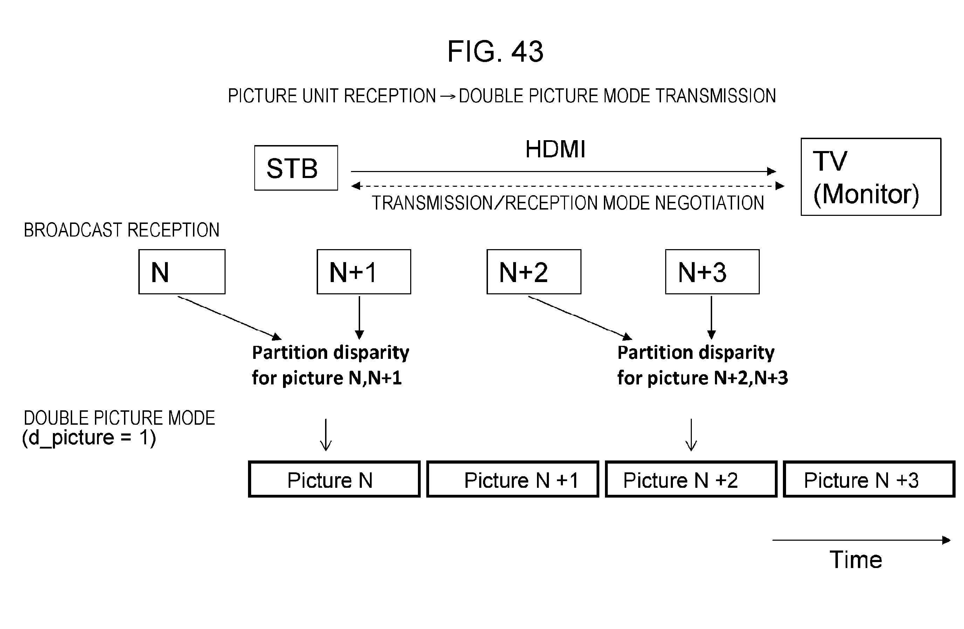

Fig. 42 schematically illustrates a case where the set top box 200 obtains disparity information of one picture worth at the timing of each picture of the image data, and sequentially transmits the disparity information of each picture to the television receiver 300 in the single picture mode. Also, Fig. 43 schematically illustrates a case where the set top box 200 obtains disparity information of one picture worth at the timing of each picture of the image data, and sequentially transmits the disparity information of each picture to the television receiver 300 in the double picture mode.

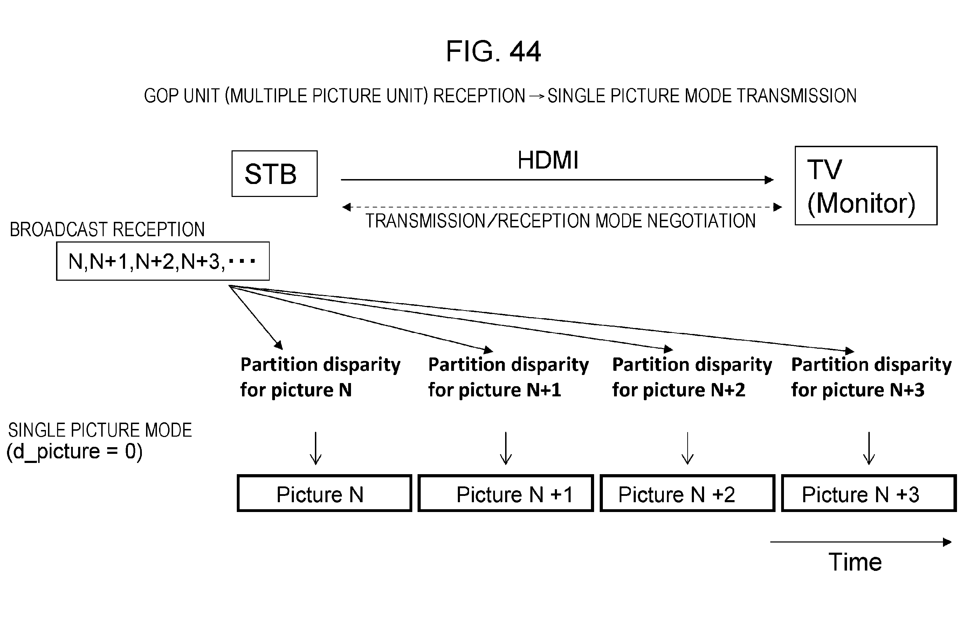

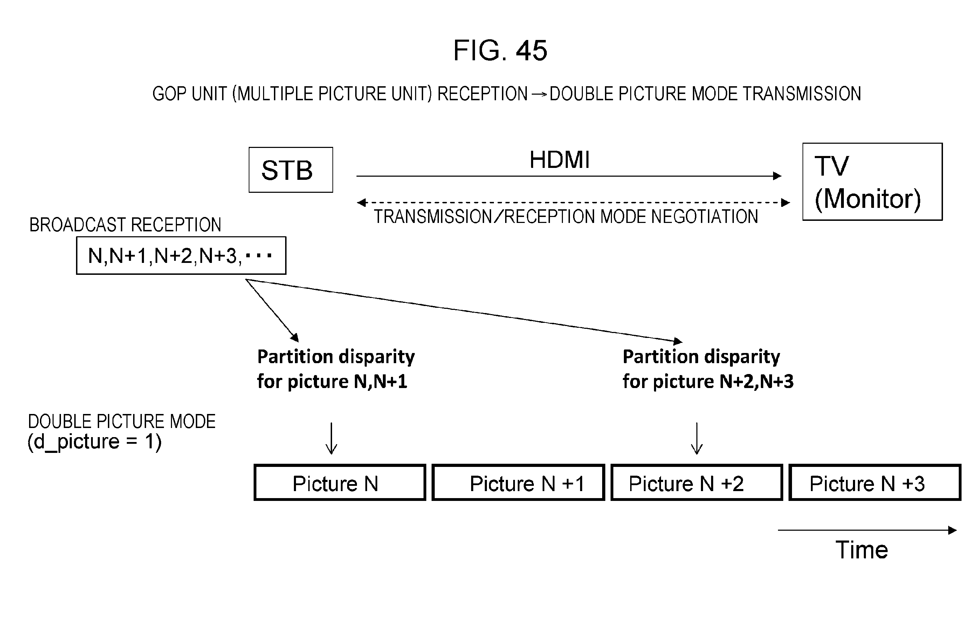

Also, Fig. 44 schematically illustrates a case where the set top box 200 obtains disparity information of each picture in a GOP of the image data in batch fashion at the head timing of the GOP, and sequentially transmits the disparity information of each picture to the television receiver 300 in the single picture mode. Also, Fig. 45 schematically illustrates a case where the set top box 200 obtains disparity information of each picture in a GOP of the image data in batch fashion at the head timing of the GOP, and sequentially transmits the disparity information of each picture to the television receiver 300 in the double picture mode.

Note that description has been made that the set top box 200 can optionally select the single picture or double picture mode. However, in the event of obtaining disparity information of each picture in a GOP in the image data in batch fashion at the head timing of the GOP, an arrangement may be made where transmission is made in the single picture mode. In this case, the disparity information of each picture within the GOP is distributed into single pictures worth, and the disparity information of each single picture worth is sequentially transmitted in picture increments (Fig. 44). In this case, even if the transmission band for transmitting disparity information for each picture is small, the disparity information for each picture can be favorably transmitted to the television receiver 300.

On the other hand, in the event that the set top box 200 can only send the VS_InfoFrame at a rate of once per two video frame cycle, or in the event that the television receiver 300 can only receive the VS_InfoFrame at a rate of once per two video frame cycle, an arrangement may be conceived where two video frames worth of disparity information is consecutively sent with one VS_InfoFrame, as in Fig. 43.

Also, an example has been illustrated above where the set top box 200 can optionally select the single picture or double picture mode. However, an arrangement may be conceived where a multiple picture mode is implemented instead of the double picture mode, with the number of pictures being optionally selectable. Also, an arrangement may be conceived where three or more modes can be selected from. In this case, the number of partition regions (partition) can be changed to a suitable number at the HDMI source (HDMI Source) side, so as to be transmittable at the given band.

As described above, with the image transmission/reception system 10 illustrated in Fig. 1, the set top box 200 correlates the left eye image data and right eye image data obtained from a video stream included in a transport stream TS, with disparity information, and transmits to the television receiver 300 serving as a monitor, by an HDMI interface. Accordingly, at the television receiver 300, depth control of graphics superimpose-displayed on a stereoscopic image can be favorably performed based on this disparity information.

Also, as described above, with the image transmission/reception system 10 illustrated in Fig. 1, in the event of superimposing processing of subtitles (captions) and graphics with disparity provided thereto being performed onto an image, the set top box 200 updates the received disparity information, and transmits the updated disparity information to the television receiver 300 serving as a monitor. Accordingly, at the television receiver 300, even in a case of superimposing processing of subtitles (captions) and graphics with disparity provided thereto at the set top box 200 being performed onto an image, depth control of graphics superimpose-displayed on a stereoscopic image can be favorably performed based on this disparity information.

Also, as described above, with the image transmission/reception system 10 illustrated in Fig. 1, depth control of graphics superimpose-displayed on a stereoscopic image is performed at the television receiver 300 serving as a monitor, based on disparity information sent from the set top box 200. In this case, the disparity information sent from the set top box 200 corresponds to each picture of the image data, and depth control of the graphics can be performed with picture (frame) precision. Also, in this case, the disparity information of each picture sent from the set top box 200 is disparity information of each partition region of the picture display screen, and depth control of graphics can be favorably performed based on the display position of the graphics.

<2. Modification>

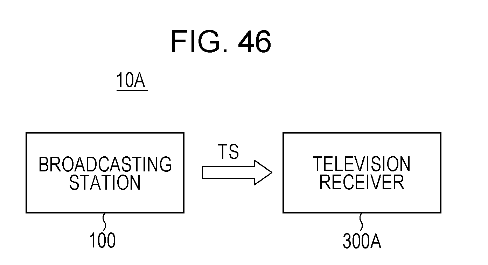

Now, the above-described embodiment has been illustrated with the image transmission/reception system 10 configured of the broadcasting station 100, the set top box 200, and the television receiver 300. However, an image transmission/reception system 10A may be conceived being configured of just the broadcasting station 100 and a television receiver 300A, as illustrated in Fig. 46.

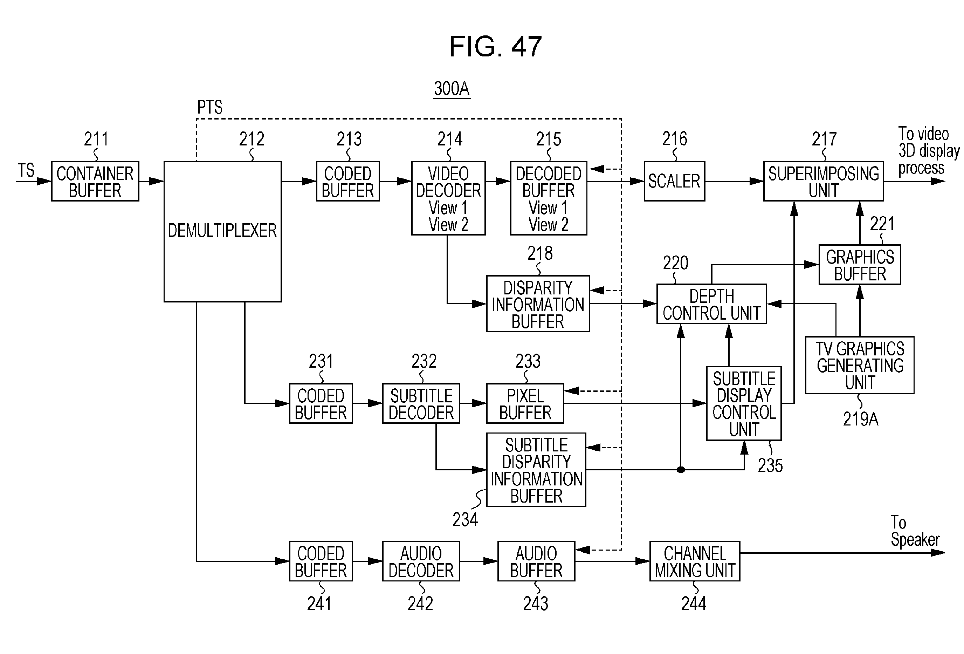

Fig. 47 illustrates a configuration example of the television receiver 300A. In Fig. 47, the parts corresponding to Fig. 25 are denoted with the same reference numerals, and detailed description will be omitted. A television (TV) graphics generating unit 219A is the same as the set top box (STB) graphics generating unit 219 of the set top box 200 in Fig. 25, generating graphics data for such as OSD or applications, or EPG or the like.

Left eye image data upon which subtitles (captions) and graphics for left eye display have been superimposed is obtained from the superimposing unit 217, and also right eye image data upon which subtitles (captions) and graphics for right eye display have been superimposed is obtained. These image data are sent to a processing unit for stereoscopic image display, and stereoscopic image display is performed. Also, at the channel mixing unit 244, audio data is generated for each channel to realize 5.1ch surround or the like for example, as to the audio data. This audio data is supplied to a speaker for example, and audio output matching the stereoscopic image display is performed.

While detailed description will be omitted, the television receiver 300A in Fig. 47 is otherwise configured the same as the set top box 200 in Fig. 25, and operates in the same manner.

Also, with the above embodiment, the set top box 200 and television receiver 300 are illustrated as being connected with an HDMI digital interface. However, it is needless to say that the present technology may be similarly applied for cases where these are connected with a digital interface similar to an HDMI digital interface (including wireless in addition to cable).

Also, with the above embodiment, as for a method to transmit disparity information from the set top box 200 to the television receiver 300, a method of using HDMI Vendor Specific InfoFrame has been described. As for others, a method of using active space (Active Space), and further transmitting through a two-directional communication path configured of the HPD line 86 (HEAC- line) and utility line 88 (HEAC+ line) may also be conceived.

Also, with the above embodiment, an example has been illustrated where disparity information is transmitted from the set top box 200 to the television receiver 300 via an HDMI interface. However, with regard to technology for transmitting disparity information via an HDMI interface in this way, it is needless to say that application may be made to combinations of other source devices and sink devices. For example, conceivable source devices include disc players for BD and DVD and so forth, and further gaming consoles, and conceivable sink devices include monitor devices, projector devices, and so forth.

Also, with the above embodiment, an example has been illustrated where the container is a transport stream (MPEG-2 TS). However, the present technology can be similarly applied to systems of a configuration where distribution is made to reception terminals using networks such as the Internet. With internet distribution, distribution is often performed with containers of MP4 or other formats. That is to say, for the container, containers of various formats apply, such as transport stream (MPEG-2 TS) employed with digital broadcasting standards, MP4 used with Internet distribution, and so forth. Also, applications, such as the method by which one service content is supplied being divided into a plurality, and each being carried out with different transmission forms, i.e., a case where one view (view) is transmitted by airwaves and another view (view) is transmitted over the Internet, are also applicable.

The present technology can also assume the following configurations.

(1) A reception device including:

an image data reception unit configured to receive a container of a predetermined format including a video stream;
wherein the video stream is obtained by left eye image data and right eye image data configuring a stereoscopic image having been encoded;
and wherein the video stream has inserted therein disparity information of the other as to one of a left eye image and right eye image, obtained corresponding to each of a predetermined number of partition regions of a picture display screen, for each picture of the image data;
and including
an information obtaining unit configured to obtain the left eye image data and right eye image data, and also disparity information for each partition region of each picture in the image data, from the video stream included in the container; and
a transmission unit configured to transmit, to an external device, the left eye image data and right eye image data obtained at the information obtaining unit, and disparity information, in a correlated manner.

(2) The reception device according to (1), wherein, upon the information obtaining unit obtaining the multiple pictures worth of disparity information in increments of each of the multiple pictures,
the transmission unit distributes the multiple pictures worth of disparity information into single pictures worth, and sequentially transmits the single pictures worth of disparity information in increments of pictures.

(3) The reception device according to (1), wherein the transmission unit is capable of selecting a first mode where single pictures worth of disparity information are sequentially transmitted in increments of single pictures, and a second mode where multiple pictures worth of disparity information are sequentially transmitted in increments of multiple pictures.

(4) The reception device according to (3), wherein the disparity information which the transmission unit transmits has added thereto identification information indicating whether transmission in the first mode or transmission in the second mode.

(5) The reception device according to any one of (1) through (4), wherein the transmission unit transmits, to the external device, identification information indicating whether or not there is transmission of disparity information, correlated to each picture in the image data.

(6) The reception device according to any one of (1) through (5), further including:

an image data processing unit configured to subject the left eye image data and right eye image data obtained at the information obtaining unit to superposing processing of captions or graphics to which disparity has been provided; and
a disparity information updating unit configured to update disparity information for each partition region of each picture in the image data obtained at the information obtaining unit, in accordance with superimposing of the captions or graphics to the image;
wherein the transmission unit transmits, to the external device, the left eye image data and right eye image data obtained at the image data processing unit, and the disparity information updated at the disparity information updating unit, in a correlated manner.

(7) The reception device according to (6), wherein the image data processing unit provides disparity to the graphics, using disparity information selected from disparity information of a predetermined number of partition regions, corresponding to a display position of the graphics obtained at the information obtaining unit.

(8) The reception device according to any one of (1) through (7), wherein the transmission unit
transmits the image data to the external device by differential signals, with a predetermined number of channels, and transmits the disparity information to the external device by inserting the disparity information into a blanking period of the image data.

(9) The reception device according to (8), wherein the transmission unit inserts the disparity information in an information packet of a predetermined format, situated in a blanking period of the image data.

(10) A reception method including:

an image data reception step to receive a container of a predetermined format including a video stream;
wherein the video stream is obtained by left eye image data and right eye image data configuring a stereoscopic image having been encoded;
and wherein the video stream has inserted therein disparity information of the other as to one of a left eye image and right eye image, obtained corresponding to each of a predetermined number of partition regions of a picture display screen, for each picture of the image data;
and including
an information obtaining step to obtain the left eye image data and right eye image data, and also disparity information for each partition region of each picture in the image data, from the video stream included in the container; and
a transmission step to transmit, to an external device, the obtained left eye image data and right eye image data in a manner correlated with the disparity information.

(11) A reception device including:

a reception unit configured to receive, from an external device, left eye image data and right eye image data configuring a stereoscopic image, and disparity information for each partition region of each picture of the image data;
a graphics data generating unit configured to generate graphics data to display graphics on the image; and
an image data processing unit configured to provide disparity to the graphics to be superimposed on the left eye image and right eye image, corresponding to the display position of the graphics, for each picture, using the received image data and disparity information, and the generated graphics data, thereby obtaining data of the left eye image upon which the graphics has been superimposed and data of the right eye image upon which the graphics has been superimposed.

(12) The reception device according to (11), wherein the image data processing unit provides disparity to the graphics, using disparity information selected from disparity information of a predetermined number of partition regions, corresponding to the display position of the graphics.

(13) A reception method including:

a reception step to receive, from an external device, left eye image data and right eye image data configuring a stereoscopic image, and disparity information for each partition region of each picture of the image data;

a graphics data generating step to generate graphics data to display graphics on the image; and

an image data processing step to provide disparity to the graphics to be superimposed on the left eye image and right eye image, corresponding to the display position of the graphics, for each picture, using the received image data and disparity information, and the generated graphics data, thereby obtaining data of the left eye image upon which the graphics has been superimposed and data of the right eye image upon which the graphics has been superimposed.

(14) An electronic device including:

a transmission unit configured to transmit image data to an external device by differential signals, with a predetermined number of channels;

wherein the transmission unit inserts, in an information packet of a predetermined format, situated in a blanking period of each picture in the image data, identification information indicating whether or not the information packet includes information which should be referred to at the external device.

(15) The electronic device according to (14), wherein the image data is left eye image data and right eye image data configuring a stereoscopic image;

and wherein the information which should be referred to is disparity information of the other as to one of a left eye image and right eye image, corresponding to the image data.

(16) An electronic device including:

a reception unit configured to receive image data from an external device by differential signals, with a predetermined number of channels;

wherein identification information has been inserted in an information packet of a predetermined format, situated in a blanking period of each picture in the image data, indicating whether or not the information packet includes information which should be referred to;

and further including

an image data processing unit configured to, in the event that the identification information indicates that the information packet includes information which should be referred to, extract the information which should be referred to from the information packet, and to process the received image data based on the information which should be referred to.

A primary feature of the present technology is to correlate left eye image data and right eye image data obtained from a video stream included in a transport stream, and disparity information of each partition region of each picture, and transmit from a set top box to a monitor (television receiver) via an HDMI interface, thereby enabling favorable depth control of graphics superimpose-displayed on stereoscopic images at the monitor, based on the display information (see Fig. 25).

Reference Signs List

| | |
|---|---|
| 10, 10A | image transmission/reception system |
| 100 | broadcasting station |
| 111L, 111R | image data output units |
| 112L, 112R | scalers |
| 113 | video encoder |
| 114 | multiplexer |
| 115 | disparity data generating unit |
| 116 | subtitle data output unit |
| 117 | subtitle encoder |

| 118 | audio data output unit |
|---|---|
| 119 | audio encoder |
| 200 | set top box |
| 211 | container buffer |
| 212 | demultiplexer |
| 213 | coded buffer |
| 214 | video decoder |
| 215 | decoded buffer |
| 216 | scaler |
| 217 | superimposing unit |
| 218 | disparity information buffer |
| 219 | set top box (STB) graphics buffer |
| 219A | television (TV) graphics buffer |
| 220 | depth control unit |
| 221 | graphics buffer |
| 231 | coded buffer |
| 232 | subtitle decoder |
| 233 | pixel buffer |
| 234 | subtitle disparity information buffer |
| 235 | subtitle display control unit |
| 241 | coded buffer |
| 242 | audio decoder |
| 243 | audio buffer |
| 244 | channel mixing unit |
| 251 | HDMI transmission unit |
| 300, 300A | television receiver |
| 311 | HDMI receiver |
| 312 | scaler |
| 313 | superimposing unit |
| 314 | depth control unit |
| 315 | graphics buffer |
| 316 | television (TV) graphics generating unit |
| 317 | audio processing unit |
| 400 | HDMI cable |

**Claims**

1.  A reception device comprising:

    an image data reception unit configured to receive a container of a predetermined format including a video stream; wherein the video stream is obtained by left eye image data and right eye image data configuring a stereoscopic image having been encoded;
    and wherein the video stream has inserted therein disparity information of the other as to one of a left eye image and right eye image, obtained corresponding to each of a predetermined number of partition regions of a picture display screen, for each picture of the image data;
    and comprising
    an information obtaining unit configured to obtain the left eye image data and right eye image data, and also disparity information for each partition region of each picture in the image data, from the video stream included in the container; and
    a transmission unit configured to transmit, to an external device, the left eye image data and right eye image data obtained at the information obtaining unit, and disparity information, in a correlated manner.

2.  The reception device according to Claim 1, wherein, upon the information obtaining unit obtaining the multiple pictures worth of disparity information in increments of each of the multiple pictures,
    the transmission unit distributes the multiple pictures worth of disparity information into single pictures worth, and sequentially transmits the single pictures worth of disparity information in increments of pictures.

3. The reception device according to Claim 1, wherein the transmission unit is capable of selecting a first mode where single pictures worth of disparity information are sequentially transmitted in increments of single pictures, and a second mode where multiple pictures worth of disparity information are sequentially transmitted in increments of multiple pictures.

4. The reception device according to Claim 3, wherein the disparity information which the transmission unit transmits has added thereto identification information indicating whether transmission in the first mode or transmission in the second mode.

5. The reception device according to Claim 1, wherein the transmission unit transmits, to the external device, identification information indicating whether or not there is transmission of disparity information, correlated to each picture in the image data.

6. The reception device according to Claim 1, further comprising:

an image data processing unit configured to subject the left eye image data and right eye image data obtained at the information obtaining unit to superposing processing of captions or graphics to which disparity has been provided; and
a disparity information updating unit configured to update disparity information for each partition region of each picture in the image data obtained at the information obtaining unit, in accordance with superimposing of the captions or graphics to the image;
wherein the transmission unit transmits, to the external device, the left eye image data and right eye image data obtained at the image data processing unit, and the disparity information updated at the disparity information updating unit, in a correlated manner.

7. The reception device according to Claim 6, wherein the image data processing unit provides disparity to the graphics, using disparity information selected from disparity information of a predetermined number of partition regions, corresponding to a display position of the graphics obtained at the information obtaining unit.

8. The reception device according to Claim 1, wherein the transmission unit
transmits the image data to the external device by differential signals, with a predetermined number of channels, and transmits the disparity information to the external device by inserting the disparity information into a blanking period of the image data.

9. The reception device according to Claim 8, wherein the transmission unit inserts the disparity information in an information packet of a predetermined format, situated in a blanking period of the image data.

10. A reception method comprising:

an image data reception step to receive a container of a predetermined format including a video stream;
wherein the video stream is obtained by left eye image data and right eye image data configuring a stereoscopic image having been encoded;
and wherein the video stream has inserted therein disparity information of the other as to one of a left eye image and right eye image, obtained corresponding to each of a predetermined number of partition regions of a picture display screen, for each picture of the image data;
and comprising
an information obtaining step to obtain the left eye image data and right eye image data, and also disparity information for each partition region of each picture in the image data, from the video stream included in the container; and
a transmission step to transmit, to an external device, the obtained left eye image data and right eye image data in a manner correlated with the disparity information.

11. A reception device comprising:

a reception unit configured to receive, from an external device, left eye image data and right eye image data configuring a stereoscopic image, and disparity information for each partition region of each picture of the image data;
a graphics data generating unit configured to generate graphics data to display graphics on the image; and

an image data processing unit configured to provide disparity to the graphics to be superimposed on the left eye image and right eye image, corresponding to the display position of the graphics, for each picture, using the received image data and disparity information, and the generated graphics data, thereby obtaining data of the left eye image upon which the graphics has been superimposed and data of the right eye image upon which the graphics has been superimposed.

12. The reception device according to Claim 11, wherein the image data processing unit provides disparity to the graphics, using disparity information selected from disparity information of a predetermined number of partition regions, corresponding to the display position of the graphics.

13. A reception method comprising:

a reception step to receive, from an external device, left eye image data and right eye image data configuring a stereoscopic image, and disparity information for each partition region of each picture of the image data;
a graphics data generating step to generate graphics data to display graphics on the image; and
an image data processing step to provide disparity to the graphics to be superimposed on the left eye image and right eye image, corresponding to the display position of the graphics, for each picture, using the received image data and disparity information, and the generated graphics data, thereby obtaining data of the left eye image upon which the graphics has been superimposed and data of the right eye image upon which the graphics has been superimposed.

14. An electronic device comprising:

a transmission unit configured to transmit image data to an external device by differential signals, with a predetermined number of channels;
wherein the transmission unit inserts, in an information packet of a predetermined format, situated in a blanking period of each picture in the image data, identification information indicating whether or not the information packet includes information which should be referred to at the external device.

15. The electronic device according to Claim 14, wherein the image data is left eye image data and right eye image data configuring a stereoscopic image;
and wherein the information which should be referred to is disparity information of the other as to one of a left eye image and right eye image, corresponding to the image data.

16. An electronic device comprising:

a reception unit configured to receive image data from an external device by differential signals, with a predetermined number of channels;
wherein identification information has been inserted in an information packet of a predetermined format, situated in a blanking period of each picture in the image data, indicating whether or not the information packet includes information which should be referred to;
and further comprising
an image data processing unit configured to, in the event that the identification information indicates that the information packet includes information which should be referred to, extract the information which should be referred to from the information packet, and to process the received image data based on the information which should be referred to.

# FIG. 1

<u>10</u>

# FIG. 2

DISPARITY INFORMATION (EACH BLOCK)

# FIG. 3

Disparity N-th Block  DPn

$$DPn = min ( \; \Sigma \; abs( \; differ \; (Dj - Di)))$$

BLOCKS

Left- Viewdata picture

Right-Viewdata picture

EP 2 675 174 A1

# FIG. 4

## DOWNSIZING PROCESSING

(a) Block

(b) Block, Group of Block

(c) Partition, Group of Block

(d) Picture, Partition

# FIG. 5

DETAILED EXAMPLE OF PARTITIONING OF PICTURE DISPLAY SCREEN

| | |
|---|---|
| Partition A | Partition B |
| Partition C | Partition D |

1080

1088

544

544

1 picture

EP 2 675 174 A1

# FIG. 6

Disparity data
To each partition
PO TO P15
(DO TO D15)

Frame

partition0

D0

partition1

partition2

Display
screen

partition3

D3

D9

partition9

D15

partition15

Service, or program sequence

Time

EP 2 675 174 A1

# FIG. 7

(a) SYNCHRONIZE WITH ENCODING OF PICTURE

IMAGE DATA
DISPARITY INFORMATION
TIME

(b) SYNCHRONIZE WITH I PICTURE OR GOP OF ENCODED VIDEO

IMAGE DATA
DISPARITY INFORMATION
TIME

(c) SYNCHRONIZE WITH SCENE OF VIDEO

Scene0   Scene1

IMAGE DATA
DISPARITY INFORMATION
TIME

# FIG. 8

EP 2 675 174 A1

# FIG. 9

```
┌─────────────────────────────────┐
│        Transport Stream         │
└─────────────────────────────────┘
    │          │              │
  ┌─────┐   ┌─────┐
  │ PMT │   │ EIT │
  └─────┘   └─────┘
    │          │
    │    ┌ ─ ─ ─ ─ ─ ─ ─ ─ ─ ─ ─ ─ ─ ─ ─ ─ ┐
    │      Graphics_depth_info_descriptor
    │    └ ─ ─ ─ ─ ─ ─ ─ ─ ─ ─ ─ ─ ─ ─ ─ ─ ┘
    │
  ┌─────────────────┐
  │  video ES loop  │
  └─────────────────┘
    │
  ┌──────────────────────────────┐
  │ PID1   or PID2               │
  ├──────────────────────────────┤
  │ graphics_depth_info_descriptor│
  │ OR                           │
  │ AVC_video descriptor         │
  │ OR                           │
  │ MVC_extension descriptor     │
  └──────────────────────────────┘
```

| PID1: video PES1 |
| --- |

| depth_information_for_graphics |
| --- |

| PID2:  video  PES2 |
| --- |

| depth_information_for_graphics |
| --- |

| PID3:  subtitle  PES3 |
| --- |

| disparity for subtitle |
| --- |

| PID4:  audio  PES4 |
| --- |

EP 2 675 174 A1

# FIG. 10

AVC video descriptor

(a)

| Syntax | No. of bits | Mnemonic |
|---|---|---|
| AVC_video_descriptor() { | | |
| descriptor_tag | 8 | uimsbf |
| descriptor_length | 8 | uimsbf |
| profile_idc | 8 | uimsbf |
| constraint_set0_flag | 1 | bslbf |
| constraint_set1_flag | 1 | bslbf |
| constraint_set2_flag | 1 | bslbf |
| constraint_set3_flag | 1 | bslbf |
| constraint_set4_flag | 1 | bslbf |
| constraint_set5_flag | 1 | bslbf |
| AVC_compatible_flags | 2 | bslbf |
| level_idc | 8 | uimsbf |
| AVC_still_present | 1 | bslbf |
| AVC_24_hour_picture_flag | 1 | bslbf |
| Frame_Packing_SEI_not_present_flag | 1 | bslbf |
| graphics_depth_info_not_existed_flag | 1 | bslbf |
| reserved | 4 | bslbf |
| } | | |

Semantics

(b)

graphics_depth_info_not_existed_flag (1)
        Indicating if graphics_depth information is existed in video stream.
    '0'        graphics_depth information is encoded in the corresponding video stream.
    '1'        graphics_depth information is not encoded in the corresponding video stream.

EP 2 675 174 A1

# FIG. 11

## MVC extension descriptor

(a)

| Syntax | No. Of bits | Mnemonic |
|---|---|---|
| MVC_extension_descriptor() { | | |
|     descriptor_tag | 8 | uimsbf |
|     descriptor_length | 8 | uimsbf |
|     average_bit_rate | 16 | uimsbf |
|     maximum_bitrate | 16 | uimsbf |
|     reserved | 4 | bslbf |
|     view order index_start | 10 | bslbf |
|     view order index_end | 10 | bslbf |
|     temporal_id_start | 3 | bslbf |
|     temporal_id_end | 3 | bslbf |
|     no_sei_nal_unit_present | 1 | bslbf |
|     graphics_depth_info_not_existed_flag | 1 | bslbf |
| } | | |

Semantics

(b)

| graphics_depth_info_not_existed_flag (1) |
|---|
|     Indicating if graphics_depth information is existed in video stream.<br>    '0'      graphics_depth information is encoded in the corresponding video stream.<br>    '1'      graphics_depth information is not encoded in the corresponding video stream. |

EP 2 675 174 A1

# FIG. 12

graphics_depth_info descriptor

(a)

| Syntax | No. of Bits | Format |
|---|---|---|
| graphics_depth_info descriptor() { | | |
|    descriptor_tag | 8 | uimslbf |
|    descriptor_length | 8 | uimslbf |
|    graphics_depth_info_not_existed_flag | 1 | bslbf |
|    reserved | 7 | '0x7f' |
| } | | |

(b)

graphics_depth_info_not_existed_flag (1)
      Indicating if graphics_depth information is existed in video stream.
    '0'      graphics_depth information is encoded in the corresponding video stream.
    '1'      graphics_depth information is not encoded in the corresponding video stream.

EP 2 675 174 A1

# FIG. 13

DATA STRUCTURE OF ACCESS UNIT

ACCESS UNIT AT HEAD OF GOP

| AU Delimiter (ONE) | SPS (ONE) | PPS (ONE) | SEIs | Slices(Primary Coded Picture) (ONE OR MORE) | Filler data (ONE) | End of sequence (ONE) |
|---|---|---|---|---|---|---|

(a)

| Buffering period SEI message (ONE) | Recovery point SEI message (ESSENTIAL ONLY IN CASE OF open GOP, ONE) | Picture timing SEI message (ONE) | Pan-scan rectangle SEI message (ONE) | Decoded reference Picture marking SEI message (ONE) | depth_information _for_ graphics SEI message (ONE) |
|---|---|---|---|---|---|

ACCESS UNIT AT OTHER THAN HEAD OF GOP

| AU Delimiter (ONE) | PPS (ONE) | SEIs | Slices(Primary Coded Picture) (ONE OR MORE) | Filler data (ONE) | End of sequence (ONE) |
|---|---|---|---|---|---|

(b)

| Picture timing SEI message (ONE) | Pan-scan rectangle SEI message (ONE) | Decoded reference Picture marking SEI message (ONE) | depth_information _for_ graphics SEI message (ONE) |
|---|---|---|---|

☐ : ESSENTIAL

⌐ ¬ : NONESSENTIAL

EP 2 675 174 A1

## FIG. 14

(a)

| Syntax | No. of Bits | Format |
|---|---|---|
| user_data_unregistered (size) { | | |
| uuid_iso_iec_11578 | 128 | uimslbf |
| for( i = 16; i < payloadSize; i++ ) | | |
| **user_data_payload_byte** | 8 | bslbf |
| } | | |

(b)

| Syntax | No. of Bits | Format |
|---|---|---|
| depth_information_for_graphics_data ( ) { | | |
| userdata_id | 16 | uimslbf |
| depth_information_for_graphics _length | 8 | bslbf |
| depth_information_for_graphics ( ) | | |
| } | | |

EP 2 675 174 A1

## FIG. 15

| Syntax | No. of Bits | Format |
|---|---|---|
| depth_information_for_graphics () { | | |
|     partition_type | 3 | bslbf |
|     reserved | 1 | 1 |
|     partition_count | 4 | bslbf |
|     for ( partition = 0 ;  partition < partition_count ; partition++) { | | |
|         disparity_in_partition | 8 | tcimsbf |
|     } | | |
| } | | |

## FIG. 16

partition_type  (3)
       INDICATES PARTITIONING TYPE OF SCREEN.
      '000'     NO PARTITIONING
      '001'     DIVIDED EQUALLY IN HALF HORIZONTALLY AND VERTICALLY.
      '010'     DIVIDED EQUALLY FOUR WAYS HORIZONTALLY AND VERTICALLY.
     Others     reserved

partition_count  (4)
      TOTAL NUMBER OF PARTITION REGIONS.  VALUE DEPENDENT ON Partition_type.

disparity_in_partition  (8)
      REPRESENTATIVE disparity VALUE IN EACH PARTITION REGION.
      OFTEN MINIMAL VALUE OF disparity OF CURRENT REGION.

# FIG. 17

EXAMPLE OF PARTITIONING OF PICTURE DISPLAY SCREEN

(a) Type=000

| partition<br>0000 |
|---|

(b) Type=001

| partition<br>0000 | partition<br>0001 |
|---|---|
| partition<br>0010 | partition<br>0011 |

(c) Type=010

| partition<br>0000 | partition<br>0001 | partition<br>0010 | partition<br>0011 |
|---|---|---|---|
| partition<br>0100 | partition<br>0101 | partition<br>0110 | partition<br>0111 |
| partition<br>1000 | partition<br>1001 | partition<br>1010 | partition<br>1011 |
| partition<br>1100 | partition<br>1101 | partition<br>1110 | partition<br>1111 |

EP 2 675 174 A1

## FIG. 18

| Syntax | No. of Bits | Format |
|---|---|---|
| depth_information_for_graphics () { | | |
|    partition_type | 3 | bslbf |
|   reserved | 1 | 1 |
|    partition_count | 4 | bslbf |
|   reserved | 2 | 11 |
|   picture_count | 6 | bslbf |
|   for (picture = 0 ; picture < picture_count ; picture++){ | | |
|     for ( partition = 0 ;  partition < partition_count ; partition++)  { | | |
|       disparity_in_partition | 8 | tcimsbf |
|     } | | |
|   } | | |
| } | | |

EP 2 675 174 A1

## FIG. 19

partition_type  (3)
>INDICATES PARTITIONING TYPE OF SCREEN.
>'000'  NO PARTITIONING
>'001'  DIVIDED EQUALLY IN HALF HORIZONTALLY AND VERTICALLY.
>'010'  DIVIDED EQUALLY FOUR WAYS HORIZONTALLY AND VERTICALLY.
>Others  reserved

partition_count  (4)
>TOTAL NUMBER OF PARTITION REGIONS.  VALUE DEPENDENT ON Partition_type.

picture_count (6)
>INDICATES NUMBER OF pictures IN CASE OF ENCODING MULTIPLE pictures IN BATCH FASHION.

disparity_in_partition  (8)
>REPRESENTATIVE disparity VALUE IN EACH PARTITION REGION.
>OFTEN MINIMAL VALUE OF disparity OF CURRENT REGION.

EP 2 675 174 A1

# FIG. 20

(a)
```
user_data() {
        user_data_start_code                                        32
         depth_information_ for_ graphics_data_identifier           32
        while( nextbits() != '0000 0000 0000 0000 0000 0001' ) {
                        depth_information_ for_ graphics_data()
        }
        next_start_code()
}
```

(b)

| Syntax | No. of Bits | Identifier |
|---|---|---|
| depth_information_ for_ graphics_data() {<br>        depth_information_ for_ graphics_Length<br>        depth_information_ for_ graphics ()<br>} | 8 | uimsbf |

EP 2 675 174 A1

# FIG. 21

DISPLAY GRAPHICS

FAR DIRECTION

DISPARITY INFORMATION (Disparity)

DISPARITY PLUS VALUE

DISPARITY MINUS VALUE

SCREEN

NEAR DIRECTION

○ FOR RIGHT EYE DISPLAY

● FOR LEFT EYE DISPLAY

DISPLAY GRAPHICS

IMAGE

LEFT EYE      RIGHT EYE

A B C

GRAPHICS

EP 2 675 174 A1

# FIG. 22

IMAGE DATA

DISPARITY
INFORMATION

GRAPHICS

EP 2 675 174 A1

# FIG. 23

IMAGE DATA

DISPARITY
INFORMATION

Disparity
Set

Disparity
Set

Disparity
Set

GRAPHICS

# FIG. 24

(a) Side View

BACKGROUND

MIDRANGE VIEW OBJECT

CAPTION

GRAPHICS

OSD
Menu
Menu
Menu

Subtitle

CLOSEUP VIEW OBJECT

(b) Top View

BACKGROUND

MONITOR POSITION

MIDRANGE VIEW OBJECT

CAPTION

CLOSEUP VIEW OBJECT

GRAPHICS

EP 2 675 174 A1

# FIG. 25

# FIG. 26

CONTROL OF DEPTH CONTROL UNIT

EP 2 675 174 A1

FIG. 27

START — ST1

INSERTION OF disparity FOR GRAPHICS? — ST2

no → (to ST12)

yes ↓

INSPECT ALL partitions INCLUDING COORDINATES OF REGION TO overlay GRAPHICS
(POSITION IN SCREEN: HORIZONTAL/VERTICAL PIXEL POSITION CENTERED ON UPPER LEFT OF picture.) — ST3

COMPARE disparity OF CURRENT partition, AND TAKE THE MINIMUM VALUE THEREOF AS graphics_disparity. — ST4

IS THERE Subtitle stream HAVING disparity? — ST5

no → SHIFT DISPLAY POSITION USING graphics_ disparity OR disparity VALUE CALCULATED AT RECEIVER, AND SUPERIMPOSE ON VIDEO. — ST12 → (2)

yes ↓

COMPARE disparity VALUE OF Subtitle (subtitle_disparity) WITH disparity VALUE FOR GRAPHICS (graphics_disparity). — ST6 → (1)

# FIG. 28

```
        ( 1 )
          │
          ▼
        ╱ ST7 ╲
   ╱ subtitle_disparity ╲ ──── no ────────────────┐
   ╲ >graphics_disparity? ╱                        │
        ╲       ╱                                   │
          │ yes                                     │
          ▼  ST8                                    ▼  ST11
┌──────────────────────────────┐      ┌──────────────────────────────┐
│ SHIFT DISPLAY POSITION OF     │      │ MAKE DATA IN GRAPHICS BUFFER  │
│ DATA IN GRAPHICS BUFFER USING │      │ TO BE A VALUE SMALLER THAN    │
│ VALUE EQUIVALENT TO           │      │ subtitle_disparity, AND THEN  │
│ graphics_disparity, AND       │      │ SHIFT DISPLAY POSITION AND    │
│ SUPERIMPOSE ON VIDEO.         │      │ SUPERIMPOSE ON VIDEO.         │
└──────────────────────────────┘      └──────────────────────────────┘
   ( 2 )       │                                    │
          ◄────┴────────────────────────────────────┘
               ▼  ST9
┌──────────────────────────────┐
│ UPDATE disparity VALUE OF     │
│ partition EQUIVALENT TO       │
│ SCREEN POSITION WHERE SUBTITLE│
│ OR GRAPHICS IS SUPERIMPOSED.  │
└──────────────────────────────┘
               │
               ▼
         ( END )  ST10
```

EP 2 675 174 A1

## FIG. 29

VIDEO

| Partition 0 | Partition 1 | Partition 2 | Partition 3 |
|---|---|---|---|
| | | | GRAPHICS |
| Partition 4 | Partition 5 | Partition 6 | Partition 7 |
| Partition 8 | Partition 9 | Partition 10 | Partition 11 |
| Partition 12 | Partition 13 | Partition 14 | Partition 15 |

TOP VIEW

VIDEO

GRAPHICS

## FIG. 30

VIDEO

| Partition 0 | Partition 1 | Partition 2 | Partition 3 |
| Partition 4 | Partition 5 | Partition 6 | Partition 7 |
| Partition 8 | Partition 9 | Partition 10 | Partition 11 |
| Partition 12 | Partition 13 | Partition 14 | Partition 15 |

GRAPHICS

SUBTITLE

TOP VIEW

VIDEO

SUBTITLE

GRAPHICS

EP 2 675 174 A1

# FIG. 31

<u>300</u>

# FIG. 32

CONTROL OF DEPTH CONTROL UNIT

EP 2 675 174 A1

# FIG. 33

START — ST21

↓

RECEPTION OF disparity? — ST22

→ no

↓ yes

INSPECT ALL partitions INCLUDING COORDINATES OF REGION TO overlay GRAPHICS (POSITION IN SCREEN: HORIZONTAL/VERTICAL PIXEL POSITION CENTERED ON UPPER LEFT OF picture. — ST23

↓

COMPARE disparity OF CURRENT partition, AND TAKE THE MINIMUM VALUE THEREOF AS graphics_disparity. — ST24

↓

SHIFT DISPLAY POSITION OF DATA IN GRAPHICS BUFFER USING VALUE EQUIVALENT TO graphics_disparity, AND SUPERIMPOSE ON VIDEO. — ST25

SHIFT DISPLAY POSITION USING disparity VALUE CALCULATED AT RECEIVER, AND SUPERIMPOSE ON VIDEO. — ST27

↓

END — ST26

EP 2 675 174 A1

FIG. 34

VIDEO

| Partition 0 | Partition 1 | Partition 2 | Partition 3 |
|---|---|---|---|
| Partition 4 | Partition 5 | Partition 6 | Partition 7 |
| Partition 8 | Partition 9 | Partition 10 | Partition 11 |
| Partition 12 | Partition 13 | Partition 14 | Partition 15 |

STB GRAPHICS

SUBTITLE

TV GRAPHICS

TOP VIEW

VIDEO

TV GRAPHICS

# FIG. 35

Video → [HDMI TRANSMITTER (81)] → TMDS Channel 0 → [HDMI RECEIVER (82)] → Video
Audio → TMDS Channel 1 → Audio
Control/Status ↔ TMDS Channel 2
TMDS Clock Channel
Control/Status

Display Data Channel (DDC) (83) → EDID ROM (85)
CEC Line (84)
Hot Plug Detect (19 pin) (86)
Utility (14 pin) (88)
+5 V (18 pin) (87)

251   400   311

EP 2 675 174 A1

# FIG. 36

## TMDS TRANSMISSION DATA (1920x1080)

TMDS Periods

| | |
|---|---|
| ░░░░░ | Control Period |
| ▨▨▨▨ | Data Island Period |
| ▧▧▧▧ | Video Data Period |

# FIG. 37

HDMI PIN ARRAY (CASE OF Type-A)

| PIN | Signal Assignment |
|-----|-------------------|
| 1 | TMDS Data2+ |
| 3 | TMDS Data2– |
| 5 | TMDS Data1 Shield |
| 7 | TMDS Data0+ |
| 9 | TMDS Data0– |
| 11 | TMDS Clock Shield |
| 13 | CEC |
| 15 | SCL |
| 17 | DDC/CEC Ground /HEAC Shield |
| 19 | Hot Plug Detect/HEAC- |

| PIN | Signal Assignment |
|-----|-------------------|
| 2 | TMDS Data2 Shield |
| 4 | TMDS Data1+ |
| 6 | TMDS Data1– |
| 8 | TMDS Data0 Shield |
| 10 | TMDS Clock+ |
| 12 | TMDS Clock– |
| 14 | Utility/HEAC+ |
| 16 | SDA |
| 18 | +5V Power |

EP 2 675 174 A1

## FIG. 38

**Vendor Specific InfoFrame**

| Packet Byte # | 7 | 6 | 5 | 4 | 3 | 2 | 1 | 0 |
|---|---|---|---|---|---|---|---|---|
| PB0 | Checksum | | | | | | | |
| PB1 | 24bits IEEE Registration Identifier (0x000C03) (least significant byte first) | | | | | | | |
| PB2 | | | | | | | | |
| PB3 | | | | | | | | |
| PB4 | HDMI_Video_Format | | | Rsvd (0) | Rsvd (0) | Rsvd (0) | Rsvd (0) | Rsvd (0) |
| PB5 | 3D_Structure(4bits) | | | | 3D_Meta _present | Reserved(0) | | |
| PB6 | 3D_ext_data(4bits) | | | | Rsvd (0) | Rsvd (0) | Rsvd (0) | PRTY (1bit) |
| PB7 | 3D_Metadata_type(3bits) | | | 3D_Metadata_length(5bits) | | | | |
| PB8 | partition_type (3bits) | | | d_picture (1bit) | partition_count (4bits) | | | |
| PB8+1 | disparity_in_partition0000 (8bits) | | | | | | | |
| PB8+2 | disparity_in_partition0001 (8bits) | | | | | | | |
| ⋮ | ⋮ | | | | | | | |

EP 2 675 174 A1

**FIG. 39**

**PRTY (1bit)** INDICATES WHETHER INFORMATION TO BE REFERENCED BY HDMI sink SIDE IS INCLUDED.
'1' INFORMATION TO BE REFERENCED BY Sink IS ALWAYS INCLUDED.
'0' OTHERWISE. THAT IS, INFORMATION TO BE REFERENCED BY HDMI Sink SIDE IS NOT NECESSARILY INCLUDED.

**3D_Metadata_type** (3bits) INDICATES TYPE OF 3D Meta INFORMATION.
"001" INDICATES THAT partitioned disparity information.

**3D_Metadata_length** (5bits) INDICATES SIZE OF partitioned disparity information.
VALUE OF 3D_Metadata_length ASSUMES VALUE OF 0x0 THROUGH 0x1F, AND ADDING 2 TO THAT VALUE REPRESENTS THE SIZE OF THE ENTIRE partitioned disparity information FOLLOWING THIS FIELD.

'00000' IS 2 (IN DECIMAL)
'11111' IS 33 (IN DECIMAL)

**partition_type** (3bits) INDICATES partition type OF CURRENT picture.
'000' NO PARTITIONING
'001' DIVIDED EQUALLY IN HALF HORIZONTALLY AND VERTICALLY.
'010' DIVIDED EQUALLY FOUR WAYS HORIZONTALLY AND VERTICALLY.
Others reserved

**d_picture (double_picture)** (1bit) INDICATES WHETHER SINGLE PICTURE OR DOUBLE PICTURE.
'0' partition disparity TRANSMITTED IS SINGLE PICTURE.
'1' partition disparity TRANSMITTED IS DOUBLE PICTURE (2 pictures WORTH).

**partition_count** (4bits) TOTAL NUMBER OF PARTITION REGIONS. VALUE DEPENDENT ON Partition_type.
'0000' IS 1
'1111' IS 16

**disparity_in_partition** (8bits) REPRESENTATIVE disparity VALUE IN EACH PARTITION REGION.

EP 2 675 174 A1

# FIG. 40

## Vendor Specific InfoFrame

| Packet Byte # | 7 | 6 | 5 | 4 | 3 | 2 | 1 | 0 |
|---|---|---|---|---|---|---|---|---|
| ⋮ | ⋮ | | | | | | | |
| PB7 | 3D_Metadata_type(3bits) | | | 3D_Metadata_length = 01111 | | | | |
| PB8 | partition_type = 010 | | | D_picture = 0 | Partition_count = 1111 | | | |
| PB8+1 | disparity_in_partition0000 (8bits) | | | | | | | |
| PB8+2 | disparity_in_partition0001 (8bits) | | | | | | | |
| PB8+3 | disparity_in_partition0010 (8bits) | | | | | | | |
| PB8+4 | disparity_in_partition0011 (8bits) | | | | | | | |
| ⋮ | ⋮ | | | | | | | |
| PB8+ 15 | disparity_in_partition1110 (8bits) | | | | | | | |
| PB8+ 16 | disparity_in_partition1111 (8bits) | | | | | | | |
| | | | | | | | | |

Picture N

EP 2 675 174 A1

## FIG. 41

### Vendor Specific InfoFrame

| Packet Byte # | 7 | 6 | 5 | 4 | 3 | 2 | 1 | 0 |
|---|---|---|---|---|---|---|---|---|
| ⋮ | | | | ⋮ | | | | |
| PB7 | 3D_Metadata_type(3bits) | | | 3D_Metadata_length = 11111 | | | | |
| PB8 | partition_type = 010 | | | D_picture = 1 | Partition_count = 1111 | | | |
| PB8+1 | disparity_in_partition0000 (8bits) | | | | | | | |
| PB8+2 | disparity_in_partition0001 (8bits) | | | | | | | |
| PB8+3 | disparity_in_partition0010 (8bits) | | | | | | | |
| PB8+4 | disparity_in_partition0011 (8bits) | | | | | | | |
| ⋮ | | | | ⋮ | | | | |
| PB8+ 15 | disparity_in_partition1110 (8bits) | | | | | | | |
| PB8+ 16 | disparity_in_partition1111 (8bits) | | | | | | | |
| PB8+ 17 | disparity_in_partition0000 (8bits) | | | | | | | |
| PB8+ 18 | disparity_in_partition0001 (8bits) | | | | | | | |
| ⋮ | | | | ⋮ | | | | |
| PB8+ 31 | disparity_in_partition1110 (8bits) | | | | | | | |
| PB8+ 32 | disparity_in_partition1111 (8bits) | | | | | | | |

Picture N (PB8+1 to PB8+16)

Picture (N+1) (PB8+17 to PB8+32)

EP 2 675 174 A1

## FIG. 42

PICTURE UNIT RECEPTION → SINGLE PICTURE MODE TRANSMISSION

| STB | HDMI → | TV (Monitor) |

TRANSMISSION/RECEPTION MODE NEGOTIATION

BROADCAST RECEPTION

| N | | N+1 | | N+2 | | N+3 |

**Partition disparity for picture N**　**Partition disparity for picture N+1**　**Partition disparity for picture N+2**　**Partition disparity for picture N+3**

SINGLE PICTURE MODE
(d_picture = 0)

| Picture N | Picture N +1 | Picture N +2 | Picture N +3 |

Time

## FIG. 43

PICTURE UNIT RECEPTION → DOUBLE PICTURE MODE TRANSMISSION

BROADCAST RECEPTION

DOUBLE PICTURE MODE
(d_picture = 1)

# FIG. 44

GOP UNIT (MULTIPLE PICTURE UNIT) RECEPTION → SINGLE PICTURE MODE TRANSMISSION

STB —— HDMI ——→ TV (Monitor)

←- - - TRANSMISSION/RECEPTION MODE NEGOTIATION - - -→

BROADCAST RECEPTION

N,N+1,N+2,N+3,・・・

Partition disparity for picture N

Partition disparity for picture N+1

Partition disparity for picture N+2

Partition disparity for picture N+3

SINGLE PICTURE MODE (d_picture = 0)

Picture N | Picture N +1 | Picture N +2 | Picture N +3

Time

EP 2 675 174 A1

## FIG. 45

GOP UNIT (MULTIPLE PICTURE UNIT) RECEPTION → DOUBLE PICTURE MODE TRANSMISSION

STB ——— HDMI ———→ TV (Monitor)

←------- TRANSMISSION/RECEPTION MODE NEGOTIATION -------→

BROADCAST RECEPTION

N,N+1,N+2,N+3,···

**Partition disparity for picture N,N+1**

**Partition disparity for picture N+2,N+3**

DOUBLE PICTURE MODE (d_picture = 1)

| Picture N | Picture N +1 | Picture N +2 | Picture N +3 |

Time

EP 2 675 174 A1

# FIG. 46

10A

```
┌─────────────────┐         ┌─────────────────┐
│  BROADCASTING   │   TS    │   TELEVISION    │
│     STATION     │ ═══════▷│    RECEIVER     │
└─────────────────┘         └─────────────────┘
        100                        300A
```

# FIG. 47

300A

# FIG. 48

## INTERNATIONAL SEARCH REPORT

| | International application No. |
|---|---|
| | PCT/JP2012/082730 |

| A.   CLASSIFICATION OF SUBJECT MATTER |
|---|
| *H04N13/00*(2006.01)i |

According to International Patent Classification (IPC) or to both national classification and IPC

| B.   FIELDS SEARCHED |
|---|
| Minimum documentation searched (classification system followed by classification symbols) |
| H04N13/00 |

Documentation searched other than minimum documentation to the extent that such documents are included in the fields searched

| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)

## C.   DOCUMENTS CONSIDERED TO BE RELEVANT

| Category* | Citation of document, with indication, where appropriate, of the relevant passages | Relevant to claim No. |
|---|---|---|
| X<br>Y | JP 2011-166757 A  (Sony Corp.),<br>25 August 2011 (25.08.2011),<br>paragraphs [0031] to [0034], [0046] to [0048],<br>[0065], [0138], [0143], [0146], [0147], [0277],<br>[0278], [0283], [0292] to [0294]; fig. 1, 3, 4,<br>10, 13, 56<br>& US 2011/0134210 A1      & EP 2451171 A1<br>& WO 2011/001858 A1 | 1-4,6-13<br>5,14-16 |
| Y | JP 2011-234113 A  (Sony Corp.),<br>17 November 2011 (17.11.2011),<br>paragraphs [0031], [0033], [0036], [0117]<br>& EP 2434767 A1          & WO 2011/136239 A<br>& WO 2011/136239 A1      & CN 102474643 A | 5,14-16 |

| ☒   Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 March, 2013 (07.03.13) | 19 March, 2013 (19.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

<table>
<tr><td colspan="2"><b>INTERNATIONAL SEARCH REPORT</b></td><td>International application No.<br>PCT/JP2012/082730</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-239169 A (Sony Corp.),<br>24 November 2011 (24.11.2011),<br>paragraphs [0123] to [0126]<br>& EP 2387246 A2 & CN 102244795 A<br>& TW 201210315 A | 5,14-16 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005006114 A